(19) Europäisches Patentamt
European Patent Office
Office européen des brevets

(11) **EP 1 676 157 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(21) Anmeldenummer: **04790366.1**

(22) Anmeldetag: **13.10.2004**

(51) Int Cl.:
*G02B 5/18* (2006.01)     *G03H 1/30* (2006.01)

(86) Internationale Anmeldenummer:
**PCT/EP2004/011497**

(87) Internationale Veröffentlichungsnummer:
**WO 2005/038500 (28.04.2005 Gazette 2005/17)**

(54) **Verfahren zum Erzeugen eines ebenen oder gekrümmten Gitterbildes**

Method for the creation of a planar or curved grating image

Procédé pour génerer une image de réseau de diffraction plane ou courbe

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.10.2003 DE 10348619**
**11.02.2004 DE 102004006771**

(43) Veröffentlichungstag der Anmeldung:
**05.07.2006 Patentblatt 2006/27**

(73) Patentinhaber: **Giesecke & Devrient GmbH**
**81667 München (DE)**

(72) Erfinder:
• **KAULE, Wittich**
**82275 Emmering (DE)**
• **RAUSCHER, Wolfgang**
**81677 München (DE)**
• **STENZEL, Gerhard**
**80686 München (DE)**

(74) Vertreter: **Zeuner, Stefan**
**Zeuner & Summerer**
**Hedwigstrasse 9**
**80636 München (DE)**

(56) Entgegenhaltungen:
EP-A2- 0 423 680     EP-A2- 0 497 292
WO-A1-02/091041     US-A- 5 032 003
US-A- 5 075 800     US-A- 5 969 863
US-A1- 2002 090 578     US-B1- 6 369 919

• CAULFIELD E.J.: 'Handbook of Optical Holography, passage' HANDBOOK OF OPTICAL HOLOGRAPHY 01 Januar 1979, ACADEMIC PRESS, LONDON, GB, Seiten 573 - 576, XP002388378

**Beschreibung**

Die Erfindung betrifft ein Verfahren zum Erzeugen eines ebenen oder gekrümmten Gitterbildes, das zumindest ein vorgegebenes Bild mit einzelnen Bildbereichen zeigt.

Es ist bekannt, Hologramme, holographische Gitterbilder und andere hologrammähnliche Beugungsstrukturen zur Echtheitsabsicherung von Kreditkarten, Wertdokumenten, Produktverpackungen und dergleichen zu verwenden. Im Allgemeinen werden derartige Beugungsstrukturen durch die Belichtung einer lichtempfindlichen Schicht mit überlagerter kohärenter Strahlung hergestellt. Echte Hologramme entstehen dabei, indem ein Objekt mit kohärentem Laserlicht beleuchtet wird und das von dem Objekt gestreute Laserlicht mit einem unbeeinflussten Referenzstrahl in der lichtempfindlichen Schicht überlagert wird.

Bestehen die in der lichtempfindlichen Schicht überlagerten Lichtstrahlen aus räumlich ausgedehnten, einheitlichen kohärenten Wellenfeldern, so entstehen bei der Überlagerung holographische Beugungsgitter. Durch die Einwirkung der überlagerten Wellenfelder auf die lichtempfindliche Schicht, beispielsweise einen photographischen Film oder eine Photoresistschicht, entsteht dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut werden, erzeugt das holographische Beugungsgitter lediglich einen optisch variablen Farbeindruck, jedoch keine Bilddarstellung.

Aus holographischen Beugungsgittern lassen sich holographische Gitterbilder erzeugen, indem nicht die gesamte Fläche des lichtempfindlichen Materials mit einem einheitlichen holographischen Beugungsgitter belegt wird, sondern indem geeignete Masken verwendet werden, um jeweils nur Teile der Aufnahmefläche mit einem von mehreren verschiedenen einheitlichen Gittermustern zu belegen. Ein solches holographisches Gitterbild setzt sich somit aus mehreren Gitterfeldern mit unterschiedlichen Beugungsgittermustern zusammen. Durch geeignete Anordnung der Gitterfelder lässt sich mit einem derartigen holographischen Gitterbild eine Vielzahl unterschiedlicher Bildmotive darstellen.

Bei den Beugungsgittermustern eines holographischen Gitterbilds handelt es sich üblicherweise um Strichgitter mit einer Vielzahl nebeneinander liegender paralleler Gitterlinien. Die Beugungsgitter jedes Gitterfelds bzw. jedes Gitterbildbereichs sind durch die Gitterkonstante und die Winkelorientierung des Gittermusters und den Umriss oder die Kontur des Bereichs charakterisiert. Die Winkelorientierung des Gittermusters wird üblicherweise durch den Azimutwinkel, also den Winkel zwischen den parallelen Gitterlinien und einer willkürlich festgelegten Referenzrichtung beschrieben. Bei holographischen Beugungsgittern werden die Gitterkonstante und der Azimutwinkel üblicherweise über die Wellenlänge und die Einfallsrichtung der belichtenden Wellenfelder eingestellt und die Umrisse der Felder mithilfe von Belichtungsmasken erzeugt.

Generell lässt sich sagen, dass die Gitterkonstante des Gittermusters in einem Gitterbildbereich wesentlich für die Farbe dieses Bereichs bei der Betrachtung ist, während der Azimutwinkel für die Sichtbarkeit des Bildbereichs aus bestimmten Richtungen verantwortlich ist. Auf Grundlage dieser Technik können daher optisch variable Bilder, wie etwa Bewegungsbilder oder auch plastisch erscheinende Bilder, erzeugt werden.

Nebeneinander liegende Beugungsgitter können holographisch auf verschiedene Weise hergestellt werden. Beispielsweise kann das Gitterbild in großflächige Bildfelder aufgeteilt und deckende Masken entwickelt werden, die jeweils nur eine Belichtung eines Bildfelds mit einem einheitlichen holographischen Beugungsgitter zulassen. Das Gitterbild kann auch in eine Vielzahl von kleinen, nahezu punktförmigen Bereichen zerlegt werden, die typischerweise einen Durchmesser von 10 $\mu$m bis 200 $\mu$m haben. In diesen Punktbereichen können dann beispielsweise mit einer so genannten Dot-Matrix-Vorrichtung holographische Beugungsgitter ausgebildet werden.

Die Druckschrift EP 0 467 601 B1 beschreibt ein derartiges Verfahren, bei dem eine gewünschte holographische Beugungsstruktur aus einer Mehrzahl einzelner Flecken aufgebaut wird, wobei jeder Fleck ein holographisches Beugungsgitter mit vorbestimmtem Gitterabstand und vorbestimmter Winkelorientierung aufweist. Zur Herstellung wird ein Laserstrahl durch ein drehbar gelagertes Gitter in zwei Teilstrahlen aufgespalten, und die Teilstrahlen werden mit einer Linse auf einer in der xy-Ebene verschiebbaren photosensitiven Platte überlagert, um dort das Beugungsgitter eines der Flecke zu erzeugen. Durch Verschieben der Platte, Drehen des Gitters und durch den Einsatz von Gittern mit verschiedener Gitterkonstante lassen sich verschiedene gewünschte Strukturen herstellen.

Die EP 0 105 099 B1 beschreibt ein Verfahren zur Herstellung eines Dokuments mit einer Beugungsstruktur, die sich aus aneinander grenzenden, beugenden Flächenelementen zusammensetzt, die aufgrund ihrer Gitterkonstante bzw. Winkelorientierung unterschiedliche Farben zeigen und beim Drehen des Dokuments um eine Achse senkrecht zur Dokumentenoberfl-äche einen Bewegungseffekt erzeugen. Zur Herstellung der beugungsoptischen Flächenelemente wird eine mikrolithographische Maskentechnik angewandt. Die Flächenelemente werden dabei durch interferometrische Überlagerung kohärenter Lichtstrahlen mit unterschiedlichen Einfallswinkeln erzeugt, die photolithographisch in ein Oberflächenmikroprofil umgesetzt werden, wobei zur geometrischen Begrenzung der zu belichtenden Felder optische Masken verwendet werden.

Bei dem Verfahren der WO 97/16772 wird ein holographisches Beugungsgitter aus einer Mehrzahl von Pixeln hergestellt, welche jeweils ein Reinphasen-Fourier-Transformationshologramm einer Karte der mit den Pixeln verbundenen Bildwinkel sind. Zur Herstellung beleuchtet ein Laserstrahl ein Bild einer Pixelkarte und die Karte wird mit einer Linse auf das zugehörige Pixel eines lichtempfindlichen Material abgebildet.

Neben optisch-holographischen Methoden sind auch Verfahren zur Herstellung computergenerierter Hologramme bekannt, bei denen die Fouriertransformierte eines darzustellenden Objekts mit einem Computer berechnet wird und die berechneten Daten mit Photolithographie oder Elektronenstrahllithographie einer geeigneten Materialschicht eingeschrieben werden.

Allgemein lässt sich festhalten, dass echte Hologramme eine Überlagerung holographischer Beugungsgitter darstellen, wogegen in einem holographischen Gitterbild mehrere holographische Beugungsgitter nebeneinander angeordnet sind. Echte Hologramme wirken im Allgemeinen im Vergleich zu Gitterbildern photographisch lebensecht. Auf der anderen Seite können Gitterbilder graphisch leichter gestaltet werden und sind lichtstärker als echte Hologramme, da die nebeneinander liegenden ungestörten Beugungsgitter intensiver leuchten als die überlagerten gestörten Beugungsgitter.

Echten Hologrammen werden darüber hinaus im Vergleich mit Gitterbildern folgende Nachteile zugeschrieben: Sie weisen eine vergleichsweise geringe Brillanz auf, sie sind unter ungünstigen Lichtverhältnissen schwer erkennbar, sie sind für Fälscher vergleichsweise leicht nachahmbar und für Fälscher ist relativ billiges Herstellungsequipment erreichbar. Darüber hinaus ist bei ihrer Herstellung viel Handarbeit erforderlich, so dass sie für einen automatisierten Arbeitsablauf nur bedingt geeignet sind. Sie gestatten einem Designer nur wenige Gestaltungsmöglichkeiten. Moderne Computertechnik, wie beispielsweise der Einsatz von Computer-to-Plate-Techniken, hat bei ihrer Herstellung nur wenige Einsatzmöglichkeiten, auch raffinierte computererzeugte Effekte können nur schwer realisiert werden. Nicht zuletzt sind echte Hologramme für eine direkte maschinelle Erkennbarkeit oder für maschinell lesbare Zusatzmaßnahmen ungünstig.

Bei der Herstellung von aus Gitterelementen zusammengesetzten Gitterbildern werden die Gitterparameter und die Lager der Gitterelemente bisher mühsam durch Ausprobieren und durch Verwendung von Erfahrungswerten bestimmt. Die Ergebnisse sind daher nicht optimal und nur schwer auf geänderte Gestaltungen übertragbar.

Die US 5,969,863 beschreibt ein Verfahren zum Erzeugen eines Gitterbilds mit einzelnen Bildbereichen. Dabei wird eine mathematische Beziehung zwischen den Wellenvektoren für die ein- und ausfallenden Lichtstrahlen und dem Gittervektor genannt.

Aus der EP 0 423 680 A2 ist ferner ein Verfahren zur Herstellung von Dot-Matrix-Gitterbildern bekannt, die ein Panorama-Parallaxenbild zeigen. Dabei wird unter Annahme spezieller Beleuchtungs- und Betrachtungsbedingungen mithilfe einer einfachen mathematischen Beziehung für jedes Gitter eine Winkelorientierung und ein Gitterkonstante bestimmt.

Davon ausgehend liegt der Erfindung die Aufgabe zugrunde, ein Verfahren anzugeben, mit dem sich aus den Bilddaten eines oder mehrerer vorgegebener Bilder in einfacher Weise die Gitterdaten eines Gitterbildes bestimmen lassen, das unter bestimmten seitlichen Kippwinkeln das oder die vorgegebenen Bilder in hoher Lichtstärke zeigt.

Diese Aufgabe wird durch das Verfahren zum Erzeugen eines Gitterbilds mit den Merkmalen des Hauptanspruchs gelöst. Eine Vorrichtung zum Erzeugen eines Gitterbilds sind in den nebengeordneten Ansprüchen angegeben. Weiterbildungen der Erfindung sind Gegenstand der Unteransprüche.

Die Erfindung ermöglicht es, auf einfache, nicht holographische Weise ebene und gekrümmte Gitterbilder zu erzeugen, die zumindest ein vorgegebenes Bild mit einzelnen Bildbereichen zeigen. Für ebene Gitterbilder wird dazu zunächst ein seitlicher Kippwinkel für das Gitterbild festgelegt, bei dem das vorgegebene Bild sichtbar sein soll. Für jeden Bildbereich des vorgegebenen Bilds wird darüber hinaus eine Farbe festgelegt, in der der jeweilige Bildbereich unter dem seitlichen Kippwinkel erscheint. Dann wird für jeden Bildbereich aus seitlichem Kippwinkel und Farbe dieses Bildbereichs eine Gitterkonstante und eine Winkelorientierung bestimmt. Zur Bestimmung wird die Beziehung

$$\vec{n} \times \left( \vec{k}' - \vec{k} \right) = m\vec{g} \qquad\qquad (1)$$

verwendet, wobei $\vec{n}$ einen Normalenvektor auf dem Gitter, $\vec{k}'$ den Betrachtungsvektor, $\vec{k}$ den Beleuchtungsvektor, m die Beugungsordnung und $\vec{g}$ einen Gittervektor darstellen. Mit diesen Angaben wird ein Gitterbild mit Gitterbildbereichen berechnet und in einem Substrat erzeugt, wobei jeder Gitterbildbereich einem Bildbereich zugeordnet ist und jeweils mit einem Gittermuster gefüllt wird, dessen Gitterkonstante und Winkelorientierung durch die für den zugeordneten Bildbereich bestimmte Gitterkonstante und Winkelorientierung gegeben sind.

In der Beziehung (1) stellt der Beleuchtungsvektor $\vec{k}$ einen Vektor der Länge $2\pi/\lambda$ dar, der von der Lichtquelle zum Gitterbild zeigt. $\lambda$ ist dabei die Wellenlänge des einfallenden Lichts. Der Betrachtungsvektor $\vec{k}'$ ist ein Vektor der Länge $2\pi/\lambda$, der vom Gitterbild zum Auge des Betrachters zeigt. Das Gittermuster ist durch den Gittervektor $\vec{g}$ charakterisiert, der einen Vektor der Länge $2\pi/a$ darstellt, der in Richtung parallel zu den Gitterlinien zeigt. Hierbei ist a die Gitterkonstante, d.h. der Abstand der Gitterlinien. Die Lage des Gitterbilds im Raum wird durch den Normalenvektor $\vec{n}$ angegeben, der einen Vektor der Länge 1 darstellt, der senkrecht auf der Gitterebene steht.

Die Vektorformel (1) ist unabhängig von Koordinatensystemen. Die Vektoren können beliebig im Raum liegen. In den folgenden Ausführungen ist die Lage der Vektoren ohne Beschränkung der Allgemeinheit meist auf eine Gerade, die Kippgerade oder Kipplinie, bezogen, welche entsteht, wenn man die Gitterebene mit der Lichteinfallsebene schneidet, wobei die Lichteinfallsebene vom Beleuchtungsvektor und Betrachtungsvektor aufgespannt wird. Je nach Wahl des Koordinatensystems und der zur Beschreibung konkret verwendeten Größen lässt sich die Beziehung (1) in verschiedener Weise umformen. Ein konkretes Beispiel für geeignete Größen ist in den Ausführungsbeispielen angegeben. Es versteht sich, dass die durch andere Definitionen und durch mathematische Umformungen der Beziehung (1) entstehenden äquivalenten oder abgeleiteten Beschreibungen von der Erfindung umfasst sind, ebenso wie Näherungsrechnungen, die den gleichen Sachverhalt in angenäherter Weise beschreiben.

Während bei herkömmlichen Verfahren zum Herstellen von Gitterbildern Erfahrungswerte benutzt werden oder aufwändige Berechnungen der Fouriertransformierten der Bilder erforderlich sind, gibt das erfindungsgemäße Verfahren dem Fachmann eine einfache Methode an die Hand, um aus den vorgegebenen Betrachtungsbedingungen und den gewünschten Motivbildern die Gitterparameter eines Gitterbilds zu bestimmen. Auf diese Art und Weise lassen sich praktisch alle bei Gitterbildern bekannten und gefragten Effekte leicht berechnen und in höchster Qualität erzeugen.

Die oben genannte Gitterformel eignet sich daher insbesondere zur Bestimmung von Gitterdaten bei komplexen Konfigurationen mit schräg liegenden Vektoren. Das heißt für Konfigurationen, bei welchen $\vec{n}$ x $\vec{k}$ nicht parallel oder senkrecht zu $\vec{n}$ x $\vec{k}$ liegt.

Allgemein umfasst die erfindungsgemäße Erzeugung eines ebenen oder gekrümmten, ein materielles Beugungsgitter darstellendes Gitterbilds die in Anspruch 1 angegebenen Verfahrensschritte.

Dabei werden Form und Größe der Unterbereiche in Schritt d) abhängig von der Krümmung des Gitterbilds festgelegt. Insbesondere wird die Form und Größe der Unterbereiche mit Vorteil so gewählt, dass der Normalenvektor $\vec{n}(\vec{r})$ dort in guter Näherung als konstant angenommen werden kann. Die gekrümmte Fläche wird so durch genügend kleine flache Unterbereiche approximiert.

In einer Erfindungsvariante wird zur Bestimmung von Gitterkonstante und Winkelorientierung für jeden Unterbereich ein über die Fläche des Gitterbilds variierender Betrachtungsvektor $\vec{k}(\vec{r})$ verwendet, dessen Richtung durch die Verbindungslinie zwischen dem Bezugsaufpunkt des jeweiligen Unterbereichs und einem Betrachtungspunkt gegeben ist. Darüber hinaus kann im allgemeinen Fall auch ein über die Fläche des Gitterbilds variierender Beleuchtungsvektor $\vec{k}(\vec{r})$ verwendet werden, dessen Richtung durch die Verbindungslinie zwischen einem Beleuchtungspunkt und dem Bezugsaufpunkt des jeweiligen Unterbereichs gegeben ist.

Alternativ kann zur Vereinfachung der Berechnung zur Bestimmung von Gitterkonstante und Winkelorientierung für jeden Unterbereich ein über die Fläche jedes Gitterbildbereichs oder über die gesamte Gitterbildfläche konstanter Betrachtungsvektor $\vec{k}$ verwendet werden, dessen Richtung durch die Verbindungslinie zwischen einem für das Gitterbild repräsentativen Bezugspunkt und einem Betrachtungspunkt gegeben ist. In gleicher Weise kann für jeden Unterbereich ein über die Fläche jedes Gitterbildbereichs oder über die gesamte Gitterbildfläche konstanter Beleuchtungsvektor $\vec{k}$ verwendet werden, dessen Richtung durch die Verbindungslinie zwischen einem Beleuchtungspunkt und einem für das Gitterbild repräsentativen Bezugspunkt des Gitterbilds gegeben ist. Wie leicht einzusehen, ergibt sich der Grenzfall konstanten Betrachtungs- bzw. Beleuchtungsvektors aus dem oben beschriebenen allgemeinen Fall, indem man den Betrachtungs- bzw. Beleuchtungspunkt ins Unendliche legt. Dies stellt jedenfalls dann, wenn die reale Beleuchtungsquelle bzw. der reale Betrachtungspunkt, bezogen auf die Gitterbildgröße, weit von diesem entfernt sind, eine ausgezeichnete Näherung dar.

Die Gitterbildbereiche werden in Schritt e) mit einer Form und einer relativen Lage erzeugt, die im Wesentlichen der Form und der relativen Lage der zugeordneten Bildbereiche entspricht. Bei Betrachtung des Gitterbilds in der jeweiligen Orientierung zeigen die Gitterbildbereiche dem Betrachter dann das aus den Bildbereichen zusammengesetzte Bild. Dabei ist nicht erforderlich, dass die Gitterbildbereiche in Form und Lage das Bild exakt reproduzieren. So können beispielsweise sehr kleine Bildstrukturen, insbesondere unterhalb der Auflösungsgrenze des Auges, weggelassen werden, um etwa ein helleres Bild der Hauptstrukturen zu erhalten.

Auch können, wie weiter unter im Detail beschrieben, Teile der Gitterbildbereiche mit einer Größe unterhalb der Auflösungsgrenze des Auges ganz weggelassen werden und die Lücken mit Gitterbildbereichen eines anderen oder mehrerer anderer Bilder gefüllt werden. Auf diese Weise kann ein einziges Gitterbild in unterschiedlichen Orientierungen mehrere Bilder zeigen, ohne dass sichtbare Lücken in einem der Bilder auftreten. Zeigt ein Gitterbild in dieser Art mehrere Bilder unter unterschiedlichen Kippwinkeln, so werden die oben angegebenen Schritte a) bis d) vorteilhaft für jedes der mehreren Bilder durchgeführt.

In allen Verfahrensvarianten wird mit Vorteil unter Berücksichtigung der Orientierungen von Betrachtungsvektor $\vec{k}(\vec{r})$ und Beleuchtungsvektor $\vec{k}(\vec{r})$ in Schritt d) für jeden Unterbereich aus der festgelegten Orientierung des Gitterbilds ein Azimutwinkel relativ zu einer Referenzrichtung berechnet, der die Winkelorientierung des Gittermusters des zugeordneten Gitterbereichs beschreibt.

In einer vorteilhaften Verfahrensvariante wird ein ebenes Gitterbild erzeugt, wobei die Orientierung des Gitterbilds im Raum durch Festlegung eines seitlichen Kippwinkels für das Gitterbild festgelegt wird. Vorzugweise wird dann unter Berücksichtigung der Orientierung eines vorgewählten Betrachtungsvektors und eines vorgewählten Beleuchtungsvektors in Schritt d) für jeden Bildbereich aus dem seitlichen Kippwinkel ein Azimutwinkel relativ zu einer Referenzrichtung berechnet, der die Winkelorientierung des Gittermusters des zugeordneten Gitterbereichs beschreibt.

In einer anderen, ebenfalls vorteilhaften Verfahrensvariante wird ein zylindrisch gekrümmtes Gitterbild erzeugt, wobei die Orientierung des Gitterbilds im Raum durch Festlegung eines Drehwinkels um die Zylinderachse festgelegt wird. Vorzugsweise wird dann in Schritt d) unter Berücksichtigung der Orientierungen eines vorgewählten Betrachtungsvektors und eines vorgewählten Beleuchtungsvektors, des Drehwinkels um die Zylinderachse und der Lage des jeweiligen Unterbereichs ein Azimutwinkel relativ zu einer Referenzrichtung berechnet, der die Winkelorientierung des Gittermusters des zugeordneten Gitterbereichs beschreibt.

In manchen Gestaltungen werden die Gitterbildbereiche, die Bildbereichen verschiedener Bilder zugeordnet sind, einander zumindest teilweise überlappen. Wenn die Gitterbildbereiche nicht übereinander angeordnet werden sollen, werden die überlappenden Gitterbildbereiche vorzugsweise ineinander verschachtelt. In einer vorteilhaften Ausgestaltung werden die überlappenden Gitterbildbereiche dazu in schmale Streifen zerlegt und die schmalen Streifen der Gitterbildbereiche alternierend nebeneinander angeordnet. Beispielsweise wird bei der Verschachtelung der Gitterbildbereiche zweier Bilder in jedem Gitterbildbereich jeder zweite Streifen weggelassen. Die Streifenzerlegung erfolgt dabei vorzugsweise so, dass das Fehlen jedes zweiten Streifens in dem gezeigten Bild mit bloßem Auge nicht erkennbar ist oder jedenfalls den Bildeindruck nicht wesentlich stört. Insbesondere wird die Breite der schmalen Streifen unterhalb der Auflösungsgrenze des bloßen Auges gewählt. Besonders gute Ergebnisse lassen sich erzielen, wenn die schmalen Streifen parallel zu einer Dreh- oder Kippachse des Gitterbildes ausgerichtet werden.

Bei einer anderen vorteilhaften Ausgestaltung werden die Gitterbildbereiche, die überlappenden Bildbereichen unterschiedlicher Bilder zugeordnet sind, in beliebig geformte kleine Teilbereiche zerlegt und die Teilbereiche der Gitterbildbereiche ineinander verschachtelt angeordnet. Die Gitterbildbereiche werden dabei vorzugsweise in quadratische, rechteckige, runde, ovale, wabenförmige oder polygonal begrenzte Teilbereiche zerlegt. Die Teilbereiche können auch die Form von Motiven, Zeichen oder Ziffern haben. Zumindest eine charakteristische Abmessung der kleinen Teilbereiche wird vorteilhaft unterhalb der Auflösungsgrenze des bloßen Auges gewählt.

Nach einer Variante zeigt das erfindungsgemäß hergestellte Gitterbild in unterschiedlichen Orientierungen unterschiedliche Bilder, so dass für den Betrachter bei entsprechender Bewegung des Gitterbildes ein Wechselbild entsteht. In einer anderen Variante zeigt das Gitterbild ein Bildmotiv in unterschiedlichen Bewegungszuständen, so dass für den Betrachter bei entsprechender Bewegung des Gitterbildes ein Bewegungsbild entsteht. Bei einer weiteren Variante zeigt das Gitterbild eine sich vergrößernde oder verkleinernde Umrisslinie eines Bildmotivs, so dass für den Betrachter bei entsprechender Bewegung des Gitterbildes ein Pumpbild entsteht.

Nach noch einer weiteren Variante zeigt das Gitterbild zumindest zwei Ansichten eines Bildmotivs aus unterschiedlichen Betrachtungsrichtungen, wobei die unterschiedlichen Orientierungen der Ansichten auf Grundlage eines vorgewählten Betrachtungsabstands des Gitterbilds so festgesetzt werden, dass für den Betrachter ein Stereobild des Bildmotivs entsteht. Das Gitterbild kann dabei vorteilhaft mehrere Ansichten des Bildmotivs aus unterschiedlichen Betrachtungsrichtungen zeigen, wobei die unterschiedlichen Orientierungen der Ansichten so festgelegt werden, dass für den Betrachter bei entsprechender Bewegung des Gitterbildes eine räumliche Ansicht des Bildmotivs entsteht. Einen Spezialfall des Stereobilds stellt das Kulissenbild dar, bei dem das Gitterbild zumindest zwei Ansichten eines Kulissenmotivs zeigt, bei dem mehrere ebene Objekte kulissenartig hintereinander angeordnet sind.

Eine weitere Variante besteht darin, dass das Gitterbild zumindest in einem Teilbereich in unterschiedlichen Orientierungen das gleiche Bild zeigt, so dass für den Betrachter bei entsprechender Bewegung des Gitterbildes in diesem Teilbereich keine Änderung des Bildinhalts auftritt. Im Allgemeinen enthalten die Gitterbilder neben diesen bei entsprechender Bewegung sich nicht verändernden Bildbereichen auch variable Bildbereiche, die dem Betrachter sich bei entsprechender Bewegung verändernde Bildeindrücke vermitteln. Für diese variablen Bildbereiche kommen insbesondere alle oben geschilderten Gitterbildvarianten in Frage.

Die sich bei entsprechender Bewegung nicht verändernden Bildbereiche führen zu einer größeren Bildruhe. Darüber hinaus sind diese Bereiche selbst bei schlechter Beleuchtung noch gut erkennbar, wenn sich die variablen Bildinhalte bereits vermischen und nur noch schlecht oder nicht mehr erkennbar sind. Beispielsweise kann ein Text, eine Ziffernfolge oder ein Logo als kippkonstanter Bildinhalt in den Vordergrund, schmückendes Beiwerk mit besonderen optischen Effekten in den Hintergrund gelegt werden. Dadurch wird eine optimale Lesbarkeit wesentlicher Informationen selbst bei ungünstigen Beleuchtungsverhältnissen mit einer optisch ansprechenden Gestaltung verbunden.

Da ein einfaches Gitter nicht in allen Orientierungen ein sichtbares Bild zeigen kann, wird dazu ein aus mehreren Gittern zusammengesetztes "Mischgitter" erzeugt, wobei für aufeinander folgende Orientierungen, beispielsweise für aufeinander folgende seitliche Kippwinkel oder Drehwinkel Gitter berechnet werden, die jeweils gleichfarbig aufleuchten. Vorzugsweise werden die einzelnen Teilgitter so klein ausgebildet, dass sie mit bloßem Auge nicht aufgelöst werden können.

Die Gitterbildbereiche werden mit Vorteil in nebeneinander angeordnete schmale Streifen zerlegt, die den unter verschiedenen Orientierungen, insbesondere unter verschiedenen seitlichen Kippwinkeln oder Drehwinkeln, erkennbaren Bildbereichen zugeordnet sind, und die bevorzugt so mit Gittermustern gefüllt werden, dass die Endpunkte des Gittermusters eines Streifens mit den Anfangspunkten des Gittermusters des benachbarten Streifens zusammenfallen. Während die Streifen prinzipiell beliebig angeordnet werden können, erscheinen die Gitterbilder nämlich besonders farbintensiv, wenn die Streifen so aneinander angeschlossen werden, dass die Gitterlinien zusammenhängende Polygonzüge ergeben. Anstelle der Polygonzüge lassen sich auch glatte Kurvenzüge verwenden, beispielsweise sinusförmige Kurvenzüge, Kreissegmente, Parabelsegmente und dergleichen, wodurch die Übergänge beim Kippen völlig ruckfrei gestaltet werden können.

Soll der Bildeindruck nur in einem eingeschränkten Winkelbereich konstant sein, werden entsprechend nur die diesem Winkelbereich zugeordneten schmalen Streifen ausgeführt. Beispielsweise kann ein Bild bei bestimmten Bewegungen, etwa beim seitlichen Kippen des Gitterbilds nach links, mit konstantem Farbeindruck erscheinen und bei anderen Bewegungen, etwa beim Kippen nach rechts, verschwinden oder einem anderen Bild Platz machen.

Farbkonstanz beim seitlichen Kippen wird bei ebenen oder zylindrischen Gitterbildern und bei weit entfernten Beleuchtungs- und Betrachtungsabständen immer dann erreicht, wenn das Gittermuster durch Parallelverschiebung eines Kurvenzuges um einen konstanten Offset zustande kommt.

Ist das Gittermuster durch derartige parallel verschobene Kurvenzüge gebildet, so kann man es auch als aus infinitesimal schmalen Streifen bestehendes Gitter auffassen, dessen Azimutwinkel und lokale Gitterkonstante mit der Ortsableitung des Kurvenzugs variiert. Aufgrund des konstanten Offsets wirken der Azimutwinkel und die lokale Gitterkonstante so zusammen, dass der Gitterbildbereich unter jedem Kippwinkel in derselben Farbe aufleuchtet.

In allen geschilderten Ausgestaltungen kann für jeden Bildbereich in Schritt b) eine durch eine Wellenlänge $\lambda$ gegebene Spektralfarbe festgelegt werden und in Schritt d) unter Berücksichtigung der Winkelorientierung des Gittermusters und der Orientierung von Betrachtungsvektor $\vec{k}(\vec{r})$ und Beleuchtungsvektor $\vec{k}(\vec{r})$ aus der Spektralfarbe ein Gitterabstand für das Gittermuster berechnet werden.

Es ist ebenfalls möglich, die beschriebenen Bildarten als Echtfarbenbilder auszubilden. Dazu wird für einen Bildbereich in Schritt b) eine Echtfarbe als Mischung von Grundfarben festgelegt, in Schritt d) für jede der Grundfarben eine Gitterkonstante und eine Winkelorientierung für die Grundfarbe in diesem Bildbereich bestimmt, und in Schritt e) bei der Erzeugung des zugeordneten Gitterbildbereichs für jede Grundfarbe ein Farb-Unterbereich erzeugt, der mit einem Gittermuster gefüllt wird, dessen Gitterkonstante und Winkelorientierung durch die für den zugeordneten Bildbereich und die Grundfarbe bestimmte Gitterkonstante und Winkelorientierung gegeben sind.

Diese Vorgehensweise beruht auf der Tatsache, dass die in der Natur vorkommenden Farben, die im Rahmen dieser Anmeldung "Echtfarben" genannt werden, sich als Mischung von Grundfarben darstellen lassen. Da das menschliche Auge drei verschiedene Zapfensysteme für die Farben Rot, Grün und Blau besitzt, ist es eine übliche Vorgehensweise, diese Farben als Grundfarben auszuwählen. Besonders vorteilhaft ist im vorliegenden Zusammenhang, für die Grundfarben Spektralfarben zu wählen, deren Wellenlängen in der Nähe der Empfindlichkeitsmaxima der Zapfensysteme des Auges liegt, da dann die Berechnung unter Verwendung der Beziehung (1) oder (2) mit diesen Spektralfarben erfolgen kann. Geeignete Grundfarben sind beispielsweise Rot mit einer Wellenlänge von 630 nm, Grün mit einer Wellenlänge von 530 nm und Blau mit einer Wellenlänge von 460 nm.

Vorzugsweise werden die Farb-Unterbereiche in Form von schmalen Streifen oder kleinen Rechtecken erzeugt. Die Streifen oder Rechtecke werden bevorzugt parallel zu den Gitterlinien des Gittermusters ausgerichtet, um die Anzahl der Gitterlinienendpunkte zu minimieren.

In einer bevorzugten Ausgestaltung der Erfindung wird das Gitterbild mit einem ausgedehnten Gitterbildbereich erzeugt, der bei Betrachtung aus einem vorgewählten kurzen Betrachtungsabstand mit im Wesentlichen konstantem Farbeindruck erscheint. Dies kann dadurch erreicht werden, dass der ausgedehnte Gitterbildbereich in eine Mehrzahl von Teilbereichen zerlegt wird, für die in Schritt d) jeweils eine Gitterkonstante und eine Winkelorientierung bestimmt wird, wobei für die Bestimmung ein Betrachtungsvektor verwendet wird, der vom jeweiligen Teilbereich zum Auge des Betrachters zeigt. In Schritt e) wird der Gitterbildbereich in dem Substrat dann mit diesen Teilbereichen erzeugt, und die Teilbereiche werden jeweils mit einem Gittermuster mit der in Schritt d) bestimmten Gitterkonstanten und Winkelorientierung gefüllt. Die Zerlegung kann auch eine so große Anzahl an Teilbereichen enthalten, dass ein Verlaufsgitter mit einer sich quasi kontinuierlich ändernden Gitterkonstante entsteht.

Diese Vorgehensweise trägt der Tatsache Rechnung, dass ein Betrachter bei einem ausgedehnten Gitterbildbereich und kurzem Betrachtungsabstand die weit auseinander liegenden Bildbereiche unter etwas unterschiedlichen Betrachtungswinkeln sieht.

Insbesondere bei vertikal, also parallel zur Drehachse oder zur Kipplinie ausgedehnten Gitterbildbereichen kann es bei einheitlicher Bestimmung der Gitterparameter für die gesamte Fläche (das heißt, bei Zugrundelegung von über die Fläche konstanten Beleuchtungs- und Betrachtungsvektoren) zu Farbverschiebungen kommen. Der Gitterbildbereich wird daher vorzugsweise entlang der Drehachse oder Kipplinie in eine Mehrzahl von Teilbereichen zerlegt, für die in Schritt d) jeweils eine Gitterkonstante und eine Winkelorientierung bestimmt wird. Für die Bestimmung wird dabei ein Betrachtungsvektor verwendet, der vom jeweiligen Teilbereich zum Auge des Betrachters zeigt. Werden die Gitterparameter unter Verwendung von ortsabhängigen Beleuchtungs- und Betrachtungsvektoren bestimmt, kann diese Maßnahme entfallen, da in diesem Fall die unterschiedlichen Betrachtungswinkel durch die Ortsabhängigkeit des Beleuchtungs- und Betrachtungsvektors ohnehin berücksichtigt werden.

Ist der Betrachtungsabstand dagegen groß gegen die Ausdehnung des Gitterbildbereichs, so unterscheiden sich die lokalen Betrachtungsvekforen nur geringfügig und die Bestimmung der Gitterparameter kann für die gesamte Fläche des Gitterbildbereichs einheitlich mit einem Betrachtungsvektor erfolgen.

Die bisher beschriebenen Gitterbilder werden insbesondere mittels eines optischen oder eines Elektronenstrahl-Lithographieverfahrens einem strahlungsempfindlichen Material, insbesondere einer auf eine Substratplatte aufgebrachten Resistschicht eingeschrieben, und in diesem dabei eine Zustandsänderung herbeigeführt, vorzugsweise eine Reliefstruktur erzeugt. Nach der Herstellung der Reliefstruktur wird vorteilhaft eine Metallisierungsschicht auf das strahlungsempfindliche Material aufgebracht und eine galvanische Abformung erzeugt. Die Abformung oder eine weitere Abformung derselben wird mit Vorteil als Prägestempel zum Prägen eines Gitterbildes in ein Substrat verwendet.

Ein solches Substrat wird beispielsweise durch eine mittels Prägung verformbare Lackschicht oder Folie bereitgestellt. Die geprägte, mit Gitterreliefs versehene Oberfläche der Lackschicht oder Folie kann nun zur Betrachtung in Aufsicht verspiegelt werden. Bei Verwendung eines transparenten oder semitransparenten Substrats, insbesondere eines transparenten Lacks oder einer transparenten Folie, kann die mit den Gitterreliefs versehene Oberfläche auch unverspiegelt in Durchsicht betrachtet werden. Unabhängig von der Betrachtungsweise kann die vorstehende Beziehung in jedem Fall zur Berechnung des Gitterbildes angewandt werden. Es versteht sich, dass der Beleuchtungsvektor $\vec{k}(\vec{r})$ und der Betrachtungsvektor $\vec{k}'(\vec{r})$ bei Betrachtung in Aufsicht bzw. in Reflexion auf der gleichen Seite des Gitterbildes, bei Betrachtung in Durchsicht bzw. im Durchlicht auf entgegengesetzten Seiten des Gitterbildes liegen.

Bei Betrachtung in Aufsicht wirken die Gitterreliefstrukturen der verspiegelten Oberfläche wie kleine gekippte, gitterförmige Spiegel, die eine gewünschte Spektralfarbe in eine gewünschte Betrachtungsrichtung reflektieren. Unverspiegelt, d.h. als transparentes Gitterbild, wirken die in der Oberfläche der geprägten Lackschicht oder Folie vorliegenden Gitterreliefstrukturen wie kleine, gitterförmig aufgereihte Prismen, die eine gewünschte Spektralfarbe in eine gewünschte Betrachtungsrichtung beugen.

Verspiegelte Gitterbilder werden häufig als Sicherheits- oder Dekorelemente auf opaken Objekten, wie Banknoten, Kreditkarten oder Verpackungen, verwendet. Transparente Gitterbilder können beispielsweise als Durchsichts-Sicherheitselemente in einem Fensterbereich eines Wertdokuments, insbesondere in einem mit Folie abgedeckten, papiermacherisch hergestellten oder ausgestanztem Fenster einer Banknote, angeordnet sein.

Erfindungsgemäß besonders bevorzugt ist die Herstellung der Gitterbilder mittels Elektronenstrahllithographie, mit der Gitterlinien in höchster Qualität und feinsten Auflösungen bis in den Nanometerbereich erzeugt werden können. Insbesondere können die in den Druckschriften DE 102 24115 und 102 43 413 beschriebenen Verfahren eingesetzt werden, die insoweit in die vorliegende Anmeldung einbezogen werden.

Weitere bevorzugte Verfahren zur Herstellung der Originalmatrize (auch "Master" genannt), von der die oben geschriebenen Abformungen gemacht werden, bedienen sich der Laser-Lithographie bzw. der optischen Lithographie. Beim so genannten Direct Laser Writing wird das erfindungsgemäß berechnete Gitterbild mittels eines bewegten Laserstrahls Punkt für Punkt in eine Photoresistschicht einbelichtet, die auf einer Substratplatte aufgebracht ist.

Bei einem weiteren, der optischen Lithographie zuzuordnendem Verfahren wird ein in Vergrößerung erstelltes Gitterbild auf die Photoresistschicht auf Originalgröße verkleinert abgebildet und einbelichtet. Um beispielsweise ein erfindungsgemäß berechnetes Gitterbild zü erhalten, welches Gitterlinien einer Linienbreite von etwa 0,5 $\mu$m enthält, erstellt man ein 100fach vergrößertes "Diapositiv" des Gitterbildes, das Gitterlinien mit einer Linienbreite von etwa 50 $\mu$m enthält. Bevorzugt wird das "Diapositiv" durch ein Liquid Crystal Device (LCD)-Arrray bereitgestellt, das sich aus Punkten zusammensetzt, die hell oder dunkel geschaltet werden können, und in welches das erfindungsgemäß berechnete Gitterbild über einen Computer eingegeben wird. Das durch das LCD-Array bereitgestellte Gitterbild wird entsprechend verkleinert auf die Photoresistschicht angebildet. Da sich das vergrößerte Gitterbild im Allgemeinen auf dem LCD-Array nicht vollständig unterbringen lässt, wird jeweils nur ein Teil des Gitterbildes auf dem LCD-Array erzeugt. Die Teilbilder werden dann nebeneinander auf die Photoresistschicht abgebildet und einbelichtet.

Die erfindungsgemäße exakte Berechnung von Gitterbildern kann ebenso bei den eingangs beschriebenen Verfahren angewandt werden, in denen bislang im Allgemeinen mit Erfahrungswerten gearbeitet wurde, wie beispielsweise bei der Belichtung holographischer Gitterbilder über Masken, beim Dot-Matrix-Verfahren und bei dem in der EP 0 105 099 B1 beschriebenen so genannten Kinegram-Verfahren. Es versteht sich, dass auch andere als die vorstehend beispielhaft aufgeführten Verfahren, mit denen sich erfindungsgemäß berechnete Gitterbilder realisieren lassen, von der Erfindung umfasst sind.

In einer vorteilhaften Erfindungsvariante wird ein gekrümmtes Gitterbild erzeugt, indem das Gitterbild unter Berücksichtigung der sich bei der nachfolgenden Verformung ergebenden Verzerrungen einem ebenen Substrat eingeschrieben wird, und das ebene Substrat dann in die gewünschte gekrümmte Form gebracht wird.

Alternativ kann ein gekrümmtes Gitterbild dadurch erzeugt erzeugen, dass ein Objekt mit der gewünschten gekrümmten Form mit dem strahlungsempfindlichen Material beschichtet wird und das Gitterbild unter Bewegung des Objekts und/oder der Lithographievorrichtung sukzessive in das strahlungsempfindliche Material eingeschrieben wird.

Die Bestimmung der Gitterparameter mit der Beziehung (1) oder (2) ermöglicht es, das Gitterbild punktrasterfrei in dem Substrat zu erzeugen, wodurch ein gegenüber herkömmlichen Punktraster-Gitterbildern deutlich erhöhtes Sicherheitsniveau erzielt werden kann.

Das erfindungsgemäße Verfahren eignet sich besonders für die automatische Erzeugung von Gitterbildern mit einem Computer. Dabei werden Form und/oder Umriss der Bildbereiche der verschiedenen Bilder, sowie die Angaben zu den Beleuchtungs- und Betrachtungsbedingungen in ein Computerprogramm eingegeben, das unter Verwendung der Beziehung (1) oder (2) die Gitterparameter für die zugeordneten Gitterbereiche berechnet. Der Computer kann darüber hinaus die zum Schreiben der Gittermuster erforderlichen Gitterkoordinaten an eine Schreibvorrichtung zur Belichtung des strahlungsempfindlichen Materials, insbesondere an eine Elektronenstrahllithographievorrichtung ausgeben.

Beschrieben wird auch ein Gegenstand mit einem nach dem beschriebenen Verfahren erzeugten Gitterbild. In einer bevorzugten Ausgestaltung stellt der Gegenstand ein Sicherheitselement zum Aufbringen auf einen Datenträger, insbesondere einen Sicherheitsfaden, ein Etikett oder ein Transferelement, dar. Es ist ebenfalls bevorzugt, dass der Gegenstand ein Datenträger, insbesondere eine Banknote, ein Wertdokument, ein Pass, eine Ausweiskarte oder eine Urkunde, ist. Der Gegenstand kann insbesondere im Bereich des Gitterbilds gekrümmt, etwa zylindrisch gekrümmt sein.

Weitere Beispiele und Vorteile werden nachfolgend anhand der Figuren erläutert. Zur besseren Anschaulichkeit wird in den Figuren auf eine maßstabs-und proportionsgetreue Darstellung verzichtet.

Es zeigen:

Fig. 1     eine schematische Darstellung einer Banknote mit eingebettetem Sicherheitsfaden und aufgeklebtem Transferelement, jeweils erfindungsgemäß hergestellt,

Fig. 2     ein erfindungsgemäß hergestelltes Sicherheitselement in Form eines Sicherheitsfadens im Querschnitt,

Fig. 3     ein erfindungsgemäß hergestelltes Transferelement im Querschnitt,

Fig. 4     in (a) ein vereinfacht dargestelltes Gitterbild mit zwei Gitterbildbereichen, das unter einem bestimmten seitlichen Kippwinkel das vorgegebene Bild von (b) zeigt,

Fig. 5     in (a) und (e) die geometrischen Verhältnisse bei der Betrachtung zur Definition der auftretenden Größen und in (b) bis (d) und (f) bis (h) Veranschaulichungen dreier spezieller Beispiele für die Koordinatenwahl, wobei in (a) bis (d) die Verhältnisse bei Betrachtung eines reflektierenden Gitterbilds in Aufsicht, in (e) bis (h) die Verhältnisse bei Betrachtung eines transparenten Gitterbilds in Durchsicht dargestellt sind,

Fig. 6     in (g) ein erfindungsgemäß hergestelltes Wechselbild, und in (a) bis (f) zur Erläuterung verschiedene gedachte Zwischenschritte bei seiner Erzeugung,

Fig. 7     in (c) ein erfindungsgemäß hergestelltes Bewegungsbild, und in (a) und (b) gedachte Zwischenschritte bei seiner Erzeugung,

Fig. 8     in (b) eine alternative Gestaltung eines Bewegungsbilds, und in (a) gedachte Zwischenschritte bei seiner Erzeugung,

Fig. 9     ein erfindungsgemäß hergestelltes Pumpbild,

Fig. 10    in (c) ein erfindungsgemäß hergestelltes Gitterbild, das räumliche Ansichten eines Würfels zeigt, und in (a) und (b) gedachte Zwischenschritte bei seiner Erzeugung,

Fig. 11    in (a) ein erfindungsgemäß hergestelltes Gitterbild, wobei in (b) bis (e) die Streifenaufteilung in einem Ausschnitt von (a) im Detail dargestellt ist,

Fig. 12    in (a) ein ausgedehntes Gitterbild bei Betrachtung aus kurzem Abstand und in (b) eine vertikale Zerlegung des Bildbereichs von (a) in Teilbereiche,

Fig. 13    in (a) ein erfindungsgemäß hergestelltes Echtfarben-Gitterbild, wobei in (b) bis (e) die Streifenaufteilung in einem Ausschnitt im Detail gezeigt ist,

Fig. 14    die geometrischen Verhältnisse bei der Betrachtung eines gekrümmten Gitterbilds,

Fig.15    eine zylindrisch gekrümmte Fläche mit einem gekrümmten, erfindungsgemäß hergestellten Gitterbild, in (a) in Ausgangsposition, und in (b) nach einer Drehung um einen Winkel σ' um die Zylinderachse,

Fig.16    in (a) die geometrischen Verhältnisse bei der Betrachtung eines zylindrisch gekrümmten Gitterbilds in Ausgangsposition, und in (b) nach Drehung um einen Winkel σ' um die Zylinderachse,

Fig.17    in (c) ein gekrümmtes, erfindungsgemäß hergestelltes Gitterbild nach einem Ausführungsbeispiel der Erfindung, und in (a) und (b) Ansichten des vorgegebenen Bildes zur Erläuterung,

Fig. 18    die Streifenaufteilung eines gekrümmten Gitterbilds, das entsprechend der Zylinderkrtimmung verzerrte Kreisstrukturen zeigt,

Fig.19    in (a) eine Transformation der Bildbereich des Gitterbilds von Fig. 18, die die Zylinderkrümmung kompensiert, und in (b) die Streifenaufteilung des Gitterbilds von (a),

Fig. 20    in (c) ein gekrümmtes, erfindungsgemäß hergestelltes Wechselgitterbild, und in (a) und (b) Ansichten der vorgegebenen Bilder zur Erläuterung, und

Fig. 21    eine schematische Darstellung einer Vorrichtung zur Belegung beliebig gekrümmter Oberflächen mit einem Gitterbild.

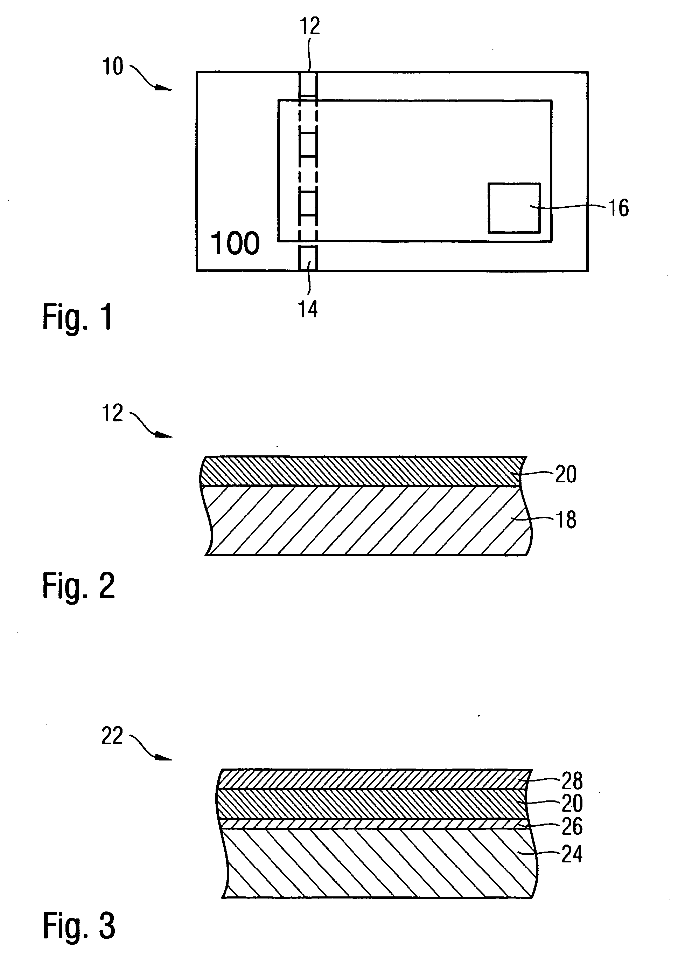

Zunächst wird die Erfindung der Einfachheit halber anhand ebener Gitterbilder bei Beleuchtung mit parallelem Licht und weit entferntem Betrachter erläutert. Fig.1 zeigt eine schematische Darstellung einer Banknote 10, die zwei erfindungsgemäß hergestellte Sicherheitselemente aufweist, nämlich einen Sicherheitsfaden 12 und ein aufgeklebtes Transferelement 16. Der Sicherheitsfaden 12 ist als Fenstersicherheitsfaden ausgebildet, der in bestimmten Fensterbereichen 14 an der Oberfläche der Banknote 10 hervortritt, während er in den dazwischen liegenden Bereichen im Inneren der Banknote 10 eingebettet ist.

Fig. 2 zeigt den prinzipiellen Schichtaufbau des Sicherheitsfadens 12 im Querschnitt. Der Sicherheitsfaden 12 enthält eine Trägerschicht 18, beispielsweise eine Kunststofffolie, auf der der Schichtaufbau 20 des Sicherheitselements mit dem erfindungsgemäß hergestellten Gitterbild aufgebracht ist. Es versteht sich, dass der Sicherheitsfaden 12 weitere Schichten und/ oder weitere Sicherheitsmerkmale, wie etwa Lumineszenzstoffe oder magnetische Stoffe, aufweisen kann, die jedoch für die vorliegende Erfindung nicht wesentlich sind und daher nicht näher beschrieben werden.

Wird ein Sicherheitselement, wie das Transferelement 16, in Form eines Patches oder Streifens auf den abzusichernden Gegenstand aufgebracht, so wird es zweckmäßig zunächst in Form von Etikettenmaterial oder Transfermaterial vorbereitet, dann in der gewünschten Form ausgelöst und auf den abzusichernden Gegenstand übertragen.

Ein Beispiel für ein solches Transfermaterial ist in der Fig. 3 im Querschnitt dargestellt. Das Transfermaterial 22 enthält eine Trägerschicht 24, insbesondere eine Kunststofffolie, auf die der Schichtaufbau 20 des Sicherheitselements mit dem erfindungsgemäß hergestellten Gitterbild aufgebracht ist. Dabei kann es vorteilhaft sein, eine Trennschicht 26 zwischen dem Schichtaufbau 20 und der Trägerschicht 24 vorzusehen. Auf dem Schichtaufbau 20 des Transfermaterials ist eine Klebeschicht 28, beispielsweise eine Heißschmelzklebeschicht, vorgesehen, mit der das Sicherheitselement auf dem abzusichernden Gegenstand befestigt werden kann. Zum Übertrag wird das Transfermaterial 22 auf den Gegenstand aufgelegt und die Klebeschicht beispielsweise durch Wärme aktiviert. Anschließend wird das Transfermaterial von dem Gegenstand entfernt, wobei nur der aufgeklebte Schichtaufbau 20 auf dem abzusichernden Gegenstand verbleibt.

In einer anderen Ausgestaltung, in der das Sicherheitselement in Form von Etikettenmaterial vorliegt, ist im Unterschied zur Darstellung der Fig. 3 keine Trennschicht 26 vorgesehen, so dass der Schichtaufbau 20 unlösbar mit der Trägerschicht 24 verbunden ist.

Der Schichtaufbau 20 kann in allen beschriebenen Gestaltungen einschichtig oder mehrschichtig sein. Im einfachsten Fall kann der Schichtaufbau 20 lediglich aus einer Kunststoffschicht, wie etwa einer Lackschicht, bestehen, in der das Gitterbild in Form einer Reliefstruktur eingebracht ist. Zur besseren Erkennbarkeit oder zur Erzielung besonderer Effekte kann die Kunststoffschicht auch mit weiteren Schichten, etwa mit reflektierenden Metallschichten oder Schichten aus hochbrechendem Material, kombiniert sein.

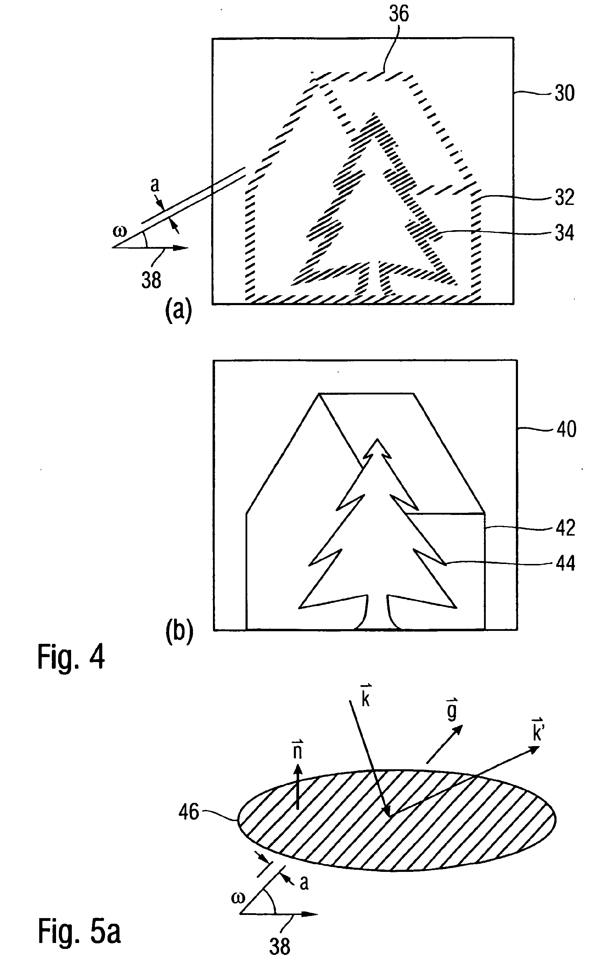

Fig. 4 zeigt in (a) eine vereinfachte Darstellung eines Gitterbildes 30, das bei Betrachtung unter einem bestimmten seitlichen Kippwinkel das in Fig. 4(b) dargestellte vorgegebene Bild 40 zeigt. Das vorgegebene Bild 40 enthält zwei Bildbereiche 42 und 44, die den Umriss eines Hauses bzw. eines Baumes darstellen.

Das Gitterbild 30 weist zwei den Bildbereichen 42 und 44 zugeordnete Gitterbildbereiche 32 und 34 auf, die jeweils mit einem Gittermuster aus parallelen Gitterlinien 36 gefüllt sind. Die Gitterlinien 36 jeden Bereichs sind durch zwei Gitterparameter charakterisiert, nämlich den Abstand a der Gitterlinien, der als Gitterkonstante bezeichnet wird, und den Azimutwinkel ω, den die Gitterlinien mit einer Referenzrichtung 38 einschließen. Die Gitterkonstante bestimmt dabei wesentlich die Farbe, unter der die Gitterbildbereiche 32, 34 erscheinen, während der Azimutwinkel für die Sichtbarkeit der Gitterbildbereiche aus bestimmten Betrachtungsrichtungen verantwortlich ist.

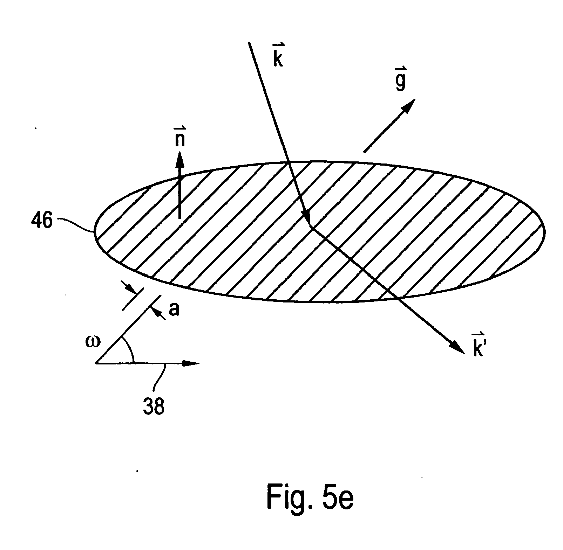

Das Gitterbild 30 ist für die Betrachtung bei Beleuchtung mit weißem Licht ausgelegt. Die geometrischen Verhältnisse bei der Betrachtung in Aufsicht bzw. in Durchsicht sind zur Definition der auftretenden Größen in den Fig. 5(a) und 5(e), schematisch dargestellt. Der Gitterbildbereich 46 weist ein Gittermuster mit einer Gitterkonstante a und einem Azimutwinkel ω auf. Die beiden Angaben können auch durch den Gittervektor $\vec{g}$ dargestellt werden, der einen Vektor der Länge 2π/a darstellt, der in Richtung parallel zu den Gitterlinien zeigt. Die Orientierung des Gitterbilds im Raum wird durch den Normalenvektor $\vec{n}$ angegeben, der einen Vektor der Länge 1 darstellt, der senkrecht auf der Gitterebene steht.

Das einfallende Licht wird durch einen oder mehrere Beleuchtungsvektoren $\vec{k}$ charakterisiert, die jeweils einen Vektor der Länge 2π/λ darstellen, der von der Lichtquelle zum Gitterbild zeigt. λ ist dabei die Wellenlänge des Lichts, so dass monochromatisches Licht durch Beleuchtungsvektoren gleicher Länge und weißes Licht durch Beleuchtungsvektoren unterschiedlicher Länge charakterisiert ist. Der Betrachtungsvektor $\vec{k}'$ ist ein Vektor der Länge 2π/λ, der vom Gitterbild zum Auge des Betrachters zeigt.

Der Gitterbildbereich 46 wird für den Betrachter nun gerade dann sichtbar, wenn die oben beschriebene Bedingung (1)

$$\vec{n} \times \left(\vec{k}' - \vec{k}\right) = m\vec{g}$$

für eine ganze Zahl m erfüllt ist, da nur dann eine konstruktive Interferenz der vom Gitterbildbereich 46 reflektierten Lichtstrahlen in Betrachtungsrichtung erfolgt.

Durch die Formulierung in Vektorschreibweise ist die Beziehung (1) unabhängig von der Wahl des Koordinatensystems. In den nachfolgenden Ausführungen sind zunächst zur bequemeren Erläuterung der Beispiele für ebene Gitterbilder und für Beleuchtung mit parallelem Licht und Betrachtung aus einiger Entfernung speziell angepasste Koordinatensysteme gewählt.

Bei einem ersten Beispiel für eine Koordinatenwahl wird das Gitterbild in die xy-Ebene gelegt, so dass der Gittervektor mit der y-Achse einen Winkel ω bildet, und der Gitternormalenvektor in Richtung der z-Achse zeigt.

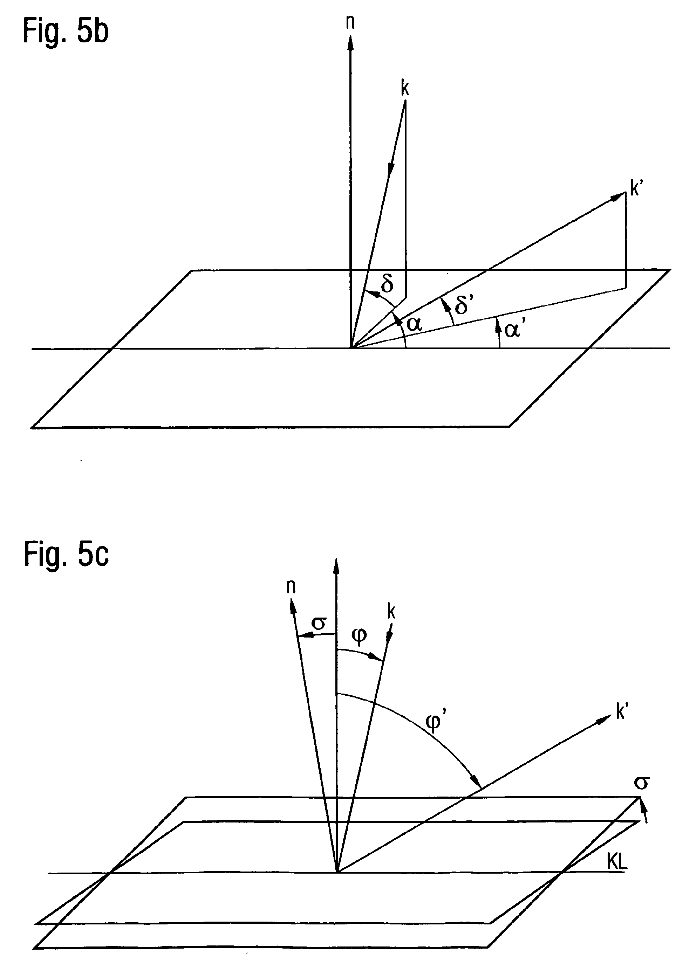

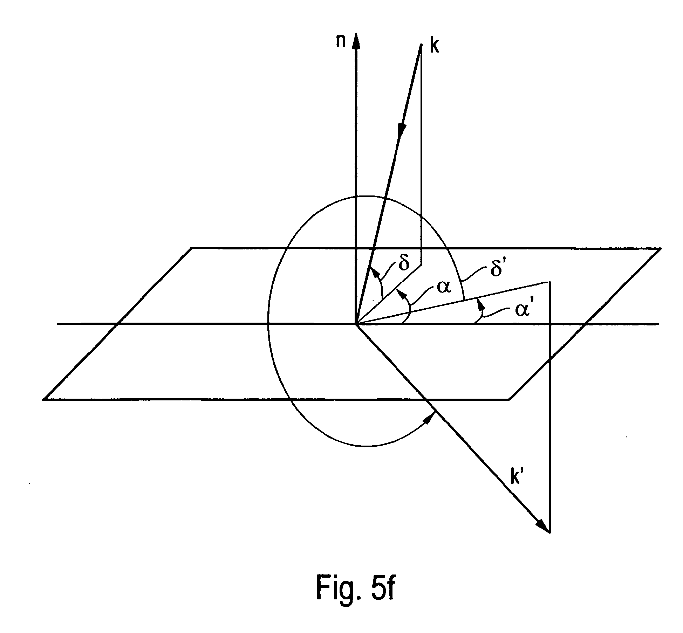

Der Beleuchtungsvektor ist gekennzeichnet durch seine Deklination δ (d.h., dem Winkel über der xy-Ebene) und seine Rektaszension α (der Projektion in die xy-Ebene), wie in Fig. 5(b) und 5(f) für die Betrachtung in Aufsicht bzw. Durchsicht gezeigt.

Der Betrachtungsvektor ist gekennzeichnet durch seine Deklination δ' (d.h., dem Winkel über der xy-Ebene) und seine Rektaszension α' (der Projektion in die xy-Ebene), wie ebenfalls in Fig. 5(b) und 5(f) dargestellt.

In diesem Koordinatensystem lässt sich die allgemeine Gitterformel für den Spezialfall ebener Gitterbilder, Beleuchtung mit parallelem Licht und Betrachtung aus einiger Entfernung so umformen, dass der Gitterazimutwinkel ω und die Gitterkonstante a gegeben sind durch:

$$\tan\omega \quad = \quad \frac{\sin\alpha\cos\delta + \sin\alpha'\cos\delta'}{\cos\alpha\cos\delta + \cos\alpha'\cos\delta'}$$

$$a \quad = \quad \frac{m \cdot \lambda}{\sqrt{\left(\sin\alpha\cos\delta + \sin\alpha'\cos\delta'\right)^2 + \left(\cos\alpha\cos\delta + \cos\alpha'\cos\delta'\right)^2}}$$

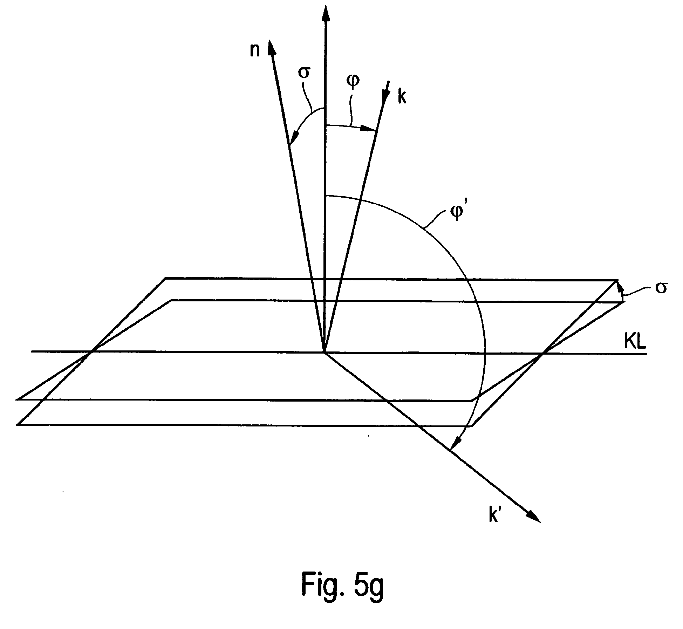

Bei einem zweiten Beispiel für die Koordinatenwahl werden die Lichtvektoren in die xz-Ebene gelegt, und die Gitterebene schneidet die xz-Ebene in der x-Achse, welche als Kipplinie KL dient, um welche die Gitterebene seitlich hin- und hergekippt werden kann. Bezogen auf diese Kipplinie oder Kippgerade werden mit Bezug auf Fig. 5(c) und 5 (g) folgende Winkelgrößen verwendet:

- Beleuchtungswinkel φ = 90˚ minus Winkel zwischen Beleuchtungsvektor und Kipplinie KL,

- Betrachtungswinkel φ' = 90˚ minus Winkel zwischen Betrachtungsvektor und Kipplinie KL,

- Azimutwinkel $\omega$ = 90˚ minus Winkel zwischen Gittervektor und Kipplinie KL, und

- seitlicher Kippwinkel : $\sigma$ = 90˚ minus Winkel zwischen Lichteinfallsebene und Gitterebene.

In diesem Koordinatensystem lässt sich die allgemeine Gitterformel für den Spezialfall ebener Gitterbilder, Beleuchtung mit parallelem Licht und Betrachtung aus einiger Entfernung so umformen, dass der Gitterazimutwinkel $\omega$ und die Gitterkonstante a gegeben sind durch:

$$\tan \omega = \frac{\sin \sigma}{\tan \dfrac{\varphi + \varphi'}{2}}$$

$$a \;=\; m\lambda \frac{\cos \omega}{\sin \varphi + \sin \varphi'}$$

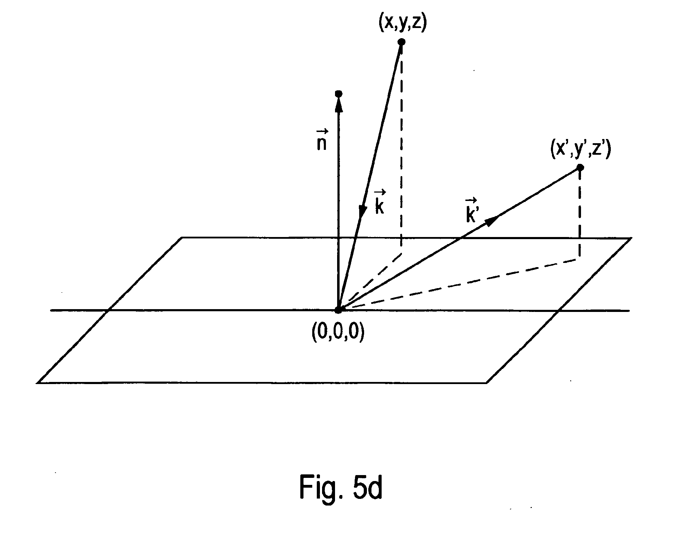

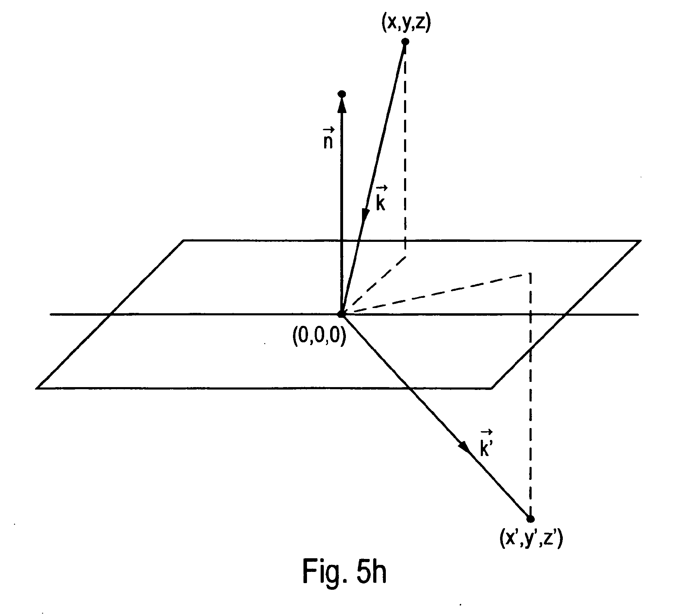

In einem dritten Beispiel für die Koordinatenwahl wird das Gitterbild in die xy- Ebene gelegt, so dass der Normalenvektor $\vec{n}$ in Richtung der z-Achse zeigt und die Gittervektoren 9 der Bildbereiche einen Winkel $\omega$ mit der y-Achse bilden. Die Lichtquelle befindet sich in der Position (x,y,z) vor dem Gitterbild. Der Betrachter befindet sich in der Position (x', y', z') vor oder hinter dem Gitterbild, je nach dem, ob das Gitterbild für die Betrachtung in Aufsicht (Fig. 5 (d)) oder in Durchsicht (Fig. 5(h)) ausgelegt ist.

Ist das Gitterbild nun klein im Vergleich zum Abstand der Lichtquelle und zum Betrachtungsabstand und befindet es sich im Nullpunkt des Koordinatensystems, lassen sich der Azimutwinkel $\omega$ und die Gitterkonstante a der bei dieser Konfiguration bei der Wellenlänge $\lambda$ sichtbaren Bildbereiche wie folgt berechnen:

$$\tan \omega = -\frac{g_x}{g_y}$$

$$a = \frac{2\pi}{\sqrt{g_x^2 + g_y^2}}$$

Dabei stellen $g_x$ und $g_y$ die Komponenten des Gittervektors dar, die gegeben sind durch:

$$g_x = -\frac{2\pi}{m\lambda}\left(\frac{y'}{c'} + \frac{y}{c}\right)$$

$$g_y = \frac{2\pi}{m\lambda}\left(\frac{x'}{c'} + \frac{x}{c}\right)$$

wobei c und c' die Abstände der Lichtquelle bzw. des Betrachters vom Nullpunkt sind. Diese wiederum lassen sich wie folgt berechnen:

$$c = \sqrt{x^2 + y^2 + z^2}$$

$$c' = \sqrt{x'^2 + y'^2 + z'^2}$$

In Fig. 4 und den weiteren Figuren sind die Abmessung und Abstände der Gitterlinien 36 zur Illustration stark übertrieben gezeichnet. Tatsächlich liegt die Gitterkonstante a der Gittermuster erfindungsgemäß hergestellter Gitterbilder typischerweise im Bereich von etwa 0,5 $\mu$m bis etwa 2 $\mu$m, so dass eine entsprechend große Anzahl an Gitterlinien erforderlich ist, um Bilder mit Abmessung von einigen Millimetern oder einigen Zentimetern zu erzeugen.

Im Beispiel der Fig. 4 weisen die beiden Gitterbildbereiche 32 und 34 denselben Azimutwinkel, aber verschiedene Gitterkonstanten auf. Die beiden Bereiche 32, 34 sind daher aus derselben Betrachtungsrichtung sichtbar, erscheinen allerdings in unterschiedlichen Farben. Da der Azimutwinkel der beiden Gitterbildbereiche ungleich Null ist, sind sie bei Betrachtung des unverkippten Gitterbildes nicht sichtbar. Erst wenn das Gitterbild 30, bzw. der mit dem Gitterbild versehene Gegenstand um einen bestimmten Winkel um die linke oder rechte Bildkante gekippt wird, gelangt das vom Gitter reflektierte Licht zum Betrachter, so dass er das Bild 40 des Hauses und des Baums sehen kann.

Um ein Gitterbild, wie etwa das Gitterbild 30 oder auch die nachfolgend beschriebenen komplexeren Gitterbilder, zu erzeugen, geht man erfindungsgemäß wie folgt vor: Zunächst wird ein seitlicher Kippwinkel für das Gitterbild 30 festgelegt, bei dem das vorgegebene Bild 40 sichtbar sein soll. Im Beispiel der Fig. 4 beträgt dieser Kippwinkel 15˚. Die Kipplinie, also die Achse, um die das Gitterbild bei der Kippung gedreht wird, ist dabei durch die rechte oder linke Bildkante gebildet.

Dann wird für jeden Bildbereich eine Farbe festgelegt, in der er unter dem seitlichen Kippwinkel erscheint. Im Beispiel ist für das Haus die Farbe Rot mit einer Wellenlänge von 630 nm und für den Baum die Farbe Grün mit einer Wellenlänge von 530 nm festgelegt.

Nun werden aus seitlichem Kippwinkel und Farbe unter Verwendung der oben beschriebenen Beziehung (1) für jeden Bildbereich eine Gitterkonstante und eine Winkelorientierung berechnet. Sind die genauen geometrischen Verhältnisse bei der Betrachtung bekannt, so können diese Angaben über die Richtung des Beleuchtungs- und Betrachtungsvektors in die Beziehung (1) einfließen. Es hat sich jedoch gezeigt, dass es in den meisten Fällen genügt, bei der Berechnung typische Werte für den Zwischenwinkel zwischen Beleuchtungs- und Betrachtungsvektor zu verwenden. Beispielsweise deckt bei senkrechter Betrachtung des Gitterbilds ein angenommener Zwischenwinkel von 40˚ einen weiten Bereich typischer Betrachtungsgeometrien ab. Die Länge von Beleuchtungsvektor und Betrachtungsvektor ergibt sich aus der für den jeweiligen Bildbereich festgelegten Farbe.

Die Rechnung wird vorzugsweise für die 1. Beugungsordnung durchgeführt, also m = +1 oder -1 in Beziehung (1) verwendet. Mit diesen Angaben erhält man beispielsweise für den Bildbereich 42 "Haus" eine Gitterkonstante von 799 nm und einen Azimutwinkel von rund -35˚ und für den Bildbereich 44 "Baum" eine Gitterkonstante von 672 nm und ebenfalls einen Azimutwinkel von rund -35˚.

Dann wird das Gitterbild mit den Gitterbildbereichen 32 und 34 in einem Substrat erzeugt, wobei die Form und Anordnung der Gitterbildbereiche 32 und 34 denen der Bildbereiche 42 bzw. 44 entsprechen. Die Gitterbildbereiche 32, 34 werden jeweils mit einem Gittermuster gefüllt, dessen Gitterparameter durch die für den zugeordneten Bildbereich bestimmte Gitterkonstante a und Winkelorientierung $\alpha$ gegeben sind. Die Herstellung des Gitterbildes erfolgt beispielsweise mit einem Elektronenstrahl-Lithographieverfahren, wie es in den Druckschriften DE 102 26115 und DE 102 43 413 beschrieben ist.

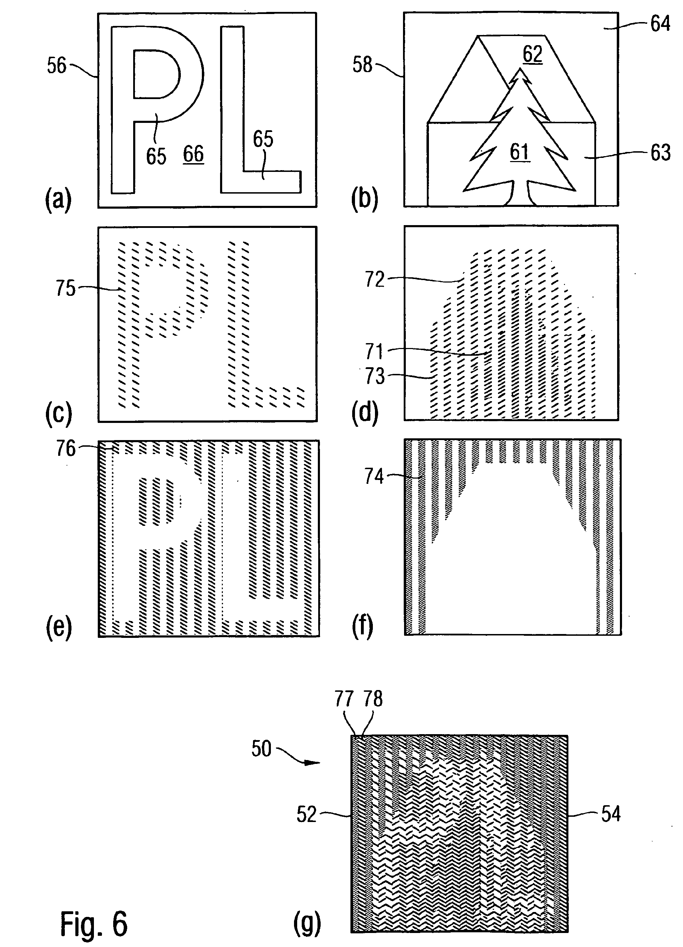

Mit Bezug auf Fig. 6 wird nun die Erzeugung eines komplexeren Gitterbildes beschrieben. Das Gitterbild 50 der Fig. 6(g) stellt ein Wechselbild dar, das beim Kippen um die linke oder rechte Bildkante 52 bzw. 54 unter unterschiedlichen seitlichen Kippwinkeln unterschiedliche Bilder zeigt. Der einfachen Darstellung halber wird das erfindungsgemäße Verfahren am Beispiel eines Wechselbilds mit lediglich zwei verschiedenen Bildern erläutert.

Die beiden gezeigten Bilder 56 und 58 sind in Fig. 6(a) bzw. 6(b) dargestellt. Das erste Motiv 56 stellt die Buchstabenfolge "PL" dar, das zweite Motiv 58 die flächige Graphik "Haus mit Baum". Die flächige Graphik 58 soll beim Kippen des Gitterbildes um 15˚ nach links erscheinen, die Buchstabenfolge 56 beim Kippen um 15˚ nach rechts.

Dann werden die Farben festgelegt, unter denen die einzelnen Bildbereiche im jeweiligen seitlichen Kippwinkel erscheinen sollen. Im Beispiel soll der Baum 61 grün mit einer Wellenlänge von 530 nm, das Hausdach 62 rot (Wellenlänge 630 nm), die Hausmauer 63 gelb (Wellenlänge 580 nm) und der Himmel 64 blau (Wellenlänge 470 nm) erscheinen. Die Buchstabenfolge "PL" 65 soll rot auf grünem Grund 66 erscheinen. Die Beleuchtung soll mit weißem Licht bei einer Lichteinfallsrichtung von vorne unter 40˚ und die Betrachtung senkrecht von oben unter 0˚ erfolgen.

Mit diesen Angaben erhält man unter Verwendung der Beziehung (1) für jeden der Bildbereiche 61-66 der beiden Bilder 56, 58 ein Wertepaar (a, $\omega$) für die Gitterkonstante und den Azimutwinkel, wie in nachstehender Tabelle 1 gezeigt. Dabei ist für die Berechnung die Beugungsordnung m=1, der Beleuchtungswinkel $\varphi$ =40˚, der Betrachtungswinkel $\varphi$'= 0˚, und der seitliche Kippwinkel zu $\sigma$ = +/-15˚ gewählt.

**Tabelle 1**

| Motiv | Farbe | $\lambda$ [nm] | $\sigma$ [˚] | a[nm] | $\omega$ [˚] |
|---|---|---|---|---|---|
| Hausdach | rot | 630 | -15 | 799 | -35,4 |
| Hauswand | gelb | 580 | -15 | 735 | -35,4 |
| Baum | grün | 530 | -15 | 672 | -35,4 |
| Himmel | blau | 470 | -15 | 596 | -35,4 |
| Buchstaben | rot | 630 | 15 | 799 | 35,4 |
| Hintergrund | grün | 530 | 15 | 672 | 35,4 |

Wie in Fig. 6(c) bis 6(f) jeweils für Vorder- und Hintergrund der beiden Bilder getrennt gezeigt, werden die Gitterbildbereiche für das Hausdach 71, die Hausmauer 72, den Baum 73, den Himmel 74, die Buchstabenfolge 75 und den Buchstabenhintergrund 76 mit einer Form und einer relativen Lage erzeugt, die bis auf die nachfolgend erläuterte Streifenunterteilung der Form und Lage der zugeordneten Bildbereiche 61-66 der Fig. 6(a) und (b) entspricht. Die Figuren 6(c) bis 6(f), wie auch die entsprechenden nachfolgend gezeigten Figuren stellen lediglich gedachte Zwischenschritte bei der Herstellung der erfindungsgemäß hergestellten Gitterbilder dar, die der anschaulicheren Erläuterung dienen und bei der tatsächlichen Herstellung in der Regel nicht in dieser Form auftreten.

Um die beiden Bilder 56 und 58 abwechselnd am gleichen Ort erscheinen zu lassen, ist jeder der Gitterbildbereiche 71-76 in schmale Streifen zerlegt und jeder zweite Streifen weggelassen. Diese Streifenaufteilung und die Eliminierung jedes zweiten Streifens ist in den Darstellungen der Fig. 6(c) bis 6(f) bereits durchgeführt. Dann werden im Gesamtgitterbild 50 abwechselnd Streifen 77, 78 von jedem der beiden Bilder angeordnet, wie in Fig. 6(g) gezeigt. Die Streifenbreite beträgt im Beispiel nur etwa 10 $\mu$m und liegt damit deutlich unterhalb der Auflösungsgrenze des Auges.

Das entstehende Gitterbild 50 hat nun die gewünschten Eigenschaften. Es zeigt unter den vorgegebenen Kippwinkeln von +15˚ oder -15˚ jeweils das zugehörige der beiden Bildmotive 56 und 58. Weichen die tatsächlichen Beleuchtungs- oder Betrachtungsbedingungen, insbesondere der Winkel zwischen Beleuchtungs- und Betrachtungsvektor von den Bedingungen ab, die zur Bestimmung der Gitterparameter verwendet wurden, so ergeben sich gegenüber den Vorgaben verfälschte Farbeindrücke. Die Abhängigkeit des Farbeindrucks von dem Zwischenwinkel zwischen Beleuchtungsvektor und Betrachtungsvektor ist jedoch gering.

Soll ein Gitterbild erzeugt werden, das mehr als zwei Bilder zeigt, kann man analog zum beschriebenen Verfahren vorgehen. Für jedes der Bilder werden die Gitterparameter der Bildbereiche berechnet und die den Bildbereichen zugeordneten Gitterbereiche mit einem entsprechenden Gittermuster gefüllt. Die Gitterbereiche werden in schmale Streifen zerlegt und das Gesamtbild aus nebeneinander liegenden Streifen aus den verschiedenen Bildern zusammengesetzt.

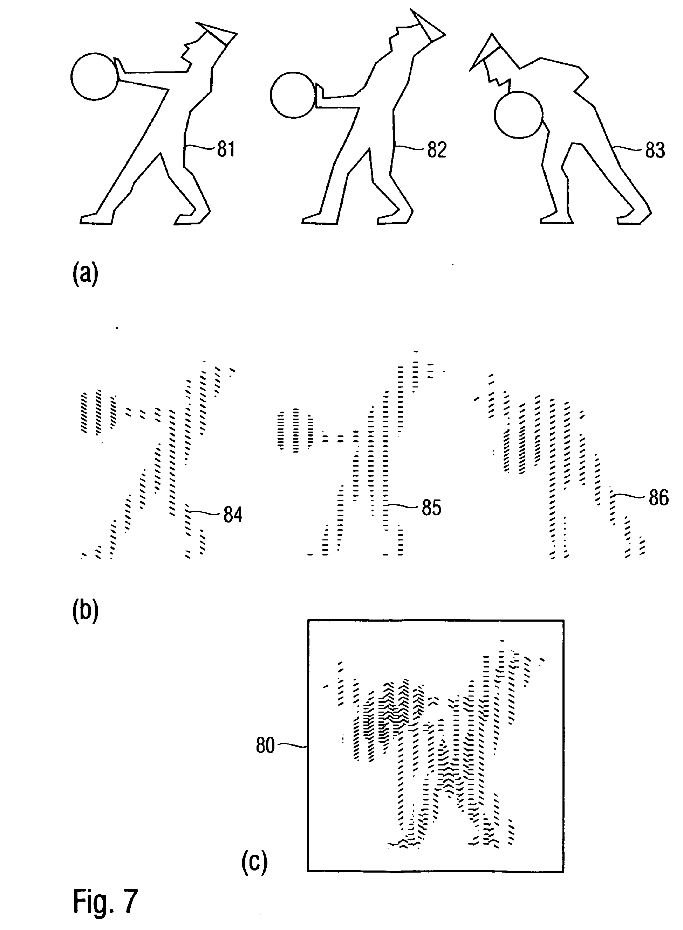

Fig. 7 zeigt ein weiteres Gitterbild 80, das ein Bewegungsbild darstellt, dessen einzelne Bilder ein Motiv in verschiedenen Bewegungszuständen zeigen, so dass sich beim seitlichen Kippen des Gitterbilds 80 der Eindruck eines bewegten Bildes ergibt. Fig. 7(a) zeigt beispielhaft drei Bewegungszustände 81-83 eines Männchens, das einen Ball fängt. Wie bereits beschrieben, werden für das Männchen, seine Mütze und den Ball Farben festgelegt, beispielsweise grün, rot und gelb. Der erste Bewegungszustand 81 soll unter einem seitlichen Kippwinkel von -15˚, der zweite Bewegungszustand 82 unter 0˚ und der dritte Bewegungszustand 83 unter einem seitlichen Kippwinkel von +15˚ sichtbar sein, so dass sich beim Kippen des Gitterbildes 80 von rechts nach links das Männchen mit dem Ball nach vorne beugt und beim Zurückkippen wieder aufrichtet.

Aus diesen Angaben und typischen Vorgaben für den Beleuchtungs- und Betrachtungsvektor werden unter Benutzung der Beziehung (1) die Gitterparameter (a, ($\omega$) für jeden Bildbereich berechnet, wie in Tabelle 2 gezeigt. Dabei ist die Beugungsordnung m=1, der Beleuchtungswinkel $\varphi$ =40˚, der Betrachtungswinkel $\varphi$'= 0˚, und der seitliche Kippwinkel zu $\sigma$ =0+/-15˚ gewählt.

**Tabelle 2**

| Motiv | Farbe | $\lambda$ [nm] | $\sigma$[˚] | a[nm] | $\omega$ [˚] |
|---|---|---|---|---|---|
| Mann1, Mütze | rot | 630 | -15 | 799 | -35,4 |
| Mann1, Mann | gelb | 580 | -15 | 735 | -35,4 |
| Mann1, Ball | grün | 530 | -15 | 672 | -35,4 |
| Mann2, Mütze | rot | 630 | 0 | 980 | 0 |

(fortgesetzt)

| Motiv | Farbe | λ [nm] | σ[˚] | a[nm] | ω [˚] |
|---|---|---|---|---|---|
| Mann2, Mann | gelb | 580 | 0 | 902 | 0 |
| Mann2, Ball | grün | 530 | 0 | 825 | 0 |
| Mann3, Mütze | rot | 630 | 15 | 799 | 35,4 |
| Mann 3, Mann | gelb | 580 | 15 | 735 | 35,4 |
| Mann 3, Ball | grün | 530 | 15 | 672 | 35,4 |

Die zugeordneten Gitterbildbereiche werden mit einem Gittermuster mit diesen Gitterparametern gefüllt und in schmale Streifen unterteilt. Da drei Bilder überlagert werden sollen, werden aus jedem Bild jeweils zwei von drei Streifen weggelassen, wie in den drei Teilbildern 84-86 der Fig. 7(b) gezeigt. Anschließend wird das Gesamtbild 80 aus den aufeinander folgenden Streifen der drei Teilbilder 84-86 zusammengesetzt, wie in Fig. 7(c) dargestellt.

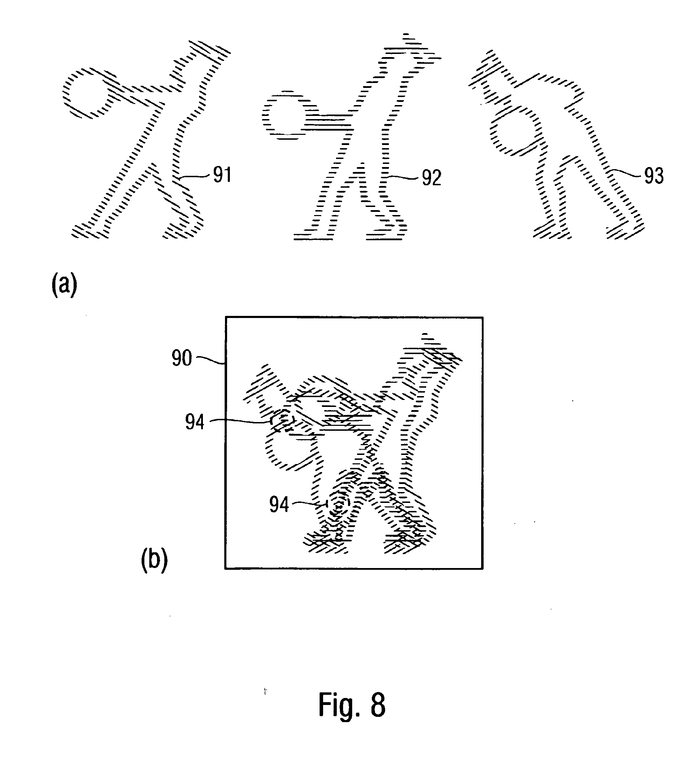

Eine alternative Ausgestaltung ist in Fig. 8 gezeigt, in der anders als in Fig. 7(b) nur die Umrisse 91-93 des Männchens mit einem Gittermuster gefüllt werden, wie in Fig. 8(a) gezeigt. Da der Überlapp der einzelnen Umrisszeichnungen gering ist, wird in diesem Beispiel auf eine Aufteilung in Streifen verzichtet, so dass das in Fig. 8(b) gezeigte Gitterbild 90 in einigen Bereichen 94 mit einander überlagernden Gittermustern gefüllt ist.

Generell können Teile des Gitterbildes überlagert bzw. übereinander geschrieben werden, vorzugsweise wenn nicht zu viele Bilder im Gittermuster untergebracht werden müssen.

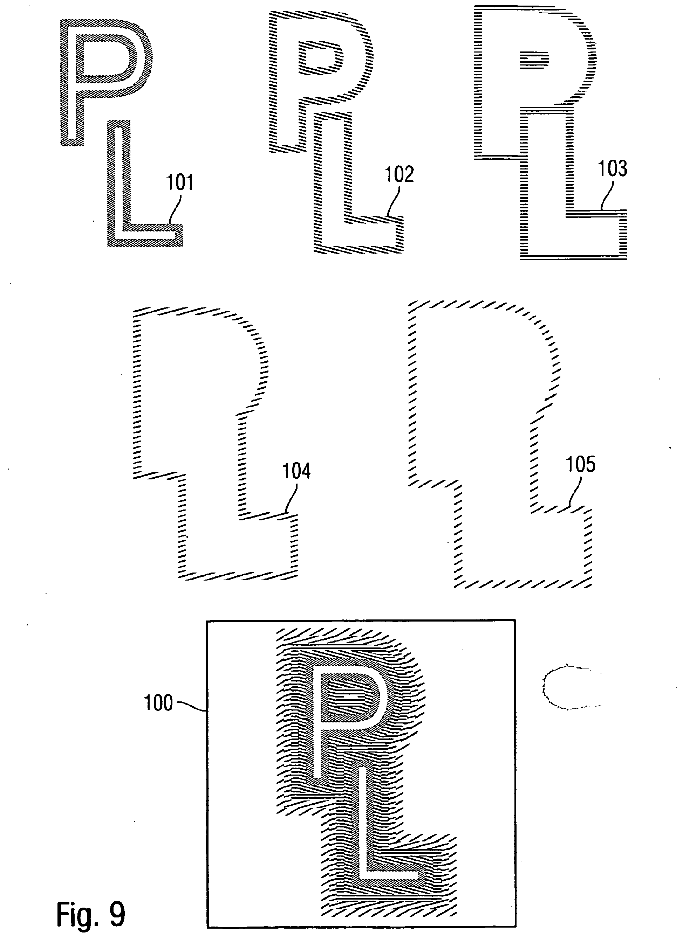

Das in Fig 9 gezeigte Gitterbild 100 stellt ein so genanntes Pumpbild dar. Dabei verkleinert oder vergrößert sich die Umrisslinie eines Motivs, im Beispiel der Buchstabenkombination "PL", beim seitlichen Kippen des Gitterbilds. Die Gitterbereiche der einzelnen Teilbilder 101-105 sind dabei so gestaltet, dass sie einander nicht überlappen. Das Gesamtbild 100 kann daher ohne Streifenzerlegung aus den einzelnen Teilgitterbildern 101-105 zusammengesetzt werden, was zu einer besonders großen Helligkeit und Brillanz des Pumpbildes führt. Durch geeignete Wahl der Gitterkonstanten kann sich auch die Farbe des sich aufblähenden Motivs ändern. Das Buchstabenmotiv der Fig. 9 bläht sich beim seitlichen Kippen von -20˚ nach +20˚ in 10˚-Schritten langsam auf und wechselt dabei seine Farbe von Blau über Blaugrün, Grün und Gelb nach Rot. Beim Zurückkippen kehrt sich der Pumpeffekt und die Farbänderung um.

Die Ergebnisse der Berechnung mit Beziehung (1) für die Beugungsordnung m=1, den Beleuchtungswinkel φ =40˚, den Betrachtungswinkel φ' = 0˚ und die seitlichen Kippwinkel σ = 0, +/-10˚, +/-20˚ sind in Tabelle 3 aufgeführt.

**Tabelle 3**

| Motiv | Farbe | λ [nm] | σ [˚] | a[nm] | ω[˚] |
|---|---|---|---|---|---|
| PL_ganz außen | rot | 630 | 20 | 714 | 43 |
| PL_außen | gelb | 590 | 10 | 828 | 26 |
| PL_mitte | grün | 550 | 0 | 856 | 0 |
| PL_innen | blaugrün | 510 | -10 | 716 | -26 |
| PL_ganz innen | blau | 470 | -20 | 533 | -43 |

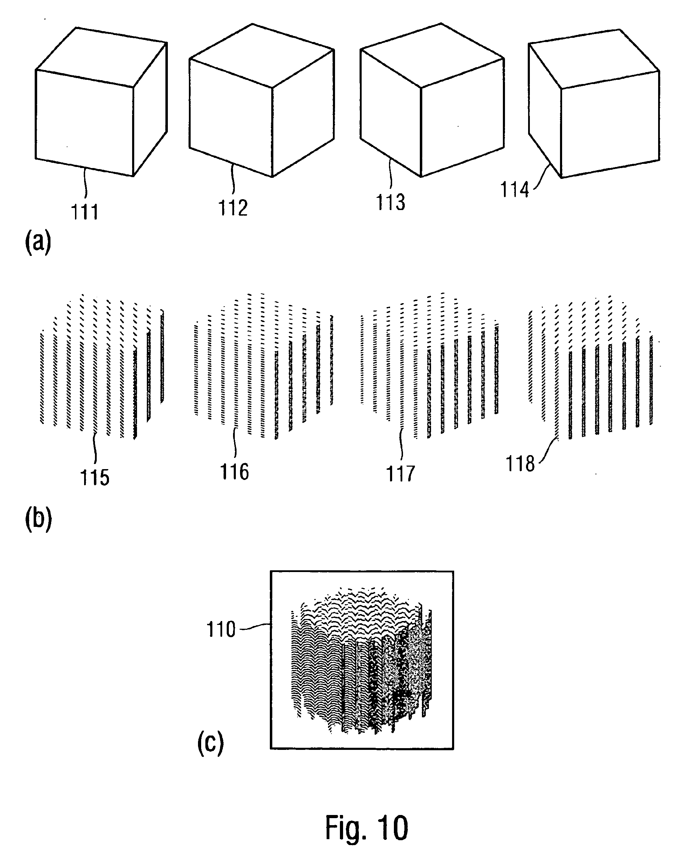

Anstelle von Wechsel- oder Bewegungsbildern können mit dem erfindungsgemäßen Verfahren auch Stereobilder erzeugt werden. Dazu verwendet man das Bild eines räumlichen Motivs aus unterschiedlichen Blickrichtungen, und wechselt die Ansichten so, dass bei Betrachtung des Gitterbildes aus einem gewöhnlichen Betrachtungsabstand dem linken und rechten Auge entsprechende Ansichten im richtigen Winkel präsentiert werden. Zur Illustration zeigt Fig. 10 (a) einen Würfel in vier Ansichten 111-114 von -24˚ bis +24˚, gedreht in Schritten von 16˚. Diese Schrittweite entspricht etwa dem Winkel zwischen rechtem und linkem Auge bei einem Betrachtungsabstand von 25 cm. Nachdem eine oder mehrere Farben für den Würfel festgelegt worden sind, erfolgt die weitere Berechnung der Gitterparameter mithilfe von Beziehung (1), wie oben beschrieben. Die Farbe des Würfels wird dabei in den verschiedenen Ansichten unverändert gelassen, so dass dem rechten und linken Auge jeweils derselbe Farbeindruck geboten wird. Die Farben der Würfelseiten können aufeinander abgestimmt werden, um den räumlichen Eindruck noch zu verstärken.

Tabelle 4 fasst die aus Formel (1) berechneten Gitterparameter für die sichtbaren Würfelflächen für die Beugungsordnung m=1, den Beleuchtungswinkel φ =40˚, den Betrachtungswinkel φ' = 0˚, und die seitlichen Kippwinkel σ = +/- 8˚, +/-24˚ zusammen.

**Tabelle 4**

| Motiv | Farbe | λ [nm] | σ [°] | a[nm] | ω [°] |
|---|---|---|---|---|---|
| Würfel1, oben | gelbgrün | 560 | -24 | 581 | -48 |
| Würfel1, links | mittelgrün | 525 | -24 | 545 | -48 |
| Würfel1, rechts | blaugrün | 490 | -24 | 508 | -48 |
| Würfel2, oben | gelbgrün | 560 | -8 | 814 | -21 |
| Würfel2, links | mittelgrün | 525 | -8 | 763 | -21 |
| Würfel2, rechts | blaugrün | 490 | -8 | 712 | -21 |
| Würfel3, oben | gelbgrün | 560 | 8 | 814 | 21 |
| Würfel3, links | mittelgrün | 525 | 8 | 763 | 21 |
| Würfel3, rechts | blaugrün | 490 | 8 | 712 | 21 |
| Würfel4, oben | gelbgrün | 560 | 24 | 581 | 48 |
| Würfel4, links | mittelgrün | 525 | 24 | 545 | 48 |
| Würfel4, rechts | blaugrün | 490 | 24 | 508 | 48 |

Wie in Fig. 10(b) dargestellt, werden aus jedem der vier im Zwischenschritt entstehenden Teilbilder 125-118 drei von vier Streifen weggelassen, und das Gesamtbild 110 wird wie oben aus den einzelnen Streifen zusammengesetzt, wie in Fig.10(c) gezeigt. Bei senkrechter Betrachtung des fertigen Gitterbilds 110 aus etwa 25 cm Abstand erscheint bereits ein räumliches Bild des Würfels, da dem linken und rechten Auge des Betrachters unterschiedliche Ansichten 112,113 des Würfels präsentiert werden. Der räumliche Eindruck wird beim Kippen des Gitterbilds nach rechts oder links noch verstärkt, da dann jeweils eine noch weiter gedrehte Ansicht 111 oder 114 des Würfels erscheint. Es versteht sich, dass durch das Einschieben zusätzlicher Bilder mit weiteren Ansichten des Würfels der räumliche Eindruck noch verbessert werden kann. Beispielsweise können anstelle der vier Bilder mit einem Winkelabstand von 16° acht Bilder im Winkelabstand von 8° oder noch mehr Bilder mit noch kleinerem Winkelabstand vorgesehen werden, um beim Kippen einen sehr gleichmäßigen Übergang zwischen den einzelnen Bildern zu erzeugen.

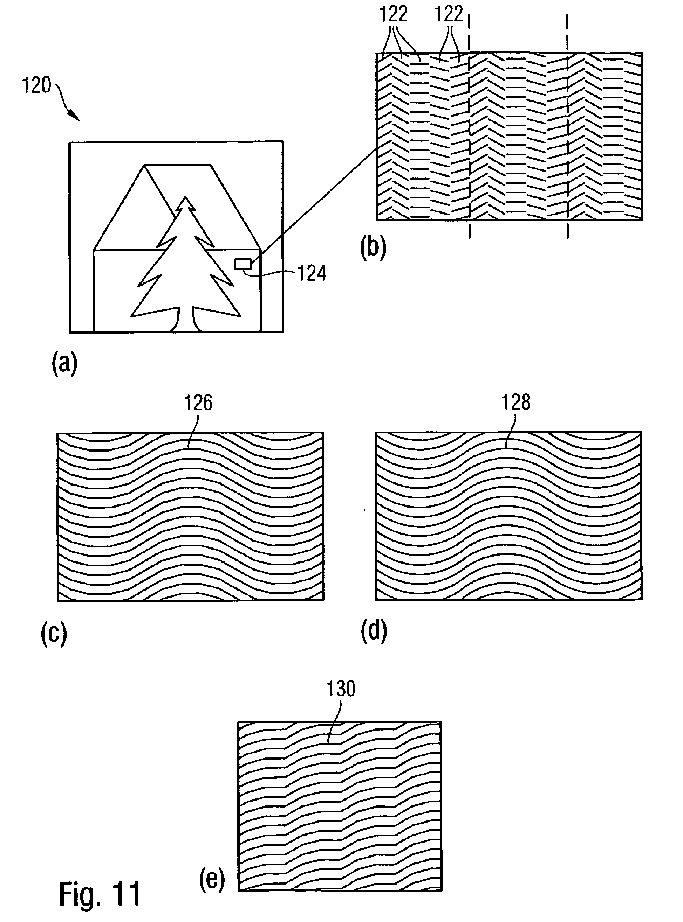

Fig.11 zeigt ein Beispiel eines Gitterbildes, das beim seitlichen Kippen in einem breiten Winkelbereich von -30° bis 30° stets das gleiche Bild mit unverändertem Farbeindruck zeigt. Zur Illustration wird das aus Fig. 6 bekannte Bildmotiv "Haus mit Baum" verwendet, wie in Fig.11(a) gezeigt. Da ein einfaches Gitter nicht in allen seitlichen Kipprichtungen sichtbar ist, sind die Gitterbildbereiche "Dach", "Hauswand" und "Baum" jeweils aus einer Mehrzahl schmaler Streifen 122 zusammengesetzt, die den verschiedenen seitlichen Kippwinkeln, unter denen das Motiv erkennbar sein soll, zugeordnet sind. Fig.11(b) zeigt eine Streifenaufteilung in einem kleinen Ausschnitt 124 des Gitterbereichs "Hauswand", die eine sukzessive Abfolge von fünf Streifen für die seitlichen Kippwinkel +/-30°, 0°, und +/-15° darstellt. Die Streifenbreite eines einzelnen Streifens 122 beträgt dabei nur 20 μm, so dass eine vollständige Streifenperiode aus fünf Streifen mit einer Breite von 100 μm noch deutlich unterhalb des Auflösungsvermögens des Auges liegt. Die genauen Werte für die Gitterparameter sind für m=1, φ =40°, φ' = 0° und die angegebenen seitlichen Kippwinkel in Tabelle 5a aufgeführt.

**Tabelle 5a**

| Motiv | Farbe | λ [nm] | σ [°] | a[nm] | ω[°] |
|---|---|---|---|---|---|
| Hauswand | gelb | 580 | 30 | 531 | 53,9 |
| Hauswand | gelb | 580 | -30 | 531 | -53,9 |
| Hauswand | gelb | 580 | 0 | 902 | 0 |
| Hauswand | gelb | 580 | -15 | 735 | -35,4 |
| Hauswand | gelb | 580 | 15 | 735 | 35,4 |
| | | | | | und zyklisch |
| Dach | rot | 630 | 30 | 577 | 53,9 |
| Dach | rot | 630 | -30 | 577 | -53,9 |

(fortgesetzt)

| Motiv | Farbe | λ [nm] | σ [°] | a[nm] | ω[°] |
|---|---|---|---|---|---|
| Dach | rot | 630 | 0 | 980 | 0 |
| Dach | rot | 630 | -15 | 799 | -35,4 |
| Dach | rot | 630 | 15 | 799 | 35,4 |
| und zyklisch | | | | | |
| Baum | grün | 530 | 30 | 485 | 53,9 |
| Baum | grün | 530 | -30 | 485 | -53,9 |
| Baum | grün | 530 | 0 | 825 | 0 |
| Baum | grün | 530 | -15 | 672 | -35,4 |
| Baum | grün | 530 | 15 | 672 | 35,4 |
| und zyklisch | | | | | |

Bei dem fertigen Gitterbild sieht man bei seitlichem Kippen zwischen -30˚ und +30˚ unverändert farbig erscheinende Bereiche im Motiv der Fig. 11(a), wenn Lichteinfallsrichtung und Betrachtungsrichtung beibehalten werden. Im genannten Winkelbereich bleibt beispielsweise das Hausdach trotz Kippens stets sichtbar und erscheint rot, die Hauswand gelb und der Baum grün, da für jeden seitlichen Kippwinkel die zugehörigen Streifen 122 aufleuchten. Die Schrittweite von 15˚ ist nur beispielhaft gewählt, die Winkelabstände zwischen benachbarten Streifen können selbstverständlich auch kleiner sein, um einen fließenden Übergang zu erzeugen.

Wie in Fig.11(c) gezeigt, können die schmalen Streifen auch so nebeneinander angeordnet werden, dass die Gitterlinien Polygonzüge 126 bilden. Durch die geringe Anzahl von Gitterlinienendpunkten erscheint ein solches Gitterbild bei Betrachtung besonders farbintensiv. Die entsprechende Sortierung der Gitterparameter ist in Tabelle 5b angegeben.

**Tabelle 5b**

| Motiv | Farbe | λ [nm] | σ [°] | a[nm] | ω [°] |
|---|---|---|---|---|---|
| Hauswand | gelb | 580 | -30 | 531 | -53,9 |
| Hauswand | gelb | 580 | -15 | 735 | -35,4 |
| Hauswand | gelb | 580 | 0 | 902 | 0 |
| Hauswand | gelb | 580 | 15 | 735 | 35,4 |
| Hauswand | gelb | 580 | 30 | 531 | 53,9 |
| und zyklisch | | | | | |
| Dach | rot | 630 | -30 | 577 | -53,9 |
| Dach | rot | 630 | -15 | 799 | -35,4 |
| Dach | rot | 630 | 0 | 980 | 0 |
| Dach | rot | 630 | 15 | 799 | 35,4 |
| Dach | rot | 630 | 30 | 577 | 53,9 |
| und zyklisch | | | | | |
| Baum | grün | 530 | -30 | 485 | -53,9 |
| Baum | grün | 530 | -15 | 672 | -35,4 |
| Baum | grün | 530 | 0 | 825 | 0 |
| Baum | grün | 530 | 15 | 672 | 35,4 |
| Baum | grün | 530 | 30 | 485 | 53,9 |
| und zyklisch | | | | | |

Anstelle der Polygonzüge 126 können auch entsprechend angepasste glatte Kurvenzüge, beispielsweise Sinuskurvenzüge 128, verwendet werden, wie in Fig.11(d) dargestellt.

Soll das Mischgitter nur in einem eingeschränkten Winkelbereich sichtbar und farbkonstant sein, so werden nur die zu diesem Winkelbereich gehörenden Streifen ausgeführt, wie durch die Kurvenzüge 130 der Fig. 11(e) gezeigt und in der Tabelle 5c angegeben.

Tabelle 5c

| Motiv | Farbe | $\lambda$ [nm] | $\sigma$ [°] | a[nm] | $\omega$ [°] |
|---|---|---|---|---|---|
| Hauswand | gelb | 580 | 30 | 531 | 53,9 |
| Hauswand | gelb | 580 | 15 | 735 | 35,4 |
| Hauswand | gelb | 580 | 0 | 902 | 0 |
| | | | | und zyklisch | |
| Dach | rot | 630 | 30 | 577 | 53,9 |
| Dach | rot | 630 | 15 | 799 | 35,4 |
| Dach | rot | 630 | 0 | 980 | 0 |
| | | | | und zyklisch | |
| Baum | grün | 530 | 30 | 485 | 53,9 |
| Baum | grün | 530 | 15 | 672 | 35,4 |
| Baum | grün | 530 | 0 | 825 | 0 |
| | | | | und zyklisch | |

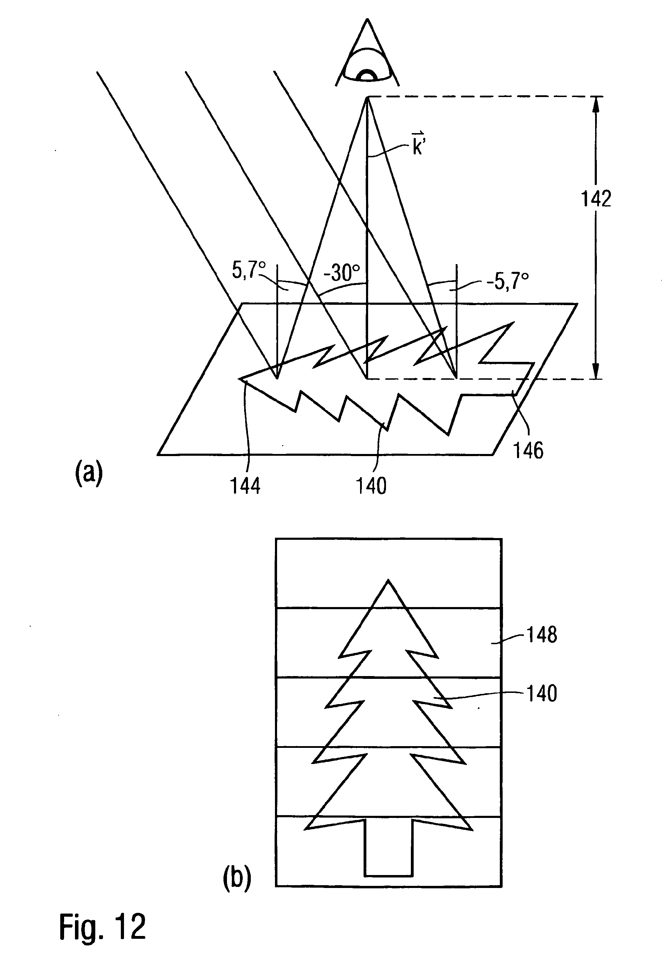

Ein weiteres Beispiel ist in Fig. 12 gezeigt. Wie in Fig. 12(a) illustriert, erscheinen einem Betrachter bei einem vertikal ausgedehnten Bildmotiv 140 aus kurzem Betrachtungsabstand 142 die oberen Bildbereiche 144 unter einem etwas anderen Betrachtungswinkel als die unteren Bildbereiche 146. Wird in diesem Fall zur Bestimmung der Gitterparameter nur der mittlere Betrachtungsvektor $\vec{k}'$ verwendet, kann es im oberen und unteren Bildbereich zu Farbverschiebungen kommen. Ist etwa das Bildmotiv 140 "Baum" 4 cm hoch und für einen Betrachtungsabstand von 20 cm entworfen, so erscheint die mittlere Bildpartie unter einem Betrachtungswinkel $\varphi' = 0°$, die obere Baumspitze dagegen unter einem Betrachtungswinkel von $\varphi' = \arctan(2\ cm/20cm) = 5,71°$, und der unterste Baumteil unter einem Betrachtungswinkel von $\varphi' = -5,71°$. Wird der zugehörige Gitterbildbereich 140 für einen Beleuchtungswinkel $\varphi = 40°$, einen seitlichen Kippwinkel $\sigma = 0°$ und den mittleren Betrachtungswinkel $\varphi' = 0°$ berechnet, so ergeben sich aus der Beziehung (1) die in Tabelle 6a angegebenen Farben für die verschiedene Teile des Baums.

**Tabelle 6a**

| Motiv | a[nm] | $\varphi'$ [°] | $\lambda$ [nm] | Farbe |
|---|---|---|---|---|
| Baumspitze | 1060 | 5,7 | 635 | rot |
| Über der Mitte | 1060 | 2,8 | 582 | orangerot |
| Baummitte | 1060 | 0 | 530 | grün |
| Unter der Mitte | 1060 | -2,8 | 478 | blaugrün |
| Baumfuß | 1060 | -5,7 | 425 | blau |

Während die mittlere Baumpartie wie gewünscht grün erscheint, ergibt sich für die Baumspitze eine zu große Wellenlänge (rot) und für den unteren Baumteil eine zu kleine Wellenlänge (blau).

Soll der Baum 140 aus dem Betrachtungsabstand von 20 cm überall grün erscheinen, so wird sein Bildbereich in eine Mehrzahl von Teilbereichen 148 unterteilt, wie in Fig.12(b) gezeigt. Für jeden dieser Teilbereiche wird jeweils unter Zugrundelegung des lokalen Betrachtungswinkels die zugehörige Gitterkonstante und der Azimutwinkel berechnet. Das Ergebnis für eine Unterteilung in fünf Teilbereiche ist in Tabelle 6b zusammengefasst.

**Tabelle 6b**

| Motiv | φ' [°] | λ [nm] | Farbe | a[nm] |
|---|---|---|---|---|
| Baumspitze | 5,7 | 530 | grün | 884 |
| Über der Mitte | 2,8 | 530 | grün | 966 |
| Baummitte | 0 | 530 | grün | 1060 |
| Unter der Mitte | -2,8 | 530 | grün | 1175 |
| Baumfuß | -5,7 | 530 | grün | 1323 |

Das Beispiel der Fig. 12 bezieht sich zunächst auf ein Gitterbild, das unter einem Kippwinkel von 0° sichtbar ist. In gleicher Weise können Gitterbilder erzeugt werden, deren Gitterbildbereiche bei einem bestimmten seitlichen Kippwinkel einen konstanten vertikalen Farbeindruck erzeugen. Die Tabellen 7a und 7b geben die Ergebnisse einer Rechnung mittels Beziehung (1) für das Gitterbild der Fig. 12(a) und einen seitlichen Kippwinkel von 15° an. Tabelle 7a zeigt dabei die Farbeindrücke, wie sie bei einem konstanten Azimutwinkel ω ohne Korrektur erscheinen, während Tabelle 7b die Gitterparameter auflistet, die sich bei einer Unterteilung des Bildmotivs 140 in fünf Teilbereiche ergeben.

**Tabelle 7a**

| Motiv | a[nm] | φ' [°] | ω (°) | σ (°) | λ [nm] | Farbe |
|---|---|---|---|---|---|---|
| Baumspitze | 762 | 5.7 | 44 | 18.12 | 635 | rot |
| Über der Mitte | 762 | 2.8 | 44 | 16.51 | 581 | gelb |
| Baummitte | 762 | 0 | 44 | 15.00 | 530 | grün |
| Unter der Mitte | 762 | -2.8 | 44 | 13.51 | 478 | blaugrün |
| Baumfuß | 762 | -5.7 | 44 | 12.00 | 424 | blau |

**Tabelle 7b**

| Motiv | φ' [°] | λ [nm] | Farbe | σ (°) | ω (°) | a[nm] |
|---|---|---|---|---|---|---|
| Baumspitze | 5,7 | 530 | grün | 15 | 38.79 | 689.30 |
| Über der Mitte | 2,8 | 530 | grün | 15 | 41.33 | 725.15 |
| Baummitte | 0 | 530 | grün | 15 | 44.01 | 762.41 |
| Unter der Mitte | -2,8 | 530 | grün | 15 | 46.93 | 802.21 |
| Baumfuß | -5,7 | 530 | grün | 15 | 50.25 | 845.90 |

Bei den bisher beschriebenen Beispielen erscheinen die Bildbereiche stets in einer durch eine bestimmte Wellenlänge λ gegebenen Spektralfarbe. Es ist jedoch in allen Beispielen auch möglich, die Bildbereiche in einer Mischfarbe oder "Echtfarbe" erscheinen zu lassen, die eine Mischung von Grundfarben darstellt. Die grundsätzliche Vorgehensweise wird am Beispiel des RGB-Systems erläutert, wobei wir als Grundfarben Rot (630 nm), Grün (530 nm) und Blau (460 nm) verwenden.

**Tabelle 8**

| Farbe | λ [nm] | ω (°) | a[nm] | Weiß | Hautfarben |
|---|---|---|---|---|---|
| Rot | 630 | 35,4 | 799 | R =1 | R =1 |
| Grün | 530 | 35,4 | 672 | G =1 | G = 0,75 |
| Blau | 460 | 35,4 | 583 | B =1 | B = 0,7 |

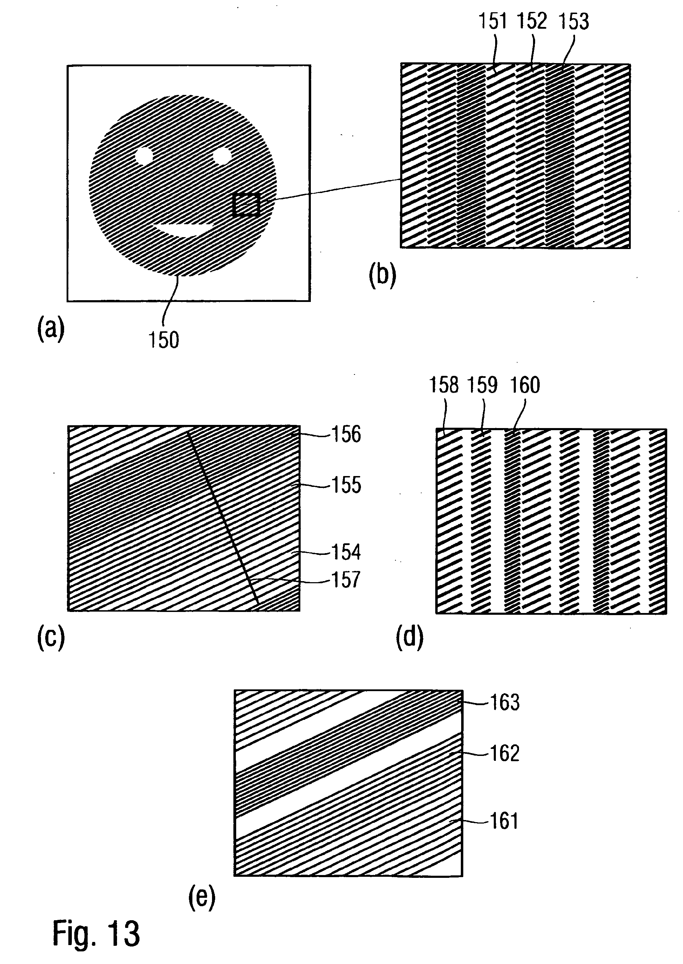

Soll ein Bildbereich 150 (Fig.13(a)) beispielsweise unter einem seitlichen Kippwinkel von 15° in Weiß mit den RGB-Werten (1;1;1) erscheinen, so wird die zugehörige Gitterfläche in Unterbereiche zerlegt, die durch drei Typen schmaler Streifen 151,152 und 153 für die drei Grundfarben Rot, Grün und Blau gebildet sind, wie in Fig.13(b) gezeigt. Jeder der Streifen 151-153 wird entsprechend dem gewünschten Kippwinkel, hier 15°, und der jeweiligen Spektralfarbe mit einem Gittermuster belegt. Grundsätzlich werden die drei Streifentypen gleich breit ausgeführt, so dass sich als Mischfarbe Weiß ergibt. Weisen die Gitterbilder aufgrund der Produktionsbedingungen bei gleich breiten Streifen einen Farbstich auf, so kann dieser durch eine Verringerung oder Vergrößerung der Breite der entsprechenden Farbstreifen ausgeglichen werden. Beispielsweise kann ein Rotstich oder ein Blau-Grün-Stich durch eine Verkleinerung bzw. eine Verbreitung der Rot-Streifen ausgeglichen werden.

Bei einer besonders vorteilhaften Aufteilung in Unterbereiche 154-156 erfolgt die Streifenaufteilung parallel zu den Gitterlinien, wie in Fig. 13(c) gezeigt.

Die Anzahl der Gitterlinienendpunkte wird dadurch minimiert. Die Zahl der jeweils verwendeten parallelen Gitterlinien wird so gewählt, dass im Wesentlichen gleich große Flächen für die Grundfarben Rot, Grün und Blau entstehen. Beispielsweise erhält man bei Gitterkonstanten von 799 nm, 672 nm und 583 nm für Rot, Grün und Blau (Tabelle 8) etwa gleich große Streifenbreiten, wenn man 49 Gitterlinien mit 786 nm, 58 Gitterlinien mit 672 nm und 66 Gitterlinien mit 583 nm verwendet. Die Gesamtbreite 157 der drei Streifentypen 154-156 beträgt dann knapp 120 μm und liegt damit noch unterhalb des Auflösungsvermögens des Auges.

Soll ein Bereich in einer anderen Echtfarbe als Weiß erscheinen, beispielsweise mit einer Hautfarbe mit RGB-Werten (1; 0,75; 0,7), so werden die Unterbereiche 158-160, wie in Fig. 13(d) gezeigt, entsprechend dem RGB-Wert für die jeweilige Grundfarbe nur teilweise gefüllt. Bei der genannten Hautfarbe (1; 0,75; 0,7) wird beispielsweise der für Rot vorgesehene Unterbereich 158 vollständig, der für Grün vorgesehene Unterbereich 159 zu 75% und der für Blau 160 vorgesehene Unterbereich zu 70% mit dem Gittermuster gefüllt. Die verbleibenden Flächen der Unterbereiche werden nicht belegt und bleiben bei Beleuchtung daher dunkel, so dass sich in Summe für das Auge gerade die Farbe mit dem gewünschten RGB-Wert ergibt. Auch in diesem Fall kann die Streifenaufteilung in Unterbereiche 161-163 parallel zu den Gitterlinien erfolgen, wie in Fig. 13(e) gezeigt.

Neben der Aufteilung in senkrechte und gitterparallele Streifen kommt selbstverständlich auch eine Aufteilung in beliebig geformte Unterbereiche in Frage. Wichtig ist lediglich, dass die Unterbereiche für Rot, Grün und Blau zusammengenommen so klein sind, dass sie vom Auge nicht aufgelöst werden können. Auch bei unregelmäßiger Form der Unterbereiche muss das Flächenverhältnis der mit einem Gittermuster belegten Bereiche und der unbelegten Bereiche dem durch den RGB-Wert angegebenen Verhältnis entsprechen.

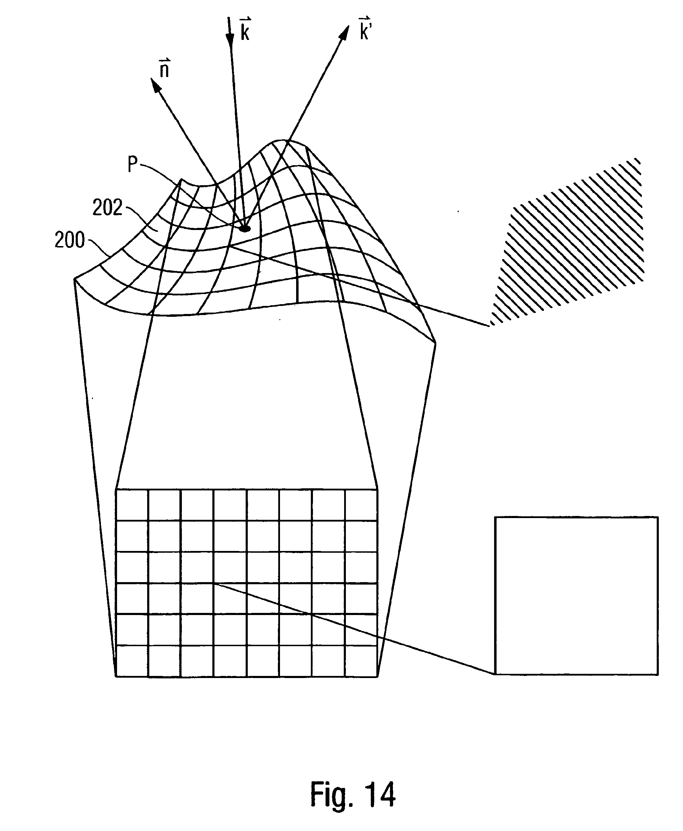

Neben den bisher beschriebenen ebenen Gitterbildern lassen sich mit dem erfindungsgemäßen Verfahren auch gekrümmte Gitterbilder erzeugen. Bei gekrümmten Gitterbildern ist der Normalenvektor anders als bei ebenen Gitterbildern keine Konstante mehr, sondern variiert über die Fläche des Gitterbilds. Wie in Fig. 14 illustriert, wird zur Berechnung eines gekrümmten Gitterbilds daher jeder Gitterbildbereich 200 in kleine Unterbereiche 202 aufgeteilt, innerhalb derer der Normalenvektor $\vec{n}(\vec{r})$ für einen Bezugsaufpunkt P mit den Koordinaten $\vec{r} = (x_0, y_0, z_0)$ in guter Näherung als konstant aufgefasst werden kann.

Für jeden dieser Unterbereiche 202 kann dann die Berechnung von Gitterkonstante a und Azimutwinkel ω in der für ebene Gitterbilder beschriebenen Art unter Verwendung des lokalen Normalenvektors $\vec{n}(\vec{r})$ durchgeführt werden.

Im allgemeinsten Fall kann bei der Berechnung weiter berücksichtigt werden, dass bei einem ausgedehnten Gitterbild und endlichem Abstand von Lichtquelle und Betrachter sowohl der Beleuchtungsvektor als auch der Betrachtungsvektor von der Position des jeweiligen Unterbereichs im Gitterbild abhängen, also durch örtlich variierende Vektoren $\vec{k}(\vec{r})$ bzw. $\vec{k}'(\vec{r})$ gegeben sind. Die oben angegebene Beziehung (1) stellt sich dann in der allgemeineren Form

$$\vec{n}(\vec{r}) \times \left( \vec{k}'(\vec{r}) - \vec{k}(\vec{r}) \right) = m\vec{g} \qquad (2)$$

dar.

Die Beziehung (2) kann selbstverständlich auch für die Berechnung ebener Gitterbilder verwendet werden, wobei der Normalenvektor $\vec{n}(\vec{r})$ in diesem Fall konstant ist und nur der Beleuchtungsvektor und der Betrachtungsvektor über der Fläche des Gitterbilds variieren.

Die Vektoren $\vec{k}(\vec{r})$ und $\vec{k}'(\vec{r})$ lassen sich aus den Koordinaten des jeweiligen Bezugsaufpunkts $\vec{r} = (x_0, y_0, z_0)$, den Koordinaten der Lichtquelle (dem Beleuchtungspunkt) $\vec{r}_1 = (x_1, y_1, z_1)$ und den Koordinaten des betrachtenden Auges (dem Betrachtungspunkt) $\vec{r}_2 = (x_2, y_2, z_2)$ berechnen:

$$\vec{k}(\vec{r}) = \frac{2\pi}{\lambda} \cdot \frac{\begin{pmatrix} x_0 - x_1 \\ y_0 - y_1 \\ z_0 - z_1 \end{pmatrix}}{\left\| \begin{pmatrix} x_0 - x_1 \\ y_0 - y_1 \\ z_0 - z_1 \end{pmatrix} \right\|}$$

$$\vec{k}'(\vec{r}) = \frac{2\pi}{\lambda} \cdot \frac{\begin{pmatrix} x_2 - x_0 \\ y_2 - y_0 \\ z_2 - z_0 \end{pmatrix}}{\left\| \begin{pmatrix} x_2 - x_0 \\ y_2 - y_0 \\ z_2 - z_0 \end{pmatrix} \right\|}$$

Es versteht sich, dass der Beleuchtungspunkt und/ oder der Betrachtungspunkt auch im Unendlichen liegen können, was gerade den weiter oben im Detail beschriebenen Grenzfall eines über die Gitterfläche konstanten Beleuchtungsvektors $\vec{k}$ bzw. eines konstanten Betrachtungsvektors $\vec{k}'$ reproduziert.

Ist die gekrümmte Oberfläche des Gitterbilds allgemein durch eine Fläche $f(x, y, z) = 0$ gegeben, so lässt sich der lokale Normalenvektor $\vec{n}(\vec{r})$ schreiben als

$$\vec{n}(\vec{r}) = \begin{pmatrix} \frac{\partial f}{\partial x}(x_0, y_0, z_0) \\ \frac{\partial f}{\partial y}(x_0, y_0, z_0) \\ \frac{\partial f}{\partial z}(x_0, y_0, z_0) \end{pmatrix} / \sqrt{\frac{\partial f}{\partial x}(x_0, y_0, z_0)^2 + \frac{\partial f}{\partial y}(x_0, y_0, z_0)^2 + \frac{\partial f}{\partial z}(x_0, y_0, z_0)^2}$$

Die Berechnung mit der Beziehung (2) liefert dann für jeden der Unterbereiche des Gitterbilds einen Gittervektor $\vec{g}$ in Form eines Zahlentripels $\vec{g} = (g_x, g_y, g_z)$. Daraus erhält man die Gitterkonstante

$$a = \frac{2\pi}{\sqrt{g_x^2 + g_y^2 + g_z^2}}$$

Die Richtung des Gittervektors ist durch den Pfeil vom Nullpunkt zu dem Punkt, der durch die Koordinaten $(g_x, g_y, g_z)$ definiert ist, gegeben. Mit der Gitterkonstante a, der Richtung des Gittervektors und der Richtung des Gitternormalenvektors $\vec{n}(\vec{r})$ ist das Gitter für jeden Unterbereich vollständig beschrieben.

Soll das gekrümmte Gitter in unterschiedlichen Orientierungen mehrere Bilder zeigen, beispielsweise in Form eines Wechselbilds, eines Bewegungsbilds, eines Pumpbilds, eines Stereobilds oder dergleichen, so können die oben genannten Unterbereiche 202 in eine entsprechende Anzahl an Teilbereichen zerlegt werden. Für jeden der Teilbereiche werden die Gitterparameter für die jeweilige Betrachtungssituation, also die Orientierung des Gitterbilds, in der das jeweilige Bild sichtbar sein soll, berechnet und die Teilbereiche entsprechend den berechneten Gitterparametern mit Gittermustern belegt.

Die verschiedenen Orientierungen des Gitterbilds können in die Berechnung nach Beziehung (2) dadurch eingeführt werden, dass jeder Unterbereich U mit einer Bewegungstransformation, insbesondere mit einer Drehung, einer Spiegelung, einer Verschiebung oder einer Kombination dieser Bewegungselemente, in einen transformierten Unterbereich Tr(U) überführt wird. Die oben beschriebene Berechnung der Gitterparameter wird dann statt für den Unterbereich U für den transformierten Unterbereich Tr(U) durchgeführt. Alternativ kann auch der Unterbereich festgehalten und die Koordinaten von Lichtquelle und Betrachter transformiert werden.

Besteht beispielsweise die veränderte Orientierung des Gitterbilds in einer Drehung aus der Ausgangslage, die sich durch eine Drehmatrix S beschreiben lässt, so wird die Berechnung statt für den Bezugsaufpunkt r des Unterbereichs U mit dem transformierten Bezugsaufpunkt $Tr(\vec{r}) = S \cdot \vec{r}$ des transformierten Unterbereichs Tr(U) durchgeführt. Der lokale Normalenvektor und die lokalen Beleuchtungs- und Betrachtungsvektoren für den transformierten Unterbereich ergeben sich entsprechend zu

$$\vec{n} = S \cdot \begin{pmatrix} \frac{\partial f}{\partial x}(x_0, y_0, z_0) \\ \frac{\partial f}{\partial y}(x_0, y_0, z_0) \\ \frac{\partial f}{\partial z}(x_0, y_0, z_0) \end{pmatrix} / \sqrt{\frac{\partial f}{\partial x}(x_0, y_0, z_0)^2 + \frac{\partial f}{\partial y}(x_0, y_0, z_0)^2 + \frac{\partial f}{\partial z}(x_0, y_0, z_0)^2}$$

$$\vec{k} = \frac{2\pi}{\lambda} \cdot \frac{S \cdot \begin{pmatrix} x_0 \\ y_0 \\ z_0 \end{pmatrix} - \begin{pmatrix} x_1 \\ y_1 \\ z_1 \end{pmatrix}}{\left| S \cdot \begin{pmatrix} x_0 \\ y_0 \\ z_0 \end{pmatrix} - \begin{pmatrix} x_1 \\ y_1 \\ z_1 \end{pmatrix} \right|}$$

$$\vec{k}' = \frac{2\pi}{\lambda} \cdot \frac{\begin{pmatrix} x_2 \\ y_2 \\ z_2 \end{pmatrix} - S \cdot \begin{pmatrix} x_0 \\ y_0 \\ z_0 \end{pmatrix}}{\left| \begin{pmatrix} x_2 \\ y_2 \\ z_2 \end{pmatrix} - S \cdot \begin{pmatrix} x_0 \\ y_0 \\ z_0 \end{pmatrix} \right|}$$

Analog ergeben sich, falls die veränderte Orientierung in einer Verschiebung des Gitterbilds besteht, die durch einen Verschiebungsvektor $t = (t_x, t_y, t_z)$ beschrieben wird, der lokale Normalenvektor und die lokalen Beleuchtungs- und Betrachtungsvektoren zu

$$\vec{n} = \begin{pmatrix} \frac{\partial f}{\partial x}(x_0, y_0, z_0) \\ \frac{\partial f}{\partial y}(x_0, y_0, z_0) \\ \frac{\partial f}{\partial z}(x_0, y_0, z_0) \end{pmatrix} / \sqrt{\frac{\partial f}{\partial x}(x_0, y_0, z_0)^2 + \frac{\partial f}{\partial y}(x_0, y_0, z_0)^2 + \frac{\partial f}{\partial z}(x_0, y_0, z_0)^2}$$

$$\vec{k} = \frac{2\pi}{\lambda} \cdot \frac{\begin{pmatrix} x_0 + t_x - x_1 \\ y_0 + t_y - y_1 \\ z_0 + t_z - z_1 \end{pmatrix}}{\left\| \begin{pmatrix} x_0 + t_x - x_1 \\ y_0 + t_y - y_1 \\ z_0 + t_z - z_1 \end{pmatrix} \right\|} \qquad \vec{k}' = \frac{2\pi}{\lambda} \cdot \frac{\begin{pmatrix} x_2 - x_0 - t_x \\ y_2 - y_0 - t_y \\ z_2 - z_0 - t_z \end{pmatrix}}{\left\| \begin{pmatrix} x_2 - x_0 - t_x \\ y_2 - y_0 - t_y \\ z_2 - z_0 - t_z \end{pmatrix} \right\|}$$

Zylindrisch gekrümmte Flächen, wie etwa Dosen oder Flaschen stellen eine für die Anwendung besonders wichtige Untergattung gekrümmter Flächen dar. Zudem erlauben sie, wie nachfolgend im Detail dargestellt, eine einfache und effektive Berechnung der darauf angebrachten gekrümmten Gitterbilder.

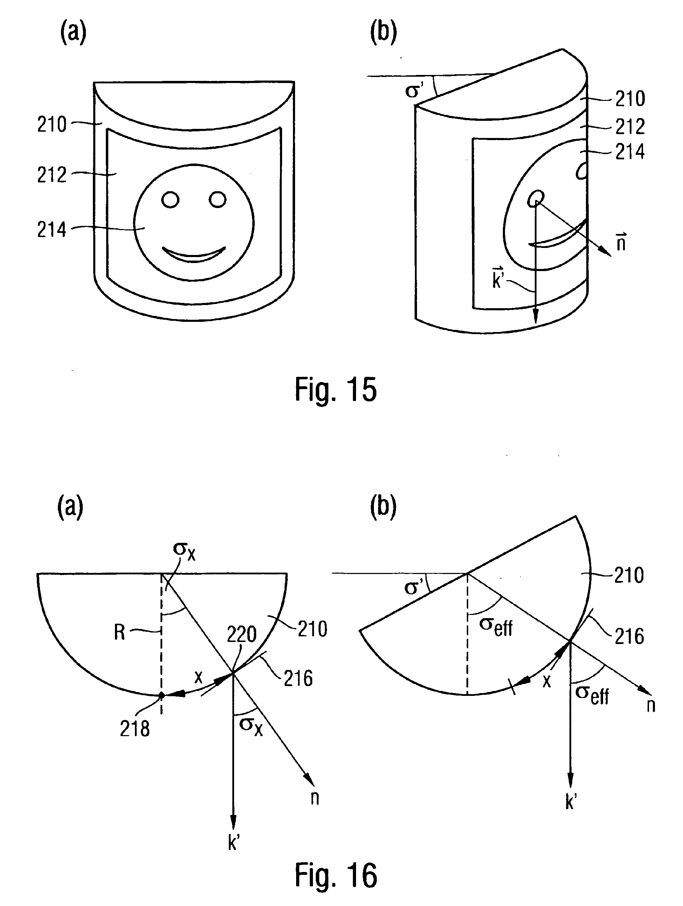

Fig. 15 zeigt die vordere Hälfte einer Dose 210, mit einer zylindrisch gekrümmten Oberfläche, auf der ein Gitterbild 212 mit der Darstellung eines lachenden Gesichts 214 angeordnet ist, das einschließlich seiner seitlichen, vom Betrachter wegweisenden Partien von vorne sichtbar sein soll, wie in Fig. 15(a) gezeigt. Fig.15(b) zeigt die Dose 210 nach einer Drehung aus der Ausgangslage um einen Winkel σ'. Soll das Gesicht 214 auch aus dieser (und gegebenenfalls einer oder mehreren weiteren) Betrachtungsrichtung erkennbar sein, muss das Gitterbild 212 jeweils eine entsprechende Anzahl von Teilbereichen aufweisen, die das Gesicht 214 bei Beleuchtung in die jeweilige Betrachtungsrichtung rekonstruieren.

Die für die Berechnung von Gitterbildern auf zylindrisch gekrümmten Flächen relevanten Größen sind in Fig. 16 dargestellt. Bei Betrachtung der zylindrischen Fläche 210 von vorne lässt sich jeder Unterbereich 216 durch die Angabe der Bogenlänge x von einem Bezugspunkt 218 zu dem Bezugsaufpunkt 220 des Unterbereichs 216 charakterisieren. Der Normalenvektor $\vec{n}(\vec{r})$ des Unterbereichs 216 schließt dann mit dem Betrachtungsvektor $\vec{k}$, der im Beispiel als über der Fläche des Gitterbilds konstant betrachtet wird, im Bogenmaß einen Winkel $\sigma_x = x/2\pi R$ ein, wobei R den Zylinderradius darstellt.

Wird die zylindrische Fläche 210 zusätzlich um einen Winkel σ' um die Zylinderachse gedreht, so schließen der Normalenvektor und der Betrachtungsvektor einen Winkel $\sigma_{eff}$ ein, der im Bogenmaß durch $\sigma_{eff} = \sigma_x + \sigma'$ gegeben ist. $\sigma_{eff}$ setzt sich aus einem Winkelanteil $\sigma_x$, der sich aus der Krümmung der Bildfläche ergibt, und dem Drehwinkel σ' , um den die Bildfläche als Ganzes gedreht ist, zusammen.

Diese Betrachtungsweise hat den Vorteil, dass nunmehr wie bei den oben ausführlich beschriebenen ebenen Gitterbildern weiterverfahren werden kann, wobei lediglich der dort auftretende Kippwinkel σ für jeden Unterbereich durch den "effektiven Kippwinkel" $\sigma_{eff}$ ersetzt werden muss.

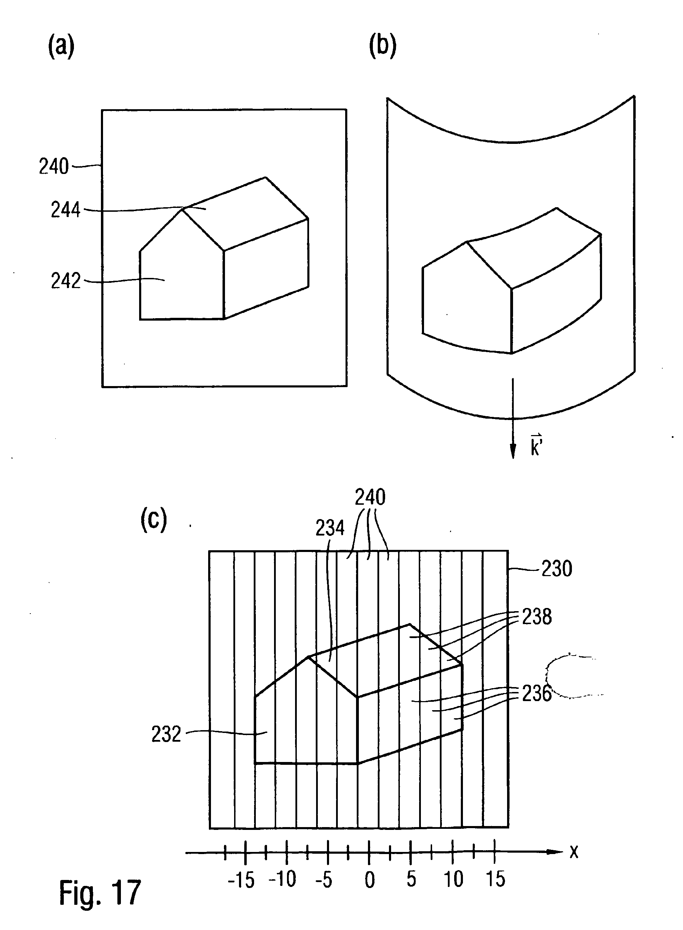

Zur Illustration der Vorgehensweise zeigt Fig. 17(a) ein einfaches vorgegebenes Bild 240, das ein Haus mit zwei Bildbereichen, nämlich einer gelben Hauswand 242 und einem roten Hausdach 244 enthält. Im einfachsten Fall soll das zylindrisch gekrümmte Bild, wie in Fig. 17(b) dargestellt, nur in einer einzigen Orientierung des Gitterbilds, nämlich direkt von vorne sichtbar sein, so dass die Berechnung mit σ'=0, also mit $\sigma_{eff} = \sigma_x$ erfolgt.

Das Gitterbild 230 weist dazu Gitterbildbereiche 232 und 234 auf, die den Bildbereichen 242 bzw. 244 zugeordnet sind und die bei Beleuchtung die Hauswand bzw. das Hausdach rekonstruieren. Um der Krümmung der Bildfläche Rechnung zu tragen, sind die Gitterbildbereiche 232 und 234 jeweils in eine Mehrzahl von Unterbereichen 236 bzw. 238 unterteilt. Form und Größe der Unterbereiche sind so gewählt, dass der oben definierte effektive Kippwinkel $\sigma_{eff}$ innerhalb jedes Unterbereichs in guter Näherung als konstant angenommen werden kann. Dies kann aufgrund der vorgesehenen zylindrischen Krümmung des Gitterbilds durch eine Aufteilung in parallele schmale Streifen 240 erreicht werden.

Für jeden der Unterbereiche wird nun der effektive Kippwinkel $\sigma_{eff}$ bestimmt und die Farbe, in der der Unterbereich erscheinen soll, festgelegt. Die zum Gitterbildbereich 232 gehörenden Unterbereiche 236 sollen im Beispiel Gelb (λ = 580 nm), die zum Gitterbildbereich 234 gehörenden Unterbereiche 238 Rot (λ = 630 nm) erscheinen. Nun werden aus diesen Angaben unter Verwendung der Beziehung (1) wie für ebene Gitterbilder die Gitterkonstante a und die Winkelorientierung ω für jeden der Unterbereiche berechnet. Die Ergebnisse der Berechnung für die erste Beugungsordnung m=1 sind in Tabelle 9 zusammengefasst.

**Tabelle 9**

| Motiv | Farbe | $\lambda$[nm] | $\sigma_{eff}$[°] | a[nm] | $\omega$[°] |
|-------|-------|------|---------|-------|-------|
| Hausdach | rot | 630 | -60.0 | 354.9 | -56.31 |
| Hausdach | rot | 630 | -30.0 | 483.6 | -40.89 |
| Hausdach | rot | 630 | 0.0 | 639.7 | 0.00 |
| Hausdach | rot | 630 | 30.0 | 483.6 | 40.89 |
| Hausdach | rot | 630 | 60.0 | 354.9 | 56.31 |
| Hauswand | gelb | 580 | -60.0 | 326.7 | -56.31 |
| Hauswand | gelb | 580 | -30.0 | 445.2 | -40.89 |
| Hauswand | gelb | 580 | 0.0 | 588.9 | 0.00 |
| Hauswand | gelb | 580 | 30.0 | 445.2 | 40.89 |
| Hauswand | gelb | 580 | 60.0 | 326.7 | 56.31 |

Das Bild 240 des Hauses ist nach dem Aufbringen des Gitterbilds 230 auf die zylindrisch gekrümmte Fläche nur in der gewählten Orientierung σ'=0 sichtbar. Das Bild 240 ist darüber hinaus entsprechend der Krümmung der zylindrischen Fläche in den seitlichen Partien verzerrt.

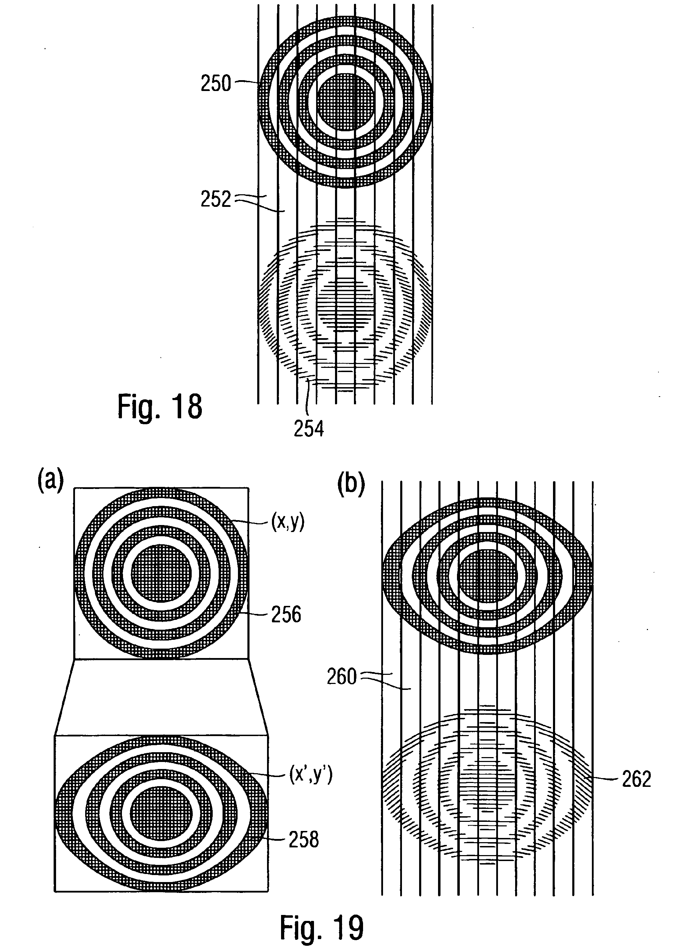

Gemäß einem weiteren Beispiel kann das Gitterbild auch so berechnet und erzeugt werden, dass das vorgegebene Bild bei Betrachtung wie ein ebenes Bild erscheint, obwohl es auf einer gekrümmten Fläche aufgebracht ist. Die prinzipielle Vorgehensweise wird mit Bezug auf die Figuren 18 und 19, wiederum anhand einer zylindrisch gekrümmten Fläche erläutert.

Zunächst zeigt Fig. 18 für eine Reihe konzentrischer Kreise 250 nochmals die Aufteilung in Unterbereiche (Streifen) 252 und die Belegung der Unterbereiche mit Gittermustern 254, deren Gitterparameter (a, ω) durch den jeweiligen effektiven Kippwinkel der Streifen und die Farbe der Kreisstrukturen gegeben ist. Auf eine zylindrische Fläche aufgebracht, sind die Kreisstrukturen 250 von vorne sichtbar und erscheinen entsprechend der Zylinderkrümmung verzerrt.

Sollen die Kreisstrukturen 250 nach dem Aufbringen des Gitterbilds auf der Zylinderfläche eben erscheinen, so müssen sie, wie in Fig. 19(a) gezeigt, vor der Zerlegung des Gitterbilds in Unterbereiche entsprechend transformiert werden. Dazu werden die Bildpunkte (x, y) eines Originalbildbereichs 256 durch Bildpunkte (x', y') des transformierten Bildbereichs 258 ersetzt, wobei die transformierten Bildpunkte durch

$$(x', y') = (R*\arcsin(x/R), y)$$

mit dem Zylinderradius R gegeben sind.

Anschließend werden die transformierten Bildbereiche wie in Fig.18 in Streifen 260 zerlegt, die Gitterparameter berechnet und die Streifen 260 mit Gittermustern 262 mit den berechneten Gitterparametern gefüllt. Auf eine zylindrische Fläche aufgebracht, sind die Kreisstrukturen 250 dann von vorne sichtbar und erscheinen trotz der Zylinderkrümmung unverzerrt als ebene Kreisstrukturen.

Es versteht sich, dass diese Vorgehensweise nicht nur bei zylinderförmig gekrümmten Flächen, sondern auch bei beliebig gekrümmten Flächen angewandt werden kann. Ein vorgegebenes ebenes Bild wird dazu beispielsweise mit seinen Bildbereichen aus einer Ebene senkrecht zur Betrachtungsrichtung auf die beliebig gekrümmte Fläche projiziert, so dass auf der gekrümmten Fläche transformierte Bildbereiche entstehen. Die Projektion kann für verschiedene Orientierungen der gekrümmten Fläche wiederholt werden. Mit den so erhaltenen transformierten Bildbereichen wird dann wie oben in Zusammenhang mit der Erzeugung von Gitterbildern auf beliebig gekrümmten Flächen weiterverfahren. Bei der Betrachtung in einer der vorgegebenen Orientierungen erscheint dann das vorgegebene Bild trotz der Krümmung des Gitterbilds unverzerrt. Auf diese Weise lassen sich überraschende Effekte erzeugen, da beispielsweise eine mit einem solchen Gitterbild versehene gewellte Oberfläche für einen Betrachter optisch flach erscheint, während eine Berührung die Wellenstruktur der Oberfläche offenbar werden lässt.

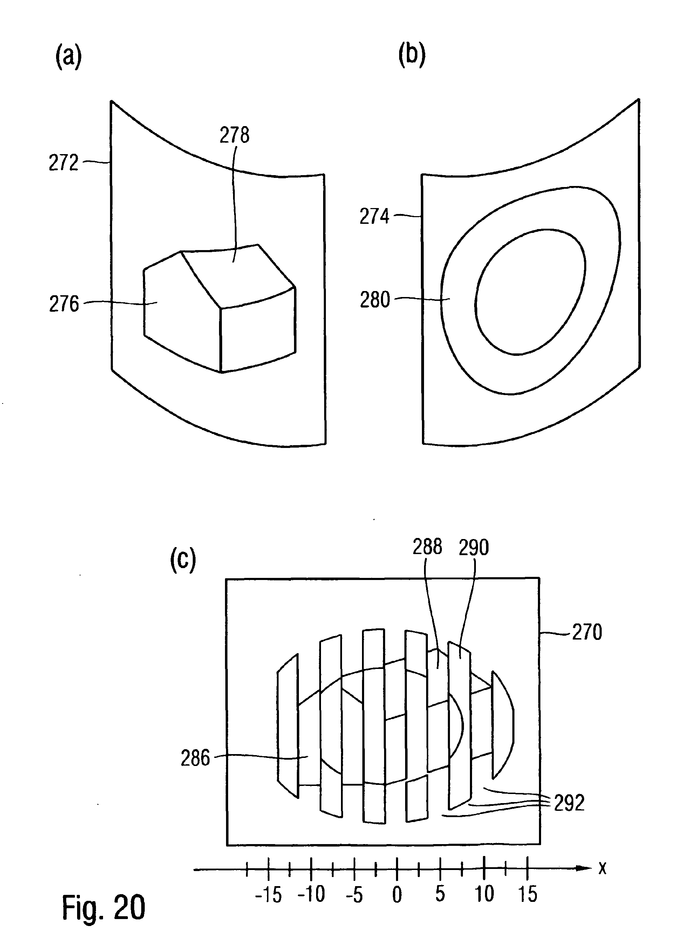

Mit Bezug auf Fig. 20 wird nun die Berechnung eines zylindrisch gekrümmten Wechselgitterbilds beschrieben. Das Gitterbild 270 stellt ein Wechselbild dar, das beim Drehen der zylindrischen Fläche, beispielsweise einer Dose, auf der es aufgebracht ist, unterschiedliche vorgegebene Bilder 272 und 274 zeigt. Im Beispiel sind der Einfachheit halber nur zwei verschiedene Bilder, ein Haus 272 (Fig. 20(a)) und ein Kreisring 274 (Fig. 20(b)) verwendet. Auch die Unterteilung in nur wenige Streifen dient lediglich der Übersichtlichkeit der Darstellung.

Zunächst wird für jedes der Bilder 272 und 274 festgelegt, in welcher Orientierung der zylindrischen Fläche sie sichtbar sein sollen. Im Beispiel soll das Bild 272 unter einem Drehwinkel von $\sigma'= 0°$ und das Bild 274 unter einem Drehwinkel von $\sigma'= -15°$ sichtbar sein, bei einem Beleuchtungswinkel von $\varphi = 40°$ und einem Betrachtungswinkel von $\varphi'= 20°$. Der Zylinderradius ist im Beispiel (z.B. Flaschenhals) R = 9.55 mm.

Dann werden die Farben festgelegt, unter denen die einzelnen Bildbereiche erscheinen sollen. Im Beispiel soll die Hauswand 276 Gelb ($\lambda = 580$ nm), das Hausdach 278 Rot ($\lambda = 630$ nm) und der Kreisring 280 Grün ($\lambda = 550$ mm) erscheinen.

Die den Bildbereichen 276, 278 und 280 zugeordneten Gitterbildbereiche 286, 288 bzw. 290 werden, wie in Zusammenhang mit Fig. 17 beschrieben, in Unterbereiche zerlegt, die durch einen konstanten effektiven Kippwinkel $\sigma_{eff}$ beschrieben werden können. Wie bei ebenen Gitterbildern werden die Unterbereiche dann in schmale Streifen 292 zerlegt und das Wechselgitterbild 270 wird alternierend aus den zu verschiedenen Bildern 272, 274 gehörenden Streifen 292 zusammengesetzt, wie in Fig. 20(c) gezeigt. In dem vereinfachten Beispiel der Fig. 20 fällt die Zerlegung in Unterbereiche mit der Streifenzerlegung für die Sichtbarkeit aus verschiedenen Richtungen zusammen. Bei realen Ausgestaltungen ist die letztere Streifenunterteilung in der Regel wesentlich feiner, da dabei die Streifenbreiten typischerweise unterhalb der Auflösungsgrenze des bloßen Auges gewählt werden, während eine so feine Unterteilung für die Berücksichtigung der Krümmung der zylindrischen Fläche in der Regel nicht erforderlich ist.

Auch hier werden die Gitterparameter (a, ω) aus diesen Angaben unter Verwendung der Beziehung (1) für jeden der Unterbereiche berechnet. Die Ergebnisse der Berechnung für die erste Beugungsordnung m=1 sind in Tabelle 10 dargestellt.

**Tabelle 10**

| Motiv | Farbe | $\lambda$ [nm] | x [mm] | $\sigma'[°]$ | $\sigma_{eff}[°]$ | a[nm] | ω [°] |
|---|---|---|---|---|---|---|---|
| Hausdach | rot | 630 | -10 | 0 | -60.0 | 354.9 | -56.31 |
| Hausdach | rot | 630 | -5 | 0 | -30.0 | 483.6 | -40.89 |
| Hausdach | rot | 630 | 0 | 0 | 0.0 | 639.7 | 0.00 |
| Hausdach | rot | 630 | 5 | 0 | 30.0 | 483.6 | 40.89 |
| Hausdach | rot | 630 | 10 | 0 | 60.0 | 354.9 | 56.31 |
| Hauswand | gelb | 580 | -10 | 0 | -60.0 | 326.7 | -56.31 |
| Hauswand | gelb | 580 | -5 | 0 | -30.0 | 445.2 | -40.89 |
| Hauswand | gelb | 580 | 0 | 0 | 0.0 | 588.9 | 0.00 |
| Hauswand | gelb | 580 | 5 | 0 | 30.0 | 445.2 | 40.89 |
| Hauswand | gelb | 580 | 10 | 0 | 60.0 | 326.7 | 56.31 |
| Kreisring | grün | 550 | -12.5 | -15 | -90.0 | 279.2 | -60.00 |
| Kreisring | grün | 550 | -7.5 | -15 | -60.0 | 309.8 | -56.31 |
| Kreisring | grün | 550 | -2.5 | -15 | -30.0 | 422.2 | -40.89 |
| Kreisring | grün | 550 | 2.5 | -15 | 0.0 | 558.5 | 0.00 |
| Kreisring | grün | 550 | 7.5 | -15 | 30.0 | 422.2 | 40.89 |
| Kreisring | grün | 550 | 12.5 | -15 | 60.0 | 309.8 | 56.31 |

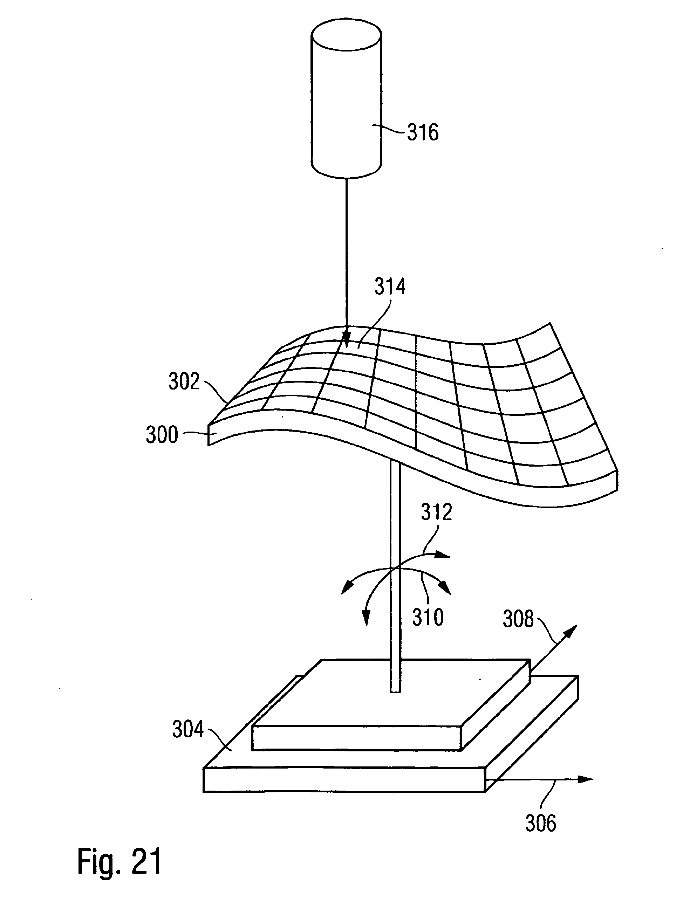

Um eine beliebig geformte Fläche mit einem Gitterbild zu belegen, kann man beispielsweise wie in Fig. 21 gezeigt vorgehen. Zunächst wird ein Objekt 300, das die gewünschte Oberflächenform besitzt, mit einem strahlungsempfindlichen Material 302, beispielsweise einem E-Beam-Resist oder Photoresist, beschichtet. Das beschichtete Objekt 300, 302 wird auf einem beweglichen Tisch 304 befestigt, der Bewegungen 306, 308 und Drehungen 310, 312 in alle Richtungen ermöglicht.

Nun bringt man nacheinander alle Unterbereiche 314 (oder wenn das-Gitterbild mehrere Bilder enthält: die Teilbereiche der Unterbereiche) der Oberfläche, die mit den zuvor berechneten Gittermustern belegt werden sollen, in den Fokus einer Elektronenstrahl-Lithographieanlage 316 oder einer Dot-Matrix-Laser-Interferenzvorrichtung. Das Objekt 300, 302 mit der gewünschten Oberflächenform wird während des Einschreibens des Gittermusters sukzessive so gedreht und bewegt, dass die Flächennormale des im Fokus befindlichen Unterbereichs 314 zur Strahlungsquelle 316, mit der das Gittermuster entsprechend der erfindungsgemäß berechneten Daten eingeschrieben wird, hinzeigt.

Man erhält so einen so genannten Resistmaster, von dem beispielsweise auf galvanischem Weg ein Prägestempel oder eine Gussform hergestellt wird, mit deren Hilfe das gekrümmte Gitterbild etwa in UV-härtendem oder thermoplastischem Kunststoff vervielfältigt werden kann.

Gemäß einem weiteren Aspekt kann das Gitterbild, das später auf einer beliebig gekrümmten Fläche aufgebracht werden soll, zunächst auf einer ebenen Fläche einbelichtet werden. Die ebene Fläche wird dann auf einen Gegenstand mit der gewünschten gekrümmten Form aufgebracht. Es versteht sich, dass dabei gegebenenfalls zusätzliche Verzerrungen durch die Verformung der ebenen Fläche beim Aufbringen auf den Gegenstand berücksichtigt werden müssen. Speziell bei zylindrischen Flächen treten derartige Verformungen nicht auf, so dass dort dieser Schritt entfallen kann.

Mit Bezug auf Fig. 14 kann dies beispielsweise dadurch geschehen, dass man, vorzugsweise rechnerisch mit einem Verformungsalgorithmus, wie in. Fig. 14 schematisch angedeutet, die gewünschte Fläche mit eingezeichneten Flächenelementen und eingezeichneter Gitterbelegung auf eine geeignete Ebene überträgt. Die auf der Ebene entstehende Struktur zeigt, wie die Gitterelemente in der Ebene geschrieben werden müssen, um nach der Verformung die gewünschten Eigenschaften zu zeigen.

Um zu ermitteln, wie die Gitter vor der Verformung geschrieben werden müssen, um nach der Verformung die gewünschte Wirkung zu erzielen, kann man in folgender Weise vorgehen:

Man zeichnet oder ritzt auf ein Probe-Objekt von derselben Art wie das zu verformende Objekt (z.B. Plastikfolie oder Nickelshim) ein Punktraster oder ein kariertes Strichraster, wie in Fig.14 angedeutet. Dann führt man die Verformung durch und beobachtet wie sich das Raster verzerrt. In den so verzerrten Rasterelementen auf der gekrümmten Fläche werden die zu den Positionen der Rasterelemente gehörigen berechneten Gitter eingetragen. Die Gitter der einzelnen verzerrten Rasterelemente (siehe Fig.14 rechts) werden nun vom verzerrten Raster auf das Raster vor der Verzerrung transformiert. Anschaulich bedeutet das: Die Randlinien der Quadrate in Fig.14 rechts unten werden in genauso viele Intervalle eingeteilt und mit Verbindungslinien versehen wie die entsprechenden Randlinien der Rauten in Fig.14 rechts oben durch das Gitter eingeteilt werden.

Wenn man die Gitterlinien vor der Verformung in der so ermittelten Weise schreibt, ergibt sich nach der Verformung die richtige Struktur: Wenn die Rauten Fig.14 oben Gitter mit gleichen Gitterabständen enthalten, braucht man in den Quadraten Fig.14 unten Gitter mit variierenden Abständen, die nach der Verformung gleichmäßig werden.

Man kann somit zunächst ebene und leicht in hoher Auflage zu vervielfältigende Folienhologramme erzeugen, die erst nach dem Verformen durch Aufbringen oder Transferieren auf eine entsprechend gekrümmte Fläche ihre holographische Wirkung zeigen.

**Patentansprüche**

1. Verfahren zum Erzeugen eines ebenen oder gekrümmten, ein materielles Beugungsgitter darstellendes Gitterbilds (230), das durch Beugung einfallende Lichtstrahlen zumindest ein vorgegebenes Bild (240) mit einzelnen, jeweils in einer einheitlichen Farbe erscheinenden Bildbereichen (242,244) rekonstruiert, mit den Verfahrensschritten:

   a) Vorgeben einer auf die Betrachtungsrichtung bezogenen Orientierung des Gitterbilds (230) im Raum, in welcher das vorgegebene Bild (240) sichtbar sein soll,
   b) Vorgeben einer Farbe für jeden Bildbereich (242, 244) des vorgegebenen Bilds (240), in der der jeweilige Bildbereich (242, 244) in der vorgegebenen Orientierung erscheinen soll,
   c) Festlegen von Gitterbildbereichen (232,234) des Gitterbilds (230), die jeweils einem Bildbereich (242,244) zugeordnet sind, wobei die Anordnung der Gitterbildbereiche (232, 234) innerhalb des Gitterbilds (230) im Wesentlichen der Anordnung der Bildbereiche (242,244) in dem vorgegebenen Bild (240) entspricht,
   d) Festlegen von einem oder mehreren Unterbereichen (236, 238) innerhalb jedes Gitterbildbereichs (232,234) mit einer von der Krümmung des Gitterbilds (230) abhängigen Form und Größe, und Bestimmen eines Gittermusters mit einer einheitlichen Gitterkonstante und einer einheitlichen Winkelorientierung für jeden der Unterbereiche (236, 238) aus der vorgegebenen Orientierung des Gitterbilds (230) und der vorgegebenen Farbe des zugeordneten Bildbereichs (242,244) unter Verwendung der Beziehung

$$\vec{n}(\vec{r}) \times \left( \vec{k}'(\vec{r}) - \vec{k}(\vec{r}) \right) = m\vec{g},$$

wobei $\vec{r}$ einen Bezugsaufpunkt in dem Unterbereich (236, 238) des Gitterbilds, $\vec{n}(\vec{r})$, $\vec{k}'(\vec{r})$ und $\vec{k}(\vec{r})$ den Norma-

lenvektor, den Betrachtungsvektor bzw. den Beleuchtungsvektor im Bezugsaufpunkt $\bar{r}$, m die Beugungsordnung und g den Gittervektor für den Unterbereich (236, 238) darstellen, und wobei zumindest für einen Betrachtungsvektor bzw. Beleuchtungsvektor $\vec{n}(\vec{r}) x \vec{k}(\vec{r})$ nicht parallel oder senkrecht zu $\vec{n}(\vec{r}) x \vec{k}'(\vec{r})$ liegt, und

e) Materielles Erzeugen eines Gitterbilds (230) rasterfrei in einem Substrat mit den in Schritt c) festgelegten Gitterbildbereichen (232,234), wobei die Gitterbildbereiche (232,234) mit einer Form und einer relativen Lage erzeugt werden, die im Wesentlichen der Form und der relativen Lage der zugeordneten Bildbereiche (242,244) entspricht, wobei jeder Unterbereich (236,238) der Gitterbüdbereiche (232,234) mit einem Gittermuster gefüllt wird, dessen einheitliche Gitterkonstante und einheitliche Winkelorientierung durch die für diesen Unterbereich (236,238) bestimmte Gitterkonstante und Winkelorientierung gegeben sind.

2. Verfahren nach Anspruch 1, **dadurch gekennzeichnet, dass** zur Bestimmung von Gitterkonstante und Winkelorientierung für jeden Unterbereich (236, 238) ein über die Fläche des Gitterbilds variierender Betrachtungsvektor $\vec{k}$ ($\vec{r}$) verwendet wird, dessen Richtung durch die Verbindungslinie zwischen dem Bezugsaufpunkt des jeweiligen Unterbereichs (236, 238) und einem Betrachtungspunkt gegeben ist.

3. Verfahren nach Anspruch 1 oder 2, **dadurch gekennzeichnet, dass** zur Bestimmung von Gitterkonstante und Winkelorientierung für jeden Unterbereich (236, 238) ein über die Fläche des Gitterbilds variierender Beleuchtungsvektor $\vec{k}(\vec{r})$ verwendet wird, dessen Richtung durch die Verbindungslinie zwischen einem Beleuchtungspunkt und dem Bezugsaufpunkt des jeweiligen Unterbereichs (236,238) gegeben ist.

4. Verfahren nach Anspruch 1, **dadurch gekennzeichnet, dass** zur Bestimmung von Gitterkonstante und Winkelorientierung für jeden Unterbereich (236, 238) ein über die Fläche jedes Gitterbildbereichs (232, 234) oder über die gesamte Gitterbildfläche konstanter Betrachtungsvektor $\vec{k}$ verwendet wird, dessen Richtung durch die Verbindungslinie zwischen einem für das Gitterbild (230) repräsentativen Bezugspunkt und einem Betrachtungspunkt gegeben ist.

5. Verfahren nach Anspruch 1 oder 4, **dadurch gekennzeichnet, dass** zur Bestimmung von Gitterkonstante und Winkelorientierung für jeden Unterbereich (236, 238) ein über die Fläche jedes Gitterbildbereichs (232, 234) oder über die gesamte Gitterbildfläche konstanter Beleuchtungsvektor $\vec{k}$ verwendet wird, dessen Richtung durch die Verbindungslinie zwischen einem Beleuchtungspunkt und einem für das Gitterbild (230) repräsentativen Bezugspunkt gegeben ist.

6. Verfahren nach wenigstens einem der Ansprüche 1 bis 5, **dadurch gekennzeichnet, dass** das Gitterbild (230) in unterschiedlichen Orientierungen mehrere Bilder zeigt, wobei die Schritte a) bis d) für jedes der mehreren Bilder durchgeführt werden.

7. Verfahren nach Anspruch 6, **dadurch gekennzeichnet, dass** Gitterbildbereiche (232, 234), die Bildbereichen (242, 244) verschiedener Bilder zugeordnet sind, einander zumindest teilweise überlappen.

8. Verfahren nach Anspruch 7, **dadurch gekennzeichnet, dass** die überlappenden Gitterbildbereiche (232, 234) ineinander verschachtelt werden.

9. Verfahren nach Anspruch 7 oder 8, **dadurch gekennzeichnet, dass** die überlappenden Gitterbildbereiche (232, 234) in schmale Streifen zerlegt werden und die schmalen Streifen der Gitterbildbereiche alternierend nebeneinander angeordnet werden.

10. Verfahren nach Anspruch 9, **dadurch gekennzeichnet, dass** die Breite der schmalen Streifen unterhalb der Auflösungsgrenze des bloßen Auges gewählt wird.

11. Verfahren nach Anspruch 9 oder 10, **dadurch gekennzeichnet, dass** die schmalen Streifen parallel zu einer Dreh- oder Kippachse des Gitterbildes (230) ausgerichtet werden.

12. Verfahren nach Anspruch 7 oder 8, **dadurch gekennzeichnet, dass** die Gitterbildbereiche (232, 234), die überlappenden Bildbereichen (242, 244) unterschiedlicher Bilder zugeordnet sind, in beliebig geformte kleine Teilbereiche zerlegt werden und die kleinen Teilbereiche der Gitterbildbereiche ineinander verschachtelt angeordnet werden.

13. Verfahren nach Anspruch 12, **dadurch gekennzeichnet, dass** die Gitterbildbereiche in geformte Teilbereiche, insbesondere in quadratische, rechteckige, runde, ovale, wabenförmige oder polygonal begrenzte Teilbereiche, zerlegt werden.

**14.** Verfahren nach Anspruch 13, **dadurch gekennzeichnet, dass** die Teilbereiche die Form von Motiven, Zeichen oder Ziffern haben.

**15.** Verfahren nach Anspruch 12 oder 13, **dadurch gekennzeichnet, dass** zumindest eine charakteristische Abmessung der kleinen Teilbereiche unterhalb der Auflösungsgrenze des bloßen Auges gewählt wird.

**16.** Verfahren nach Anspruch 7, **dadurch gekennzeichnet, dass** die überlappenden Gitterbildbereiche (232, 234) übereinander geschrieben werden.

**17.** Verfahren nach wenigstens einem der Ansprüche 6 bis 16, **dadurch gekennzeichnet, dass** das Gitterbild (230) in unterschiedlichen Orientierungen unterschiedliche Bilder zeigt, so dass für den Betrachter bei entsprechender Bewegung des Gitterbildes ein Wechselbild entsteht.

**18.** Verfahren nach wenigstens einem der Ansprüche 6 bis 16, **dadurch gekennzeichnet, dass** das Gitterbild (230) in unterschiedlichen Orientierungen ein Bildmotiv in unterschiedlichen Bewegungszuständen zeigt, so dass für den Betrachter bei entsprechender Bewegung des Gitterbildes ein Bewegungsbild entsteht.

**19.** Verfahren nach wenigstens einem der Ansprüche 6 bis 16, **dadurch gekennzeichnet, dass** das Gitterbild (230) in unterschiedlichen Orientierungen eine sich vergrößernde oder verkleinernde Umrisslinie eines Bildmotivs zeigt, so dass für den Betrachter bei entsprechender Bewegung des Gitterbildes ein Pumpbild entsteht.

**20.** Verfahren nach wenigstens einem der Ansprüche 6 bis 16, **dadurch gekennzeichnet, dass** das Gitterbild (230) zumindest zwei Ansichten eines Bildmotivs aus unterschiedlichen Betrachtungsrichtungen zeigt und die unterschiedlichen Orientierungen der Ansichten auf Grundlage eines vorgewählten Betrachtungsabstands für das Gitterbild so festgesetzt werden, dass für den Betrachter ein Stereobild des Bildmotivs entsteht.

**21.** Verfahren nach Anspruch 20, **dadurch gekennzeichnet, dass** das Gitterbild (230) mehrere Ansichten des Bildmotivs aus unterschiedlichen Betrachtungsrichtungen zeigt und die unterschiedlichen Orientierungen der Ansichten so festgelegt werden, dass für den Betrachter bei entsprechender Bewegung des Gitterbildes eine räumliche Ansicht des Bildmotivs entsteht.

**22.** Verfahren nach Anspruch 20 oder 21, **dadurch gekennzeichnet, dass** das Gitterbild (230) zumindest zwei Ansichten eines Kulissenmotivs zeigt, bei dem mehrere ebene Objekte kulissenartig hintereinander angeordnet sind.

**23.** Verfahren nach wenigstens einem der Ansprüche 6 bis 16, **dadurch gekennzeichnet, dass** das Gitterbild (230) zumindest in einem Teilbereich in unterschiedlichen Orientierungen das gleiche Bild zeigt, so dass für den Betrachter bei entsprechender Bewegung des Gitterbildes in diesem Teilbereich keine Änderung des Bildinhalts auftritt.

**24.** Verfahren nach Anspruch 23, **dadurch gekennzeichnet, dass** die Gitterbildbereiche (232, 234) in nebeneinander angeordnete schmale Streifen zerlegt werden, die den in unterschiedlichen Orientierungen erkennbaren Bildbereichen zugeordnet sind, und die bevorzugt so mit Gittermustern gefüllt werden, dass die Endpunkte des Gittermusters eines Streifens mit den Anfangspunkten des Gittermusters des benachbarten Streifens zusammenfallen.

**25.** Verfahren nach Anspruch 23 oder 24, **dadurch gekennzeichnet, dass** das Gitterbild (230) neben den bei entsprechender Bewegung sich nicht verändernden Bildbereichen variable Bildbereiche enthält, die beim dem Betrachter bei entsprechender Bewegung sich ändernde Bildeindrücke vermitteln.

**26.** Verfahren nach wenigstens einem der Ansprüche 1 bis 25, **dadurch gekennzeichnet, dass** unter Berücksichtigung der Orientierungen von Betrachtungsvektor $\vec{k}(\vec{r})$ und Beleuchtungsvektor $\overline{k}(\overline{r})$ in Schritt d) für jeden Unterbereich (236, 238) aus der festgelegten Orientierung des Gitterbilds ein Azimutwinkel relativ zu einer Referenzrichtung berechnet wird, der die Winkelorientierung des Gittermusters des zugeordneten Gitterbereichs (232, 234) beschreibt.

**27.** Verfahren nach wenigstens einem der Ansprüche 1 bis 26, **dadurch gekennzeichnet, dass** für jeden Bildbereich (242, 244) in Schritt b) eine durch eine Wellenlänge ($\lambda$) gegebene Spektralfarbe festgelegt wird und in Schritt d) unter Berücksichtigung der Winkelorientierung des Gittermusters und der Orientierungen von Betrachtungsvektor $\vec{k}(\vec{r})$ und Beleuchtungsvektor $\vec{k}(\vec{r})$ aus der Spektralfarbe ein Gitterabstand für das Gittermuster berechnet wird.

28. Verfahren nach wenigstens einem der Ansprüche 1 bis 26, **dadurch gekennzeichnet, dass** für einen Bildbereich (242, 244)

- in Schritt b) eine Echtfarbe als Mischung von Grundfarben festgelegt wird,
- in Schritt d) für jede der Grundfarben eine Gitterkonstante und eine Winkelorientierung für die Grundfarbe in diesem Bildbereich (242, 244) bestimmt wird, und
- in Schritt e) bei der Erzeugung des zugeordneten Gitterbildbereichs (232, 234) für jede Grundfarbe ein Farb-Unterbereich erzeugt wird, der mit einem Gittermuster gefüllt wird, dessen Gitterkonstante und Winkelorientierung durch die für den zugeordneten Bildbereich (242, 244) und die Grundfarbe bestimmte Gitterkonstante und Winkelorientierung gegeben sind.

29. Verfahren nach Anspruch 28, **dadurch gekennzeichnet, dass** als Grundfarben Spektralfarben, insbesondere Rot, Grün und Blau, gewählt werden.

30. Verfahren nach Anspruch 28 oder 29, **dadurch gekennzeichnet, dass** die Farb-Unterbereiche in Form von schmalen Streifen oder kleinen Rechtecken erzeugt werden.

31. Verfahren nach Anspruch 30, **dadurch gekennzeichnet, dass** die Streifen oder Rechtecke parallel zu den Gitterlinien des Gittermusters ausgerichtet werden.

32. Verfahren nach wenigstens einem der Ansprüche 1 bis 31, **dadurch gekennzeichnet, dass** ein ebenes Gitterbild erzeugt wird, wobei die Orientierung des Gitterbilds im Raum durch Festlegung eines seitlichen Kippwinkels für das Gitterbild festgelegt wird.

33. Verfahren nach Anspruch 32, **dadurch gekennzeichnet, dass** unter Berücksichtigung der Orientierungen eines vorgewählten Betrachtungsvektors und eines vorgewählten Beleuchtungsvektors in Schritt d) für jeden Bildbereich aus dem seitlichen Kippwinkel ein Azimutwinkel relativ zu einer Referenzrichtung berechnet wird, der die Winkelorientierung des Gittermusters des zugeordneten Gitterbereichs beschreibt.

34. Verfahren nach wenigstens einem der Ansprüche 1 bis 33, **dadurch gekennzeichnet, dass** ein zylindrisch gekrümmtes Gitterbild erzeugt wird, und die Orientierung des Gitterbilds im Raum durch Festlegung eines Drehwinkels um die Zylinderachse festgelegt wird.

35. Verfahren nach Anspruch 34, **dadurch gekennzeichnet, dass** in Schritt d) unter Berücksichtigung der Orientierungen eines vorgewählten Betrachtungsvektors und eines vorgewählten Beleuchtungsvektors, des Drehwinkels um die Zylinderachse und der Lage des jeweiligen Unterbereichs ein Azimutwinkel relativ zu einer Referenzrichtung berechnet wird, der die Winkelorientierung des Gittermusters des zugeordneten Gitterbereichs beschreibt.

36. Verfahren nach wenigstens einem der Ansprüche-1 bis 35, **dadurch gekennzeichnet, dass** ein gekrümmtes Gitterbild erzeugt wird und dass eines oder mehrere der vorgegebenen Bilder vor der Zuordnung der Bildbereiche zu Gitterbildbereichen so transformiert werden, dass sie bei der Betrachtung des gekrümmten Gitterbilds wie ebene Bilder erscheinen.

37. Verfahren nach Anspruch 36, **dadurch gekennzeichnet, dass** ein vorgegebenes Bild mit seinen Bildbereichen aus einer Ebene senkrecht zum Betrachtungsvektor auf die gekrümmte Fläche des Gitterbilds projiziert wird, so dass auf der gekrümmten Fläche transformierte Bildbereiche entstehen.

38. Verfahren nach wenigstens einem der Ansprüche 1 bis 37, **dadurch gekennzeichnet, dass** das Gitterbild mit einem ausgedehnten Gitterbildbereich erzeugt wird, der bei Betrachtung aus einem vorgewählten Betrachtungsabstand mit im Wesentlichen konstantem Farbeindruck erscheint, indem

- der ausgedehnte Gitterbildbereich in eine Mehrzahl von Teilbereichen zerlegt wird, für die in Schritt d) jeweils eine Gitterkonstante und eine Winkelorientierung bestimmt wird, wobei für die Bestimmung ein Betrachtungsvektor verwendet wird, der vom jeweiligen Teilbereich zum Auge des Betrachters zeigt, und
- in Schritt e) der Gitterbildbereich in dem Substrat mit diesen Teilbereichen erzeugt wird, und die Teilbereiche jeweils mit einem Gittermuster mit der in Schritt d) bestimmten Gitterkonstanten und eine Winkelorientierung gefüllt werden.

**39.** Verfahren nach Anspruch 38, **dadurch gekennzeichnet, dass** das Gitterbild mit einem parallel zu einer Drehachse oder Kipplinie ausgedehnten Gitterbildbereich mit konstantem Farbeindruck erzeugt wird, indem der ausgedehnte Gitterbildbereich entlang der Drehachse oder Kipplinie in eine Mehrzahl von Teilbereichen zerlegt wird, für die in Schritt d) jeweils eine Gitterkonstante und eine Winkelorientierung bestimmt wird, wobei für die Bestimmung ein Betrachtungsvektor verwendet wird, der vom jeweiligen Teilbereich zum Auge des Betrachters zeigt.

**40.** Verfahren nach wenigstens einem der Ansprüche 1 bis 39, **dadurch gekennzeichnet, dass** das Gitterbild mittels eines optischen oder eines Elektronenstrahl-Lithographieverfahrens einem strahlungsempfindlichen Material, insbesondere einer auf einem Substrat aufgebrachten Resistschicht, eingeschrieben wird, um in diesem eine Zustandsänderung herbeizuführen, vorzugsweise eine Reliefstruktur zu erzeugen.

**41.** Verfahren nach Anspruch 40, **dadurch gekennzeichnet, dass** nach der Herstellung einer Reliefstruktur eine Metallisierungsschicht auf das strahlungsempfindliche Material aufgebracht wird und dass davon eine galvanische Abformung erzeugt wird.

**42.** Verfahren nach Anspruch 41, **dadurch gekennzeichnet, dass** die Abformung oder eine weitere Abformung derselben als Prägestempel zum Prägen eines Gitterbildes in ein Substrat verwendet wird.

**43.** Verfahren nach wenigstens einem der Ansprüche 40 bis 42, **dadurch gekennzeichnet, dass** ein gekrümmtes Gitterbild erzeugt wird, indem das Gitterbild unter Berücksichtigung der sich bei der nachfolgenden Verformung ergebenden Verzerrungen einem ebenen Substrat eingeschrieben wird und das ebene Substrat dann in die gewünschte gekrümmte Form gebracht wird.

**44.** Verfahren nach wenigstens einem der Ansprüche 40 bis 42, **dadurch gekennzeichnet, dass** ein gekrümmtes Gitterbild erzeugt wird, indem ein Objekt mit der gewünschten gekrümmten Form mit dem strahlungsempfindlichen Material beschichtet wird und das Gitterbild unter Bewegung des Objekts und/ oder der Lithographievorrichtung sukzessive in das strahlungsempfindliche Material eingeschrieben wird.

**45.** Vorrichtung zum Erzeugen eines ebenen oder gekrümmten, ein materielles Beugungsgitter darstellendes Gitterbilds (230), das durch Beugung einfallender Lichtstrahlen zumindest ein vorgegebenes Bild (240) mit einzelnen, jeweils in einer einheitlichen Farbe erscheinenden Bildbereichen (242, 244) rekonstruiert, mit dem Verfahren nach einem der Ansprüche 1 bis 44, mit

- einer Einrichtung zum Festlegen von Gitterbildbereichen (232,234) des Gitterbilds (230), die jeweils einem Bildbereich (242, 244) zugeordnet sind, wobei die Anordnung der Gitterbildbereiche (232,234) innerhalb des Gitterbilds (230) im Wesentlichen der Anordnung der Bildbereiche (242, 244) in dem vorgegebenen Bild (240) entspricht,
- einer Einrichtung zum Festlegen von einem oder mehreren Unterbereichen (236,238) innerhalb jedes Gitterbildbereichs (232, 234) mit einer von der Krümmung des Gitterbilds (230) abhängigen Form und Größe, und zum Bestimmen eines Gittermusters mit einer einheitlichen Gitterkonstante und einer einheitlichen Winkelorientierung für jeden der Unterbereiche (236,238) aus der vorgegebenen Orientierung des Gitterbilds (230) und der vorgegebenen Farbe des zugeordneten Bildbereichs (242,244) unter Verwendung der Beziehung

$$\vec{n}(\vec{r}) \times \left( \vec{k}'(\vec{r}) - \vec{k}(\vec{r}) \right) = m\vec{g},$$

wobei $\vec{r}$ einen Bezugsaufpunkt in dem Unterbereich (236,238) des Gitterbilds, $\vec{n}(\vec{r})$, $\vec{k}'(\vec{r})$ und $\vec{k}(\vec{r})$ den Normalenvektor, den Betrachtungsvektor bzw. den Beleuchtungsvektor im Bezugsaufpunkt $\vec{r}$, m die Beugungsordnung und $\vec{g}$ den Gittervektor für den Unterbereich (236, 238) darstellen, und wobei zumindest für einen Betrachtungsvektor bzw. Beleuchtungsvektor $\vec{n}(\vec{r}) x \vec{k}(\vec{r})$ nicht parallel oder senkrecht zu $\vec{n}(\vec{r}) x \vec{k}'(\vec{r})$ liegt, und
- einer Einrichtung zum materiellen Erzeugen eines Gitterbilds (230) rasterfrei in einem Substrat mit den festgelegten Gitterbildbereichen (232, 234), wobei die Gitterbildbereiche (232,234) mit einer Form und einer relativen Lage erzeugt werden, die im Wesentlichen der Form und der relativen Lage der zugeordneten Bildbereiche (242, 244) entspricht, wobei jeder Unterbereich (236,238) der Gitterbildbereiche (232, 234) mit einem Gittermuster gefüllt wird, dessen einheitliche Gitterkonstante und einheitliche Winkelorientierung durch die für diesen Unterbereich (236, 238) bestimmte Gitterkonstante und Winkelorientierung gegeben sind.

46. Vorrichtung nach Anspruch 45, **dadurch gekennzeichnet, dass** die Einrichtung zum Erzeugen des Gitterbilds (230) in einem Substrat eine Elektronenstrahllithographievorrichtung umfasst.

47. Vorrichtung nach Anspruch 45 oder 46, **dadurch gekennzeichnet, dass** die Einrichtung zum Erzeugen des Gitterbilds (230) in einem Substrat eine drehbare und verschiebbare Haltevorrichtung für ein mit strahlungsempfindlichem Material beschichtetes Objekt umfasst, mit der sukzessive die Unterbereiche (236,238) des Gitterbilds (230) in entsprechende Flachenelemente des strahlungsempfindlichen Materials eingeschrieben werden können.

**Claims**

1. A method for producing a planar or curved grating image (230) that constitutes a material diffraction grating and that, through diffraction of incident light beams, reconstructs at least one specified image (240) having individual image regions (242, 244) that each appear in a uniform color, having the method steps:

   a) Specifying a viewing-direction-based orientation of the grating image (230) in space in which the specified image (240) is to be visible,
   b) Specifying, for each image region (242, 244) of the specified image (240), a color in which the respective image region (242, 244) is to appear in the specified orientation,
   c) Defining grating image regions (232, 234) of the grating image (230) that are each allocated to one image region (242, 244), the arrangement of the grating image regions (232, 234) within the grating image (230) substantially corresponding to the arrangement of the image regions (242, 244) in the specified image (240),
   d) Defining one or more sub-regions (236, 238) within each grating image region (232, 234) having a shape and size that depend on the curvature of the grating image (230), and determining, from the specified orientation of the grating image (230) and the specified color of the allocated image region (242, 244), a grating pattern having a uniform grating constant and a uniform angular orientation for each of the sub-regions (236, 238), using the relationship

$$\vec{n}(\vec{r}) \times \left( \vec{k}\,'(\vec{r}) - \vec{k}(\vec{r}) \right) = m\vec{g}\,,$$

   wherein $\vec{r}$ represents a reference test point in the sub-region (236, 238) of the grating image, $\vec{n}(\vec{r})$, $\vec{k}\,'(\vec{r})$ and $\vec{k}(\vec{r})$ the normal vector, the viewing vector and the illumination vector at the reference test point $\vec{r}$, m the diffraction order and $\vec{g}$ the grating vector for the sub-region (236, 238), and wherein, at least for one viewing vector or illumination vector, $\vec{n}(\vec{r}) x \vec{k}(\vec{r})$ is not parallel or perpendicular to $\vec{n}(\vec{r}) x \vec{k}\,'(\vec{r})$, and
   e) Materially producing a grating image (230) grid-free in a substrate having the grating image regions (232, 234) defined in step c), wherein the grating image regions (232, 234) are produced having a shape and a relative position that substantially corresponds to the shape and the relative position of the allocated image regions (242, 244), wherein each sub-region (236, 238) of the grating image regions (232, 234) is filled with a grating pattern whose uniform grating constant and uniform angular orientation are given by the grating constant and angular orientation determined for this sub-region (236, 238).

2. The method according to claim 1, **characterized in that**, to determine the grating constant and angular orientation for each sub-region (236, 238), a viewing vector $\vec{k}\,'(\vec{r})$ is used that varies across the surface of the grating image and whose direction is given by the connecting line between the reference test point of the respective sub-region (236, 238) and a viewing point.

3. The method according to claim 1 or 2, **characterized in that**, to determine the grating constant and angular orientation for each sub-region (236, 238), an illumination vector $\vec{k}(\vec{r})$ is used that varies across the surface of the grating image and whose direction is given by the connecting line between an illumination point and the reference test point of the respective sub-region (236, 238).

4. The method according to claim 1, **characterized in that**, to determine the grating constant and angular orientation for each sub-region (236, 238), a viewing vector $\vec{k}\,'$ is used that is constant across the surface of each grating image region (232, 234) or across the entire grating image surface and whose direction is given by the connecting line between a reference point that is representative of the grating image (230), and a viewing point.

5. The method according to claim 1 or 4, **characterized in that**, to determine the grating constant and angular orientation for each sub-region (236, 238), an illumination vector $\vec{k}$ is used that is constant across the surface of each grating image region (232, 234) or across the entire grating image surface and whose direction is given by the connecting line between an illumination point and a reference point that is representative of the grating image (230).

6. The method according to at least one of claims 1 to 5, **characterized in that**, in different orientations, the grating image (230) displays multiple images, steps a) to d) being carried out for each of the multiple images.

7. The method according to claim 6, **characterized in that** grating image regions (232, 234) that are allocated to image regions (242, 244) of different images at least partially overlap each other.

8. The method according to claim 7, **characterized in that** the overlapping grating image regions (232, 234) are nested within each other.

9. The method according to claim 7 or 8, **characterized in that** the overlapping grating image regions (232, 234) are broken down into narrow strips and the narrow strips of the grating image regions are arranged alternatingly next to each other.

10. The method according to claim 9, **characterized in that** the width of the narrow strips is chosen to be below the resolution limit of the naked eye.

11. The method according to claim 9 or 10, **characterized in that** the narrow strips are oriented parallel to a spin or tilt axis of the grating image (230).

12. The method according to claim 7 or 8, **characterized in that** the grating image regions (232, 234) that are allocated to overlapping image regions (242, 244) of different images are broken down into small fractional regions of any shape, and the small fractional regions of the grating image regions are arranged nested within each other.

13. The method according to claim 12, **characterized in that** the grating image regions are broken down into shaped fractional regions, especially into quadratic, rectangular, round, oval, honeycomb-shaped or polygonally delimited fractional regions.

14. The method according to claim 13, **characterized in that** the fractional regions have the shape of motifs, characters or numerals.

15. The method according to claim 12 or 13, **characterized in that** at least one characteristic measurement of the small fractional regions is chosen to be below the resolution limit of the naked eye.

16. The method according to claim 7, **characterized in that** the overlapping grating image regions (232, 234) are written over each other.

17. The method according to at least one of claims 6 to 16, **characterized in that**, in different orientations, the grating image (230) displays different images such that, upon appropriate movement of the grating image, an alternating image is created for the viewer.

18. The method according to at least one of claims 6 to 16, **characterized in that**, in different orientations, the grating image (230) displays an image motif in different states of motion such that, upon appropriate movement of the grating image, a motion image is created for the viewer.

19. The method according to at least one of claims 6 to 16, **characterized in that**, in different orientations, the grating image (230) displays a growing or shrinking contour line of an image motif such that, upon appropriate movement of the grating image, a pump image is created for the viewer.

20. The method according to at least one of claims 6 to 16, **characterized in that**, from different viewing directions, the grating image (230) displays at least two views of an image motif, and the different orientations of the views are defined based on a prechosen viewing distance for the grating image such that a stereo image of the image motif is created for the viewer.

**21.** The method according to claim 20, **characterized in that** the grating image (230) displays multiple views of the image motif from different viewing directions, and the different orientations of the views are defined such that, upon appropriate movement of the grating image, a spatial view of the image motif is created for the viewer.

**22.** The method according to claim 20 or 21, **characterized in that** the grating image (230) displays at least two views of a backdrop motif in which multiple planar objects are arranged backdrop-like one behind another.

**23.** The method according to at least one of claims 6 to 16, **characterized in that**, in different orientations, the grating image (230) displays the same image, at least in a fractional region, such that, upon appropriate movement of the grating image, no change of the image content appears for the viewer in this fractional region.

**24.** The method according to claim 23, **characterized in that** the grating image regions (232, 234) are broken down into narrow strips that are arranged next to each other and that are allocated to the image regions that are perceptible in different orientations, and that preferably are filled with grating patterns such that the end points of the grating pattern of one strip coincide with the beginning points of the grating pattern of the adjacent strip.

**25.** The method according to claim 23 or 24, **characterized in that** the grating image (230) includes, in addition to the image regions that do not change upon appropriate movement, variable image regions that, upon appropriate movement, convey to the viewer changing image impressions.

**26.** The method according to at least one of claims 1 to 25, **characterized in that**, in step d), taking into account the orientations of the viewing vector $\vec{k}'(\vec{r})$ and the illumination vector $\vec{k}(\vec{r})$, for each sub-region (236, 238), from the defined orientation of the grating image, an azimuth angle relative to a reference direction is calculated that describes the angular orientation of the grating pattern of the allocated grating region (232, 234).

**27.** The method according to at least one of claims 1 to 26, **characterized in that**, in step b), for each image region (242, 244), a spectral color given by a wavelength ($\lambda$) is defined, and in step d), taking into account the angular orientation of the grating pattern and the orientations of the viewing vector $\vec{k}'(\vec{r})$ and the illumination vector $\vec{k}(\vec{r})$, from the spectral color, a grating spacing is calculated for the grating pattern.

**28.** The method according to at least one of claims 1 to 26, **characterized in that**, for one image region (242, 244),

    - in step b), a true color is defined as a mixture of primary colors,
    - in step d), for each of the primary colors, a grating constant and an angular orientation is defined for the primary color in this image region (242, 244), and
    - in step e), upon the production of the allocated grating image region (232, 234), for each primary color, a color sub-region is produced that is filled with a grating pattern whose grating constant and angular orientation are given by the grating constant and angular orientation determined for the allocated image region (242, 244) and the primary color.

**29.** The method according to claim 28, **characterized in that** spectral colors, especially red, green and blue, are chosen as primary colors.

**30.** The method according to claim 28 or 29, **characterized in that** the color sub-regions are produced in the shape of narrow strips or small rectangles.

**31.** The method according to claim 30, **characterized in that** the strips or rectangles are oriented parallel to the grating lines of the grating pattern.

**32.** The method according to at least one of claims 1 to 31, **characterized in that** a planar grating image is produced, the orientation of the grating image in space being defined by defining a lateral tilt angle for the grating image.

**33.** The method according to claim 32, **characterized in that**, in step d), taking into account the orientations of a prechosen viewing vector and a prechosen illumination vector, for each image region, from the lateral tilt angle, an azimuth angle relative to a reference direction is calculated that describes the angular orientation of the grating pattern of the allocated grating region.

**34.** The method according to at least one of claims 1 to 33, **characterized in that** a cylindrically curved grating image is produced and the orientation of the grating image in space is defined by defining a spin angle about the cylinder axis.

**35.** The method according to claim 34, **characterized in that**, in step d), taking into account the orientations of a prechosen viewing vector and a prechosen illumination vector, the spin angle about the cylinder axis and the position of the respective sub-region, an azimuth angle relative to a reference direction is calculated that describes the angular orientation of the grating pattern of the allocated grating region.

**36.** The method according to at least one of claims 1 to 35, **characterized in that** a curved grating image is produced, and **in that**, prior to the allocation of the image regions to grating image regions, one or more of the specified images are so transformed that, upon viewing the curved grating image, they appear as planar images.

**37.** The method according to claim 36, **characterized in that** a specified image, with its image regions, is projected from a plane perpendicular to the viewing vector onto the curved surface of the grating image such that transformed image regions are created on the curved surface.

**38.** The method according to at least one of claims 1 to 37, **characterized in that** the grating image is produced having an expansive grating image region that, when viewed from a prechosen viewing distance, appears having a substantially constant color impression **in that**

- the expansive grating image region is broken down into a plurality of fractional regions, for each of which, in step d), a grating constant and an angular orientation is determined, a viewing vector that points from the respective fractional region to the eye of the viewer being used for the determination, and
- in step e), the grating image region in the substrate is produced having these fractional regions, and the fractional regions are each filled with a grating pattern having the grating constant determined in step d) and an angular orientation.

**39.** The method according to claim 38, **characterized in that** the grating image is produced having an expansive grating image region that is parallel to a spin axis or tilt line and that has a constant color impression, **in that** the expansive grating image region is broken down along the spin axis or tilt line into a plurality of fractional regions, for each of which, in step d), a grating constant and an angular orientation is determined, a viewing vector that points from the respective fractional region to the eye of the viewer being used for the determination.

**40.** The method according to at least one of claims 1 to 39, **characterized in that** the grating image is inscribed by means of an optical or an electron beam lithography method in a radiation-sensitive material, especially a resist layer applied on a substrate, to induce therein a state change, preferably to produce a relief structure.

**41.** The method according to claim 40, **characterized in that**, after the manufacture of a relief structure, a metallization layer is applied to the radiation-sensitive material, and **in that** a galvanic casting is produced therefrom.

**42.** The method according to claim 41, **characterized in that** the casting or a further casting of the same is used as an embossing stamp to emboss a grating image in a substrate.

**43.** The method according to at least one of claims 40 to 42, **characterized in that** a curved grating image is produced **in that** the grating image is inscribed in a planar substrate taking into account the distortions resulting in the subsequent deformation, and the planar substrate is then brought into the desired curved shape.

**44.** The method according to at least one of claims 40 to 42, **characterized in that** a curved grating image is produced **in that** an object having the desired curved shape is coated with the radiation-sensitive material and the grating image is successively inscribed in the radiation-sensitive material while moving the object and/ or the lithography device.

**45.** A device for producing, with the method according to one of claims 1 to 44, a planar or curved grating image (230) that constitutes a material diffraction grating and that, through diffraction of incident light beams, reconstructs at least one specified image (240) having individual image regions (242, 244) that each appear in a uniform color, having

- a facility for defining grating image regions (232, 234) of the grating image (230) that are each allocated to one image region (242, 244), the arrangement of the grating image regions (232, 234) within the grating image (230) substantially corresponding to the arrangement of the image regions (242, 244) in the specified image (240),
- a facility for defining one or more sub-regions (236, 238) within each grating image region (232, 234) having a shape and size that depends on the curvature of the grating image (230), and for determining, from the specified orientation of the grating image (230) and the specified color of the allocated image region (242, 244), a grating pattern having a uniform grating constant and a uniform angular orientation for each of the sub-regions (236, 238), using the relationship

$$\vec{n}(\vec{r}) \times \left( \vec{k}'(\vec{r}) - \vec{k}(\vec{r}) \right) = m\vec{g} \,,$$

wherein $\vec{r}$ represents a reference test point in the sub-region (236, 238) of the grating image, $\vec{n}(\vec{r})$, $\vec{k}'(\vec{r})$ and $\vec{k}(\vec{r})$ the normal vector, the viewing vector and the illumination vector at the reference test point $\vec{r}$, m the diffraction order and $\vec{g}$ the grating vector for the sub-region (236, 238), and wherein, at least for one viewing vector or illumination vector, $\vec{n}(\vec{r})x\vec{k}(\vec{r})$ is not parallel or perpendicular to $\vec{n}(\vec{r})x\vec{k}'(\vec{r})$, and

- a facility for materially producing a grating image (230) grid-free in a substrate having the defined grating image regions (232, 234), wherein the grating image regions (232, 234) are produced having a shape and a relative position that corresponds substantially to the shape and the relative position of the allocated image regions (242, 244), wherein each sub-region (236, 238) of the grating image regions (232, 234) is filled with a grating pattern whose uniform grating constant and uniform angular orientation are given by the grating constant and angular orientation determined for this sub-region (236, 238).

**46.** The device according to claim 45, **characterized in that** the facility for producing the grating image (230) in a substrate comprises an electron beam lithography device.

**47.** The device according to claim 45 or 46, **characterized in that** the facility for producing the grating image (230) in a substrate comprises a rotatable and movable holding device for an object coated with radiation-sensitive material, with which the sub-regions (236,238) of the grating image (230) can be inscribed successively in corresponding areal elements of the radiation-sensitive material.

**Revendications**

**1.** Procédé de production d'un motif à réseau diffractant plan ou courbe (230), représentant un réseau de diffraction matériel, qui par diffraction de rayons lumineux incidents reconstruit au moins une image prédéfinie (240), comportant des domaines d'image individuels (242, 244), chacun apparaissant en une couleur homogène, comportant les étapes suivantes :

a) prédéfinition d'une orientation, rapportée à la direction d'observation, du motif à réseau diffractant (230), dans l'espace dans lequel l'image prédéfinie (240) doit être visible,
b) prédéfinition d'une couleur pour chaque domaine d'image (242, 244) de l'image prédéfinie (240), dans laquelle chaque domaine d'image (242, 244) doit apparaître dans l'orientation prédéfinie,
c) définition de domaines de motif à réseau diffractant (232, 234) du motif à réseau diffractant (230), dont chacun est affecté à un domaine d'image (242, 244), l'arrangement des domaines de motif à réseau diffractant (232, 234) à l'intérieur du motif à réseau diffractant (230) correspondant pour l'essentiel à la disposition des domaines d'image (242, 244) dans l'image prédéfinie (240),
d) définition d'un ou plusieurs sous-domaines (236, 238) à l'intérieur de chaque domaine de motif à réseau diffractant (232, 234), présentant une forme et une taille dépendant de la courbure du motif à réseau diffractant (230), et définition d'un modèle de réseau ayant une constante de réseau homogène et une orientation angulaire homogène pour chacun des sous-domaines (236, 238), à partir de l'orientation prédéfinie du motif à réseau diffractant (230) et de la couleur prédéfinie du domaine d'image (242, 244) qui lui est affecté, par utilisation de la relation

$$\vec{n}(\vec{r}) \times (\vec{k}'(\vec{r}) - \vec{k}(\vec{r})) = m\vec{g}$$

où $\vec{r}$ est un point de référence dans le sous-domaine (236, 238) du motif à réseau diffractant, $\vec{n}(\vec{r})$, $\vec{k}'(\vec{r})$ et $\vec{k}(\vec{r})$ représentent respectivement le vecteur normal, le vecteur d'observation et le vecteur d'éclairement au point de référence $\vec{r}$, m est l'ordre de diffraction, et $\vec{g}$ est le vecteur de réseau pour le sous-domaine (236, 238), auquel cas, pour au moins un vecteur d'observation ou un vecteur d'éclairement, $\vec{n}(\vec{r})$ x $\vec{k}(\vec{r})$ n'est pas parallèle ou perpendiculaire à $\vec{n}(\vec{r})$ x $\vec{k}'(\vec{r})$, et

e) production matérielle d'un motif à réseau diffractant (230), sans trame dans un substrat, comportant les domaines de motif à réseau diffractant (232, 234) définis dans l'étape c), les domaines de motif à réseau diffractant (232, 234) étant produits avec une forme et selon une position relative qui pour l'essentiel correspondent à la forme et à la position relative des domaines d'image (242, 244) qui leur sont affectés, chaque sous-domaine (236, 238) des domaines de motif à réseau diffractant (232, 234) étant rempli d'un modèle de réseau, dont la constante de réseau homogène et l'orientation angulaire homogène sont définies par la constante de réseau et l'orientation angulaire déterminées pour ce sous-domaine (236, 238).

2. Procédé selon la revendication 1, **caractérisé en ce que**, pour déterminer la constante de réseau et l'orientation angulaire pour chaque sous-domaine (236, 238), on utilise un vecteur d'observation $\vec{k}'(\vec{r})$, qui varie sur la surface du motif à réseau diffractant, et dont la direction est définie par la ligne qui relie le point de référence du sous-domaine considéré (236, 238) et un point d'observation.

3. Procédé selon la revendication 1 ou 2, **caractérisé en ce que**, pour déterminer la constante de réseau et l'orientation angulaire pour chaque sous-domaine (236, 238), on utilise un vecteur d'éclairement $\vec{k}(\vec{r})$, qui varie sur la surface du motif à réseau diffractant, et dont la direction est définie par la ligne qui relie un point d'éclairement et un point de référence du sous-domaine correspondant (236, 238).

4. Procédé selon la revendication 1, **caractérisé en ce que**, pour déterminer la constante de réseau et l'orientation angulaire pour chaque sous-domaine (236, 238), on utilise un vecteur d'observation $\vec{k}$, constant sur la surface de chaque domaine de motif à réseau diffractant (232, 234) ou sur la totalité de la surface du motif à réseau diffractant, et dont la direction est définie par la ligne qui relie un point de référence représentatif du motif à réseau diffractant (230) et un point d'observation.

5. Procédé selon la revendication 1 ou 4, **caractérisé en ce que**, pour déterminer la constante de réseau et l'orientation angulaire pour chaque sous-domaine (236, 238), on utilise un vecteur d'éclairement $\vec{k}$, constant sur la surface de chaque domaine de motif à réseau diffractant (232, 234) ou sur la totalité de la surface du motif à réseau diffractant, et dont la direction est définie par la ligne qui relie un point d'éclairement et un point de référence représentatif du motif à réseau diffractant (230).

6. Procédé selon au moins l'une des revendications 1 à 5, **caractérisé en ce que** le motif à réseau diffractant (230) présente, dans des orientations différentes, plusieurs images, les étapes a) à d) étant mises en oeuvre pour chacune des plusieurs images.

7. Procédé selon la revendication 6, **caractérisé en ce que** les domaines de motif à réseau diffractant (232, 234) qui sont affectés à des domaines d'image (242, 244) de différentes images se chevauchent les uns les autres, au moins partiellement.

8. Procédé selon la revendication 7, **caractérisé en ce que** les domaines de motif à réseau diffractant (232, 234) en chevauchement sont emboîtés les uns dans les autres.

9. Procédé selon la revendication 7 ou 8, **caractérisé en ce que** les domaines de motif à réseau diffractant (232, 234) en chevauchement sont décomposés en bandes étroites, les bandes étroites des domaines du motif à réseau diffractant étant disposées en alternance les unes à côté des autres.

10. Procédé selon la revendication 9, **caractérisé en ce que** la largeur des bandes étroites est choisie en dessous du seuil de résolution de l'oeil nu.

11. Procédé selon la revendication 9 ou 10, **caractérisé en ce que** les bandes étroites sont orientées parallèlement à un axe de rotation ou de basculement du motif à réseau diffractant (230).

12. Procédé selon la revendication 7 ou 8, **caractérisé en ce que** les domaines du motif à réseau diffractant (232, 234) qui sont affectés à des domaines d'image (242, 244) en chevauchement appartenant à des images différentes, sont décomposés en petits domaines partiels, de forme quelconque, les petits domaines partiels des domaines du motif à réseau diffractant étant disposés en étant emboîtés les uns dans les autres.

13. Procédé selon la revendication 12, **caractérisé en ce que** les domaines du motif à réseau diffractant sont décomposés en des domaines partiels formés, en particulier en domaines partiels carrés, rectangulaires, circulaires, ovales, en nid d'abeille, ou délimités par un polygone.

14. Procédé selon la revendication 13, **caractérisé en ce que** les domaines partiels ont la forme de motifs, de signes ou de chiffres.

15. Procédé selon la revendication 12 ou 13, **caractérisé en ce qu'**au moins une dimension caractéristique des petits domaines partiels est choisie en dessous du seuil de résolution de l'oeil nu.

16. Procédé selon la revendication 7, **caractérisé en ce que** les domaines du motif à réseau diffractant (232, 234) en chevauchement sont inscrits les uns sur les autres.

17. Procédé selon au moins l'une des revendications 6 à 16, **caractérisé en ce que** le motif à réseau diffractant (230) présente, dans des orientations différentes, des images différentes, de sorte qu'il se crée pour l'observateur une image changeante quand le motif à réseau diffractant subit un mouvement approprié.

18. Procédé selon au moins l'une des revendications 6 à 16, **caractérisé en ce que** le motif à réseau diffractant (230) présente, dans des orientations différentes, un motif d'image dans différents états de mouvement, de telle sorte qu'il se forme pour l'observateur, en présence d'un mouvement correspondant du motif à réseau diffractant, une image de mouvement.

19. Procédé selon au moins l'une des revendications 6 à 16, **caractérisé en ce que** le motif à réseau diffractant (230) présente, dans des orientations différentes, un contour agrandi ou diminué d'un motif d'image, de telle sorte qu'il se crée pour l'observateur, pour un mouvement correspondant du motif à réseau diffractant, un sprite.

20. Procédé selon au moins l'une des revendications 6 à 16, **caractérisé en ce que** le motif à réseau diffractant (230) présente au moins deux vues d'un motif d'image provenant de directions d'observation différentes, et les orientations différentes des vues sont déterminées sur la base d'une distance d'observation présélectionnée pour le motif à réseau diffractant, de façon qu'il se crée pour l'observateur une image stéréo du motif d'image.

21. Procédé selon la revendication 20, **caractérisé en ce que** le motif à réseau diffractant (230) présente plusieurs vues du motif d'image provenant de directions d'observation différentes, et les orientations différentes des vues sont déterminées de telle sorte qu'il se crée, pour l'observateur, et pour un mouvement approprié du motif à réseau diffractant, une vue spatiale du motif d'image.

22. Procédé selon la revendication 20 ou 21, **caractérisé en ce que** le motif à réseau diffractant (230) présente au moins deux vues d'un motif de décor, dans lequel plusieurs objets plans sont disposés les uns derrière les autres, à la manière de décors.

23. Procédé selon au moins l'une des revendications 6 à 16, **caractérisé en ce que** le motif à réseau diffractant (230) présente, au moins dans un domaine partiel, pour des orientations différentes, la même image de telle sorte que, pour l'observateur, aucune modification du contenu de l'image ne se produise en présence d'un mouvement correspondant du motif à réseau diffractant dans ce domaine partiel.

24. Procédé selon la revendication 23, **caractérisé en ce que** les domaines du motif à réseau diffractant (232, 234) sont décomposés en bandes étroites disposées les unes à côté des autres, qui sont affectées aux domaines d'image reconnaissables dans différentes orientations, et qui de préférence sont remplies de modèles de réseau de telle sorte que les points terminaux du modèle de réseau d'une bande coïncident avec les points initiaux du modèle de réseau de la bande voisine.

25. Procédé selon la revendication 23 ou 24, **caractérisé en ce que** le motif à réseau diffractant (230) contient, à côté de domaines d'image qui ne varient pas en présence d'un mouvement approprié, des domaines d'image variables, qui donnent à l'observateur, pour un mouvement correspondant, des impressions d'image variables.

**26.** Procédé selon au moins l'une des revendications 1 à 25, **caractérisé en ce que**, en prenant en compte l'orientation du vecteur d'observation $\vec{k}'(\vec{r})$ et celui du vecteur d'éclairement $\vec{k}(\vec{r})$ dans l'étape d) pour chaque sous-domaine (236, 238), on calcule, à partir de l'orientation constatée du motif à réseau diffractant, un angle azimutal par rapport à une direction de référence, qui décrit l'orientation angulaire du modèle de réseau du domaine de réseau (232, 234) qui lui est affecté.

**27.** Procédé selon au moins l'une des revendications 1 à 26, **caractérisé en ce que**, pour chaque domaine d'image (242, 244), on définit dans l'étape b) une couleur spectrale, elle-même définie par une longueur d'onde ($\lambda$), et, dans l'étape d), et en prenant compte l'orientation angulaire du modèle de réseau et l'orientation du vecteur d'observation $\vec{k}'(\vec{r})$ et celui du vecteur d'éclairement $\vec{k}(\vec{r})$, on calcule à partir de la couleur spectrale un pas de réseau pour le modèle de réseau.

**28.** Procédé selon au moins l'une des revendications 1 à 26, **caractérisé en ce que**, pour un domaine d'image (242, 244)

  - dans l'étape b), on définit une couleur vraie, en tant que mélange de couleurs fondamentales,
  - dans l'étape d), pour chacune des couleurs fondamentales, on détermine une constante de réseau et une orientation angulaire pour la couleur fondamentale dans ce domaine d'image (242, 244), et
  - dans l'étape e), lors de la production du domaine de motif à réseau diffractant (232, 234) affecté, on produit pour chaque couleur fondamentale un sous-domaine de couleur, qui est rempli d'un modèle de réseau, dont la constante de réseau et l'orientation angulaire sont définis par la constante de réseau et l'orientation angulaire elles-mêmes définies par le domaine d'image affecté (242, 244) et la couleur fondamentale.

**29.** Procédé selon la revendication 28, **caractérisé en ce qu'**on choisit en tant que couleurs fondamentales les couleurs spectrales, en particulier le rouge, le vert et le bleu.

**30.** Procédé selon la revendication 28 ou 29, **caractérisé en ce que** les sous-domaines de couleurs sont produits sous forme de bandes étroites ou de petits rectangles.

**31.** Procédé selon la revendication 30, **caractérisé en ce que** les bandes ou les rectangles sont orientés parallèlement aux traits de réseau du modèle de réseau.

**32.** Procédé selon au moins l'une des revendications 1 à 31, **caractérisé en ce qu'**on produit un motif à réseau diffractant plan, l'orientation du motif à réseau diffractant étant dans l'espace défini par la définition d'un angle d'inclinaison latéral pour le motif à réseau diffractant.

**33.** Procédé selon la revendication 32, **caractérisé en ce que**, en prenant en compte l'orientation d'un vecteur d'observation présélectionné et d'un vecteur d'éclairement présélectionné, on calcule dans l'étape d) pour chaque domaine d'image, à partir de l'angle d'inclinaison latéral, un angle azimutal par rapport à une direction de référence, qui décrit l'orientation angulaire du modèle de réseau du modèle de réseau affecté.

**34.** Procédé selon au moins l'une des revendications 1 à 33, **caractérisé en ce qu'**on produit un motif à réseau diffractant à courbure cylindrique, et l'orientation du motif à réseau diffractant est défini dans l'espace par définition d'un angle de rotation autour de l'axe du cylindre.

**35.** Procédé selon la revendication 34, **caractérisé en ce que**, dans l'étape d), on calcule en prenant en compte l'orientation d'un vecteur d'observation présélectionné et celui d'un vecteur d'éclairement présélectionné, l'angle de rotation autour de l'axe du cylindre et la position du sous-domaine correspondant, un angle azimutal par rapport à une direction de référence, qui décrit l'orientation angulaire du modèle de réseau du domaine de réseau affecté.

**36.** Procédé selon au moins l'une des revendications 1 à 35, **caractérisé en ce qu'**on produit un motif à réseau diffractant courbe, et qu'une ou plusieurs des images prédéfinies sont, avant affectation des domaines d'image aux domaines du motif à réseau diffractant, transformées de façon qu'elles apparaissent comme des images planes lors de l'observation du motif à réseau diffractant courbe.

**37.** Procédé selon la revendication 36, **caractérisé en ce qu'**une image prédéfinie est, avec ses domaines d'image, projetée perpendiculairement au vecteur d'observation, à partir d'un plan sur la surface courbe du motif à réseau diffractant, de façon qu'apparaissent sur la surface courbe des domaines d'image transformés.

**38.** Procédé selon au moins l'une des revendications 1 à 37, **caractérisé en ce que** le motif à réseau diffractant est produit avec un domaine étendu de motif à réseau diffractant, domaine qui, quand on l'observe à partir d'une distance d'observation présélectionnée, apparaît avec une impression colorée pour l'essentiel constante, par le fait que

- le domaine étendu de motif à réseau diffractant est décomposé en un grand nombre de domaines partiels, pour chacun desquels on détermine dans l'étape d) une constante de réseau et une orientation angulaire, auquel cas on utilise pour la détermination un vecteur d'observation qui va du domaine partiel considéré à l'oeil de l'observateur, et
- dans l'étape e), le domaine du motif à réseau diffractant est produit dans le substrat avec ses domaines partiels, et chacun des domaines partiels est rempli d'un modèle de réseau, présentant les constantes de réseau déterminées dans l'étape d), et une orientation angulaire.

**39.** Procédé selon la revendication 38, **caractérisé en ce que** le motif à réseau diffractant est produit avec un domaine de motif à réseau diffractant s'étendant parallèlement à un axe de rotation ou à une ligne de basculement, avec une impression colorée constante, par le fait que le domaine du motif à réseau diffractant étendu est, le long de l'axe de rotation ou de la ligne de basculement, décomposé en un grand nombre de domaines partiels, pour chacun desquels on détermine dans l'étape d) une constante de réseau et une orientation angulaire, auquel cas on utilise pour la détermination un vecteur d'observation qui va du domaine partiel considéré à l'oeil de l'observateur.

**40.** Procédé selon au moins l'une des revendications 1 à 39, **caractérisé en ce que** le motif à réseau diffractant reçoit, à l'aide d'un procédé de lithographie optique ou à faisceau d'électrons, une inscription par un matériau sensible au rayonnement, en particulier une couche de réserve appliquée sur un substrat, pour provoquer dans cette couche un changement d'état, de préférence pour produire une structure en relief.

**41.** Procédé selon la revendication 40, **caractérisé en ce que**, après fabrication d'une structure en relief, on applique une couche de métallisation sur le matériau sensible au rayonnement, et **en ce qu'**on en produit un moulage galvanique.

**42.** Procédé selon la revendication 41, **caractérisé en ce qu'**on utilise le moulage ou un autre moulage de ce dernier, en tant que poinçon d'estampage, pour estamper un motif à réseau diffractant dans un substrat.

**43.** Procédé selon au moins l'une des revendications 40 à 42, **caractérisé en ce qu'**on produit un motif à réseau diffractant courbe, par le fait que l'on inscrit dans un substrat plan le motif à réseau diffractant, en tenant compte des distorsions apparaissant lors de la déformation subséquente, et que le substrat plan est ensuite mis sous la forme courbe souhaitée.

**44.** Procédé selon au moins l'une des revendications 40 à 42, **caractérisé en ce qu'**on forme un motif à réseau diffractant courbe, par le fait que l'on applique sur un objet ayant la forme courbe souhaitée un matériau sensible au rayonnement, et que l'on inscrit le motif à réseau diffractant dans le matériau sensible au rayonnement, en déplaçant l'objet et/ou le dispositif de lithographie.

**45.** Dispositif pour produire un motif à réseau diffractant (230) plan ou courbe, représentant un réseau de diffraction matériel, qui, par diffraction de rayons lumineux incidents, reconstruit au moins une image prédéfinie (240), comportant des domaines d'image (242, 244) individuels, chacun apparaissant en une image homogène, par le procédé selon l'une des revendications 1 à 44, et comportant

- un dispositif pour définir des domaines de motif à réseau diffractant (232, 234) du motif à réseau diffractant (230), dont chacun est affecté à un domaine d'image (242, 244), la disposition des domaines du motif à réseau diffractant (232, 234) à l'intérieur du motif à réseau diffractant (230) correspondant pour l'essentiel à la disposition des domaines d'image (242, 244) dans l'image prédéfinie (240),
- un dispositif pour définir un ou plusieurs sous- domaines (236, 238) à l'intérieur de chaque domaine de motif à réseau diffractant (232, 234), ayant une forme et une taille dépendant de la courbure du motif à réseau diffractant (230), et pour définir un modèle de réseau, ayant une constante de réseau homogène et une orientation angulaire homogène pour chacun des sous- domaines (236, 238), à partir de l'orientation prédéfinie du motif à réseau diffractant (230) et de la couleur prédéfinie du domaine d'image (242, 244) qui lui est affecté, par utilisation de la relation

$$\vec{n}(\vec{r}) \times (\vec{k}'(\vec{r}) - \vec{k}(\vec{r})) = m\,\vec{g}$$

où r est un point de référence dans le sous-domaine (236, 238) du motif à réseau diffractant, $\vec{n}(\vec{r})$, $\vec{k}'(\vec{r})$ et $\vec{k}(\vec{r})$ représentent respectivement le vecteur normal, le vecteur d'observation et le vecteur d'éclairement au point de référence $\vec{r}$, m est l'ordre de diffraction, et $\vec{g}$ est le vecteur de réseau pour le sous-domaine (236, 238), auquel cas, pour au moins un vecteur d'observation ou un vecteur d'éclairement, $\vec{n}(\vec{r}) \times \vec{k}(\vec{r})$ n'est pas parallèle ou perpendiculaire à $\vec{n}(\vec{r}) \times \vec{k}'(\vec{r})$, et

- un dispositif pour la production matérielle d'un motif à réseau diffractant (230), sans trame dans un substrat, comportant les domaines de motif à réseau diffractant (232, 234), les domaines de motif à réseau diffractant (232, 234) étant produits avec une forme et selon une position relative qui pour l'essentiel correspondent à la forme et à la position relative des domaines d'image (242, 244) qui leur sont affectés, chaque sous-domaine (236, 238) des domaines de motif à réseau diffractant (232, 234) étant rempli d'un modèle de réseau, dont la constante de réseau homogène et l'orientation angulaire homogène sont définies par la constante de réseau et l'orientation angulaire déterminées pour ce sous-domaine (236, 238).

46. Dispositif selon la revendication 45, **caractérisé en ce que** le dispositif destiné à produire le motif à réseau diffractant (230) comprend dans un substrat un dispositif de lithographie par faisceau d'électrons.

47. Dispositif selon la revendication 45 ou 46, **caractérisé en ce que** le dispositif destiné à produire le motif à réseau diffractant (230) comprend dans un substrat un dispositif, pouvant tourner et subir une translation, de maintien d'un objet revêtu d'un matériau sensible au rayonnement, à l'aide duquel il est possible d'inscrire successivement les sous-domaines (236, 238) du motif à réseau diffractant (230) dans des éléments plans correspondants du matériau sensible au rayonnement.

10

12

100

16

**Fig. 1**

14

12

20

18

**Fig. 2**

22

28
20
26
24

**Fig. 3**

36

30

32

34

a

ω

38

(a)

40

42

44

(b)

**Fig. 4**

$\vec{k}$

$\vec{g}$

$\vec{k'}$

$\vec{n}$

46

a

ω

38

**Fig. 5a**

Fig. 5b

Fig. 5c

Fig. 5d

Fig. 5e

Fig. 5f

Fig. 5g

Fig. 5h

Fig. 6

(a)

(b)

(c)

Fig. 7

(a)

(b)

Fig. 8

Fig. 9

(a)

(b)

(c)

Fig. 10

Fig. 11

$\vec{k'}$

142

5,7°   −30°   −5,7°

146

(a)

144   140

148

140

(b)

Fig. 12

Fig. 13

Fig. 14

(a)

210
212
214

(b)

210
212
214

$\vec{n}$

$\vec{k'}$

$\sigma'$

## Fig. 15

(a)

$\sigma_x$

R

220

210

$x$

216

218

$\sigma_x$

n

k'

(b)

$\sigma'$

$\sigma_{eff}$

210

216

$x$

$\sigma_{eff}$

n

k'

## Fig. 16

(a)

(b)

240

244

242

$\vec{k'}$

(c)

240

234

230

238

236

232

-15  -10  -5  0  5  10  15  →  x

# Fig. 17

250

252

Fig. 18

254

(a)

(x,y)

256

(x',y')

258

(b)

260

262

Fig. 19

(a)

272

278

276

(b)

274

280

(c)

288  290

270

286

292

-15  -10  -5  0  5  10  15

x

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0467601 B1
- EP 0105099 B1
- WO 9716772 A
- US 5969863 A
- EP 0423680 A2
- DE 10224115
- DE 10243413
- DE 10226115